# EUROPEAN PATENT APPLICATION

(11) **EP 4 716 133 A1**
(43) Date of publication of application: **25.03.2026**
(21) Application number: 25203923.5
(22) Date of filing: 23.09.2025
(51) Int. Cl.: H04L 5/00, H04L 5/14

(54) **SUBBAND FULL DUPLEX RESOURCE USAGE REPORTING**

(30) Priority: 24.09.2024 US 202463698208 P
(71) Applicant: Ofinno, LLC, Reston, VA 20190 (US); Kazmi, Muhammad Ali, Reston, Virginia 20190 (US); Xu, Jian, Reston, Virginia 20190 (US); Dinan, Esmael Hejazi, Reston, Virginia 20190 (US); Khoshkholgh Dashtaki, Mohammad Ghadir, Reston, VA 20190 (US); Yi, Yunjung, Reston, VA 20190 (US); Jeon, Hyoungsuk, Reston, Virginia 20190 (US); Cirik, Ali Cagatay, Reston, Virginia 20190 (US)
(72) Inventor: KAZMI, Muhammad Ali, Reston, Virginia 20190 (US); XU, Jian, Reston, Virginia 20190 (US); DINAN, Esmael Hejazi, Reston, Virginia 20190 (US); KHOSHKHOLGH DASHTAKI, Mohammad Ghadir, Reston, Virginia 20190 (US); YI, Yunjung, Reston, Virginia 20190 (US); JEON, Hyoungsuk, Reston, Virginia 20190 (US); CIRIK, Ali Cagatay, Reston, Virginia 20190 (US)
(74) Representative: Westphal, Mussgnug & Partner, Patentanwälte mbB

(57) **Abstract**

A method comprises receiving, by a first node from a second node, a request for a resource status of a cell of the first node. The cell operates in subband full duplex (SBFD). The method comprises determining a ratio or percentage of SBFD frequency resources used in the cell with respect to total frequency resources of the cell and transmitting, by the first node to the second node, a response comprising the ratio or percentage of the SBFD frequency resources used in the cell.

## Description

### CROSS-REFERENCE TO RELATED APPLICATIONS

This application claims the benefit of U.S. Provisional Application No. 63/698,208, filed September 24, 2024, which is hereby incorporated by reference in its entirety.

### BRIEF DESCRIPTION OF THE DRAWINGS

Examples of several of the various embodiments of the present disclosure are described herein with reference to the drawings.
FIG. 1A and FIG. 1B illustrate example mobile communication networks in which embodiments of the present disclosure may be implemented.
FIG. 2A and FIG. 2B respectively illustrate a New Radio (NR) user plane and control plane protocol stack.
FIG. 3 illustrates an example of services provided between protocol layers of the NR user plane protocol stack of FIG. 2A.
FIG. 4A illustrates an example downlink data flow through the NR user plane protocol stack of FIG. 2A.
FIG. 4B illustrates an example format of a MAC subheader in a MAC PDU.
FIG. 5A and FIG. 5B respectively illustrate a mapping between logical channels, transport channels, and physical channels for the downlink and uplink.
FIG. 6 is an example diagram showing RRC state transitions of a UE.
FIG. 7 illustrates an example configuration of an NR frame into which OFDM symbols are grouped.
FIG. 8 illustrates an example configuration of a slot in the time and frequency domain for an NR carrier.
FIG. 9 illustrates an example of bandwidth adaptation using three configured BWPs for an NR carrier.
FIG. 10A illustrates three carrier aggregation configurations with two component carriers.
FIG. 10B illustrates an example of how aggregated cells may be configured into one or more PUCCH groups.
FIG. 11A illustrates an example of an SS/PBCH block structure and location.
FIG. 11B illustrates an example of CSI-RSs that are mapped in the time and frequency domains.
FIG. 12A and FIG. 12B respectively illustrate examples of three downlink and uplink beam management procedures.
FIG. 13A, FIG. 13B, and FIG. 13C respectively illustrate a four-step contention-based random access procedure, a two-step contention-free random access procedure, and another two-step random access procedure.
FIG. 14A illustrates an example of CORESET configurations for a bandwidth part.
FIG. 14B illustrates an example of a CCE-to-REG mapping for DCI transmission on a CORESET and PDCCH processing.
FIG. 15 illustrates an example of a wireless device in communication with a base station.
FIG. 16A, FIG. 16B, FIG. 16C, and FIG. 16D illustrate example structures for uplink and downlink transmission.
FIG. 17 illustrates an aspect of an example embodiment according to the present disclosure.
FIG. 18 illustrates an aspect of an example embodiment according to the present disclosure.
FIG. 19 illustrates an aspect of an example embodiment according to the present disclosure.
FIG. 20 illustrates an aspect of an example embodiment according to the present disclosure.
FIG. 21 illustrates an aspect of an example embodiment according to the present disclosure.
FIG. 22 illustrates an aspect of an example embodiment according to the present disclosure.
FIG. 23 illustrates an aspect of an example embodiment according to the present disclosure.
FIG. 24 illustrates an aspect of an example embodiment according to the present disclosure.
FIG. 25 illustrates an aspect of an example embodiment according to the present disclosure.
FIG. 26 illustrates an aspect of an example embodiment according to the present disclosure.

### DETAILED DESCRIPTION

In the present disclosure, various embodiments are presented as examples of how the disclosed techniques may be implemented and/or how the disclosed techniques may be practiced in environments and scenarios. It will be apparent to persons skilled in the relevant art that various changes in form and detail can be made therein without departing from the scope. In fact, after reading the description, it will be apparent to one skilled in the relevant art how to implement alternative embodiments. The present embodiments should not be limited by any of the described exemplary embodiments. The embodiments of the present disclosure will be described with reference to the accompanying drawings. Limitations, features, and/or elements from the disclosed example embodiments may be combined to create further embodiments within the scope of the disclosure. Any figures which highlight the functionality and advantages, are presented for example purposes only. The disclosed architecture is sufficiently flexible and configurable, such that it may be utilized in ways other than that shown. For example, the actions listed in any flowchart may be re-ordered or only optionally used in some embodiments.

Embodiments may be configured to operate as needed. The disclosed mechanism may be performed when certain criteria are met, for example, in a wireless device, a base station, a radio environment, a network, a combination of the above, and/or the like. Example criteria may be based, at least in part, on for example, wireless device or network node configurations, traffic load, initial system set up, packet sizes, traffic characteristics, a combination of the above, and/or the like. When the one or more criteria are met, various example embodiments may be applied. Therefore, it may be possible to implement example embodiments that selectively implement disclosed protocols.

A base station may communicate with a mix of wireless devices. Wireless devices and/or base stations may support multiple technologies, and/or multiple releases of the same technology. Wireless devices may have some specific capability(ies) depending on wireless device category and/or capability(ies). When this disclosure refers to a base station communicating with a plurality of wireless devices, this disclosure may refer to a subset of the total wireless devices in a coverage area. This disclosure may refer to, for example, a plurality of wireless devices of a given LTE or 5G release with a given capability and in a given sector of the base station. The plurality of wireless devices in this disclosure may refer to a selected plurality of wireless devices, and/or a subset of total wireless devices in a coverage area which perform according to disclosed methods, and/or the like. There may be a plurality of base stations or a plurality of wireless devices in a coverage area that may not comply with the disclosed methods, for example, those wireless devices or base stations may perform based on older releases of LTE or 5G technology.

In this disclosure, "a" and "an" and similar phrases are to be interpreted as "at least one" and "one or more." Similarly, any term that ends with the suffix "(s)" is to be interpreted as "at least one" and "one or more." In this disclosure, the term "may" is to be interpreted as "may, for example." In other words, the term "may" is indicative that the phrase following the term "may" is an example of one of a multitude of suitable possibilities that may, or may not, be employed by one or more of the various embodiments. The terms "comprises" and "consists of", as used herein, enumerate one or more components of the element being described. The term "comprises" is interchangeable with "includes" and does not exclude unenumerated components from being included in the element being described. By contrast, "consists of" provides a complete enumeration of the one or more components of the element being described. The term "based on", as used herein, should be interpreted as "based at least in part on" rather than, for example, "based solely on". The term "and/or" as used herein represents any possible combination of enumerated elements. For example, "A, B, and/or C" may represent A; B; C; A and B; A and C; B and C; or A, B, and C.

If A and B are sets and every element of A is an element of B, A is called a subset of B. In this specification, only non-empty sets and subsets are considered. For example, possible subsets of B = {cell1, cell2} are: {cell1}, {cell2}, and {cell1, cell2}. The phrase "based on" (or equally "based at least on") is indicative that the phrase following the term "based on" is an example of one of a multitude of suitable possibilities that may, or may not, be employed to one or more of the various embodiments. The phrase "in response to" (or equally "in response at least to") is indicative that the phrase following the phrase "in response to" is an example of one of a multitude of suitable possibilities that may, or may not, be employed to one or more of the various embodiments. The phrase "depending on" (or equally "depending at least to") is indicative that the phrase following the phrase "depending on" is an example of one of a multitude of suitable possibilities that may, or may not, be employed to one or more of the various embodiments. The phrase "employing/using" (or equally "employing/using at least") is indicative that the phrase following the phrase "employing/using" is an example of one of a multitude of suitable possibilities that may, or may not, be employed to one or more of the various embodiments.

The term configured may relate to the capacity of a device whether the device is in an operational or non-operational state. Configured may refer to specific settings in a device that affect or implement the operational characteristics of the device whether the device is in an operational or non-operational state. In other words, the hardware, software, firmware, registers, memory values, and/or the like may be "configured" within a device, whether the device is in an operational or nonoperational state, to provide the device with specific characteristics. Terms such as "a control message to cause in a device" may mean that a control message has parameters that may be used to configure specific characteristics or may be used to implement certain actions in the device, whether the device is in an operational or non-operational state.

In this disclosure, parameters (or equally called, fields, or Information elements: IEs) may comprise one or more information objects, and an information object may comprise one or more other objects. For example, if parameter (IE) N comprises parameter (IE) M, and parameter (IE) M comprises parameter (IE) K, and parameter (IE) K comprises parameter (information element) J. Then, for example, N comprises K, and N comprises J. In an example embodiment, when one or more messages comprise a plurality of parameters, it implies that a parameter in the plurality of parameters is in at least one of the one or more messages, but does not have to be in each of the one or more messages.

Many features presented are described as being optional through the use of "may" or the use of parentheses. For the sake of brevity and legibility, the present disclosure does not explicitly recite each and every permutation that may be obtained by choosing from the set of optional features. The present disclosure is to be interpreted as explicitly disclosing all such permutations. For example, a system described as having three optional features may be embodied in seven ways, namely with just one of the three possible features, with any two of the three possible features or with three of the three possible features.

Many of the elements described in the disclosed embodiments may be implemented as modules. A module is defined here as an element that performs a defined function and has a defined interface to other elements. The modules described in this disclosure may be implemented in hardware, software in combination with hardware, firmware, wetware (e.g., hardware with a biological element) or a combination thereof, which may be behaviorally equivalent. For example, modules may be implemented as a software routine written in a computer language configured to be executed by a hardware machine (such as C, C++, Fortran, Java, Basic, MATLAB or the like) or a modeling/simulation program such as Simulink, Stateflow, GNU Octave, or LabVIEWMathScript. It may be possible to implement modules using physical hardware that incorporates discrete or programmable analog, digital and/or quantum hardware. Examples of programmable hardware comprise: computers, microcontrollers, microprocessors, application-specific integrated circuits (ASICs); field programmable gate arrays (FPGAs); and complex programmable logic devices (CPLDs). Computers, microcontrollers and microprocessors are programmed using languages such as assembly, C, C++ or the like. FPGAs, ASICs and CPLDs are often programmed using hardware description languages (HDL) such as VHSIC hardware description language (VHDL) or Verilog that configure connections between internal hardware modules with lesser functionality on a programmable device. The mentioned technologies are often used in combination to achieve the result of a functional module.

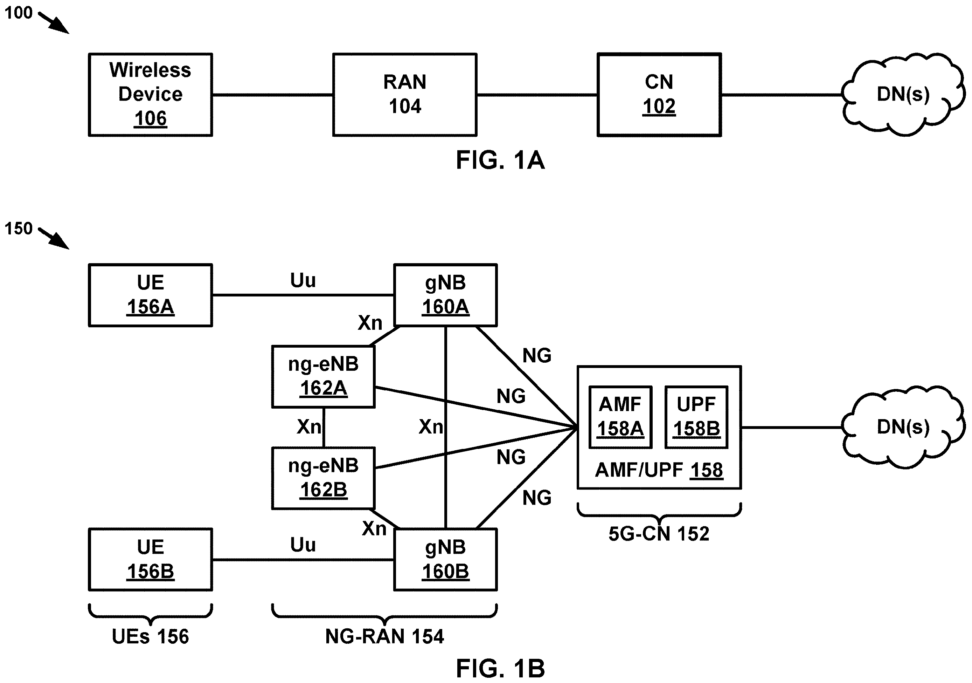

FIG. 1A illustrates an example of a mobile communication network 100 in which embodiments of the present disclosure may be implemented. The mobile communication network 100 may be, for example, a public land mobile network (PLMN) run by a network operator. As illustrated in FIG. 1A, the mobile communication network 100 includes a core network (CN) 102, a radio access network (RAN) 104, and a wireless device 106.

The CN 102 may provide the wireless device 106 with an interface to one or more data networks (DNs), such as public DNs (e.g., the Internet), private DNs, and/or intra-operator DNs. As part of the interface functionality, the CN 102 may set up end-to-end connections between the wireless device 106 and the one or more DNs, authenticate the wireless device 106, and provide charging functionality.

The RAN 104 may connect the CN 102 to the wireless device 106 through radio communications over an air interface. As part of the radio communications, the RAN 104 may provide scheduling, radio resource management, and retransmission protocols. The communication direction from the RAN 104 to the wireless device 106 over the air interface is known as the downlink and the communication direction from the wireless device 106 to the RAN 104 over the air interface is known as the uplink. Downlink transmissions may be separated from uplink transmissions using frequency division duplexing (FDD), time-division duplexing (TDD), and/or some combination of the two duplexing techniques.

The term wireless device may be used throughout this disclosure to refer to and encompass any mobile device or fixed (non-mobile) device for which wireless communication is needed or usable. For example, a wireless device may be a telephone, smart phone, tablet, computer, laptop, sensor, meter, wearable device, Internet of Things (IoT) device, vehicle roadside unit (RSU), relay node, automobile, and/or any combination thereof. The term wireless device encompasses other terminology, including user equipment (UE), user terminal (UT), access terminal (AT), mobile station, handset, wireless transmit and receive unit (WTRU), and/or wireless communication device.

The RAN 104 may include one or more base stations (not shown). The term base station may be used throughout this disclosure to refer to and encompass a Node B (associated with UMTS and/or 3G standards), an Evolved Node B (eNB, associated with E-UTRA and/or 4G standards), a remote radio head (RRH), a baseband processing unit coupled to one or more RRHs, a repeater node or relay node used to extend the coverage area of a donor node, a Next Generation Evolved Node B (ng-eNB), a Generation Node B (gNB, associated with NR and/or 5G standards), an access point (AP, associated with, for example, Wi-Fi or any other suitable wireless communication standard), and/or any combination thereof. A base station may comprise at least one gNB Central Unit (gNB-CU) and at least one a gNB Distributed Unit (gNB-DU).

A base station included in the RAN 104 may include one or more sets of antennas for communicating with the wireless device 106 over the air interface. For example, one or more of the base stations may include three sets of antennas to respectively control three cells (or sectors). The size of a cell may be determined by a range at which a receiver (e.g., a base station receiver) can successfully receive the transmissions from a transmitter (e.g., a wireless device transmitter) operating in the cell. Together, the cells of the base stations may provide radio coverage to the wireless device 106 over a wide geographic area to support wireless device mobility.

In addition to three-sector sites, other implementations of base stations are possible. For example, one or more of the base stations in the RAN 104 may be implemented as a sectored site with more or less than three sectors. One or more of the base stations in the RAN 104 may be implemented as an access point, as a baseband processing unit coupled to several remote radio heads (RRHs), and/or as a repeater or relay node used to extend the coverage area of a donor node. A baseband processing unit coupled to RRHs may be part of a centralized or cloud RAN architecture, where the baseband processing unit may be either centralized in a pool of baseband processing units or virtualized. A repeater node may amplify and rebroadcast a radio signal received from a donor node. A relay node may perform the same/similar functions as a repeater node but may decode the radio signal received from the donor node to remove noise before amplifying and rebroadcasting the radio signal.

The RAN 104 may be deployed as a homogenous network of macrocell base stations that have similar antenna patterns and similar high-level transmit powers. The RAN 104 may be deployed as a heterogeneous network. In heterogeneous networks, small cell base stations may be used to provide small coverage areas, for example, coverage areas that overlap with the comparatively larger coverage areas provided by macrocell base stations. The small coverage areas may be provided in areas with high data traffic (or so-called "hotspots") or in areas with weak macrocell coverage. Examples of small cell base stations include, in order of decreasing coverage area, microcell base stations, picocell base stations, and femtocell base stations or home base stations.

The Third-Generation Partnership Project (3GPP) was formed in 1998 to provide global standardization of specifications for mobile communication networks similar to the mobile communication network 100 in FIG. 1A. To date, 3GPP has produced specifications for three generations of mobile networks: a third generation (3G) network known as Universal Mobile Telecommunications System (UMTS), a fourth generation (4G) network known as Long-Term Evolution (LTE), and a fifth generation (5G) network known as 5G System (5GS). Embodiments of the present disclosure are described with reference to the RAN of a 3GPP 5G network, referred to as next-generation RAN (NG-RAN). Embodiments may be applicable to RANs of other mobile communication networks, such as the RAN 104 in FIG. 1A, the RANs of earlier 3G and 4G networks, and those of future networks yet to be specified (e.g., a 3GPP 6G network). NG-RAN implements 5G radio access technology known as New Radio (NR) and may be provisioned to implement 4G radio access technology or other radio access technologies, including non-3GPP radio access technologies.

FIG. 1B illustrates another example mobile communication network 150 in which embodiments of the present disclosure may be implemented. Mobile communication network 150 may be, for example, a PLMN run by a network operator. As illustrated in FIG. 1B, mobile communication network 150 includes a 5G core network (5G-CN) 152, an NG-RAN 154, and UEs 156A and 156B (collectively UEs 156). These components may be implemented and operate in the same or similar manner as corresponding components described with respect to FIG. 1A.

The 5G-CN 152 provides the UEs 156 with an interface to one or more DNs, such as public DNs (e.g., the Internet), private DNs, and/or intra-operator DNs. As part of the interface functionality, the 5G-CN 152 may set up end-to-end connections between the UEs 156 and the one or more DNs, authenticate the UEs 156, and provide charging functionality. Compared to the CN of a 3GPP 4G network, the basis of the 5G-CN 152 may be a service-based architecture. This means that the architecture of the nodes making up the 5G-CN 152 may be defined as network functions that offer services via interfaces to other network functions. The network functions of the 5G-CN 152 may be implemented in several ways, including as network elements on dedicated or shared hardware, as software instances running on dedicated or shared hardware, or as virtualized functions instantiated on a platform (e.g., a cloud-based platform).

As illustrated in FIG. 1B, the 5G-CN 152 includes an Access and Mobility Management Function (AMF) 158A and a User Plane Function (UPF) 158B, which are shown as one component AMF/UPF 158 in FIG. 1B for ease of illustration. The UPF 158B may serve as a gateway between the NG-RAN 154 and the one or more DNs. The UPF 158B may perform functions such as packet routing and forwarding, packet inspection and user plane policy rule enforcement, traffic usage reporting, uplink classification to support routing of traffic flows to the one or more DNs, quality of service (QoS) handling for the user plane (e.g., packet filtering, gating, uplink/downlink rate enforcement, and uplink traffic verification), downlink packet buffering, and downlink data notification triggering. The UPF 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The UEs 156 may be configured to receive services through a PDU session, which is a logical connection between a UE and a DN.

The AMF 158A may perform functions such as Non-Access Stratum (NAS) signaling termination, NAS signaling security, Access Stratum (AS) security control, inter-CN node signaling for mobility between 3GPP access networks, idle mode UE reachability (e.g., control and execution of paging retransmission), registration area management, intra-system and inter-system mobility support, access authentication, access authorization including checking of roaming rights, mobility management control (subscription and policies), network slicing support, and/or session management function (SMF) selection. NAS may refer to the functionality operating between a CN and a UE, and AS may refer to the functionality operating between the UE and a RAN.

The 5G-CN 152 may include one or more additional network functions that are not shown in FIG. 1B for the sake of clarity. For example, the 5G-CN 152 may include one or more of a Session Management Function (SMF), an NR Repository Function (NRF), a Policy Control Function (PCF), a Network Exposure Function (NEF), a Unified Data Management (UDM), an Application Function (AF), and/or an Authentication Server Function (AUSF).

The NG-RAN 154 may connect the 5G-CN 152 to the UEs 156 through radio communications over the air interface. The NG-RAN 154 may include one or more gNBs, illustrated as gNB 160A and gNB 160B (collectively gNBs 160) and/or one or more ng-eNBs, illustrated as ng-eNB 162A and ng-eNB 162B (collectively ng-eNBs 162). The gNBs 160 and ng-eNBs 162 may be more generically referred to as base stations. The gNBs 160 and ng-eNBs 162 may include one or more sets of antennas for communicating with the UEs 156 over an air interface. For example, one or more of the gNBs 160 and/or one or more of the ng-eNBs 162 may include three sets of antennas to respectively control three cells (or sectors). Together, the cells of the gNBs 160 and the ng-eNBs 162 may provide radio coverage to the UEs 156 over a wide geographic area to support UE mobility.

As shown in FIG. 1B, the gNBs 160 and/or the ng-eNBs 162 may be connected to the 5G-CN 152 by means of an NG interface and to other base stations by an Xn interface. The NG and Xn interfaces may be established using direct physical connections and/or indirect connections over an underlying transport network, such as an internet protocol (IP) transport network. The gNBs 160 and/or the ng-eNBs 162 may be connected to the UEs 156 by means of a Uu interface. For example, as illustrated in FIG. 1B, gNB 160A may be connected to the UE 156A by means of a Uu interface. The NG, Xn, and Uu interfaces are associated with a protocol stack. The protocol stacks associated with the interfaces may be used by the network elements in FIG. 1B to exchange data and signaling messages and may include two planes: a user plane and a control plane. The user plane may handle data of interest to a user. The control plane may handle signaling messages of interest to the network elements.

The gNBs 160 and/or the ng-eNBs 162 may be connected to one or more AMF/UPF functions of the 5G-CN 152, such as the AMF/UPF 158, by means of one or more NG interfaces. For example, the gNB 160A may be connected to the UPF 158B of the AMF/UPF 158 by means of an NG-User plane (NG-U) interface. The NG-U interface may provide delivery (e.g., non-guaranteed delivery) of user plane PDUs between the gNB 160A and the UPF 158B. The gNB 160A may be connected to the AMF 158A by means of an NG-Control plane (NG-C) interface. The NG-C interface may provide, for example, NG interface management, UE context management, UE mobility management, transport of NAS messages, paging, PDU session management, and configuration transfer and/or warning message transmission.

The gNBs 160 may provide NR user plane and control plane protocol terminations towards the UEs 156 over the Uu interface. For example, the gNB 160A may provide NR user plane and control plane protocol terminations toward the UE 156A over a Uu interface associated with a first protocol stack. The ng-eNBs 162 may provide Evolved UMTS Terrestrial Radio Access (E-UTRA) user plane and control plane protocol terminations towards the UEs 156 over a Uu interface, where E-UTRA refers to the 3GPP 4G radio-access technology. For example, the ng-eNB 162B may provide E-UTRA user plane and control plane protocol terminations towards the UE 156B over a Uu interface associated with a second protocol stack.

The 5G-CN 152 was described as being configured to handle NR and 4G radio accesses. It will be appreciated by one of ordinary skill in the art that it may be possible for NR to connect to a 4G core network in a mode known as "non-standalone operation." In non-standalone operation, a 4G core network is used to provide (or at least support) control-plane functionality (e.g., initial access, mobility, and paging). Although only one AMF/UPF 158 is shown in FIG. 1B, one gNB or ng-eNB may be connected to multiple AMF/UPF nodes to provide redundancy and/or to load share across the multiple AMF/UPF nodes.

As discussed, an interface (e.g., Uu, Xn, and NG interfaces) between the network elements in FIG. 1B may be associated with a protocol stack that the network elements use to exchange data and signaling messages. A protocol stack may include two planes: a user plane and a control plane. The user plane may handle data of interest to a user, and the control plane may handle signaling messages of interest to the network elements.

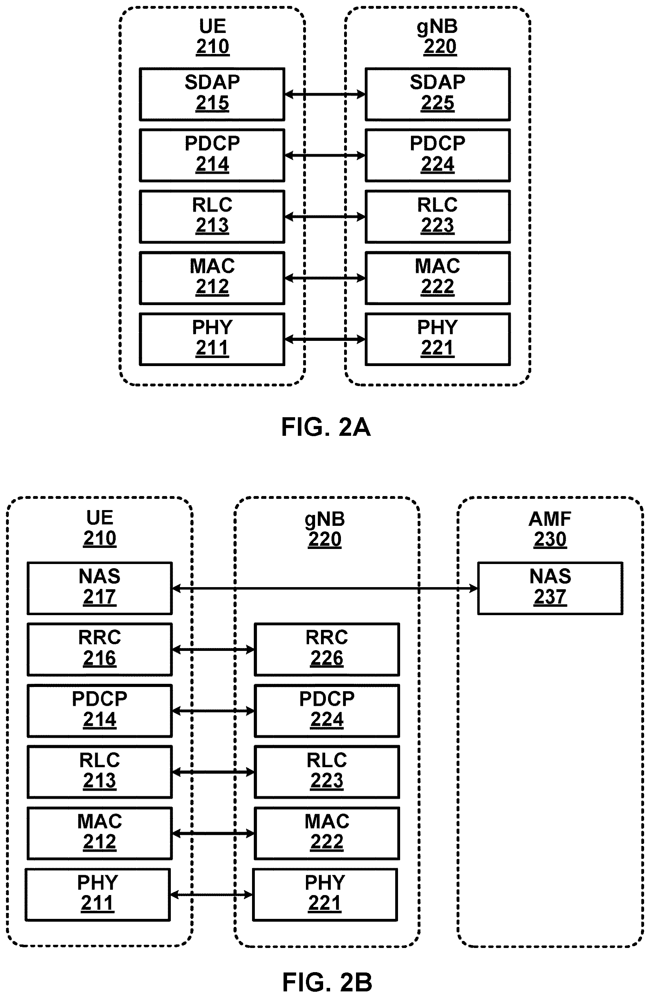

FIG. 2A and FIG. 2B respectively illustrate examples of NR user plane and NR control plane protocol stacks for the Uu interface that lies between a UE 210 and a gNB 220. The protocol stacks illustrated in FIG. 2A and FIG. 2B may be the same or similar to those used for the Uu interface between, for example, the UE 156A and the gNB 160A shown in FIG. 1B.

FIG. 2A illustrates a NR user plane protocol stack comprising five layers implemented in the UE 210 and the gNB 220. At the bottom of the protocol stack, physical layers (PHYs) 211 and 221 may provide transport services to the higher layers of the protocol stack and may correspond to layer 1 of the Open Systems Interconnection (OSI) model. The next four protocols above PHYs 211 and 221 comprise media access control layers (MACs) 212 and 222, radio link control layers (RLCs) 213 and 223, packet data convergence protocol layers (PDCPs) 214 and 224, and service data application protocol layers (SOAPs) 215 and 225. Together, these four protocols may make up layer 2, or the data link layer, of the OSI model.

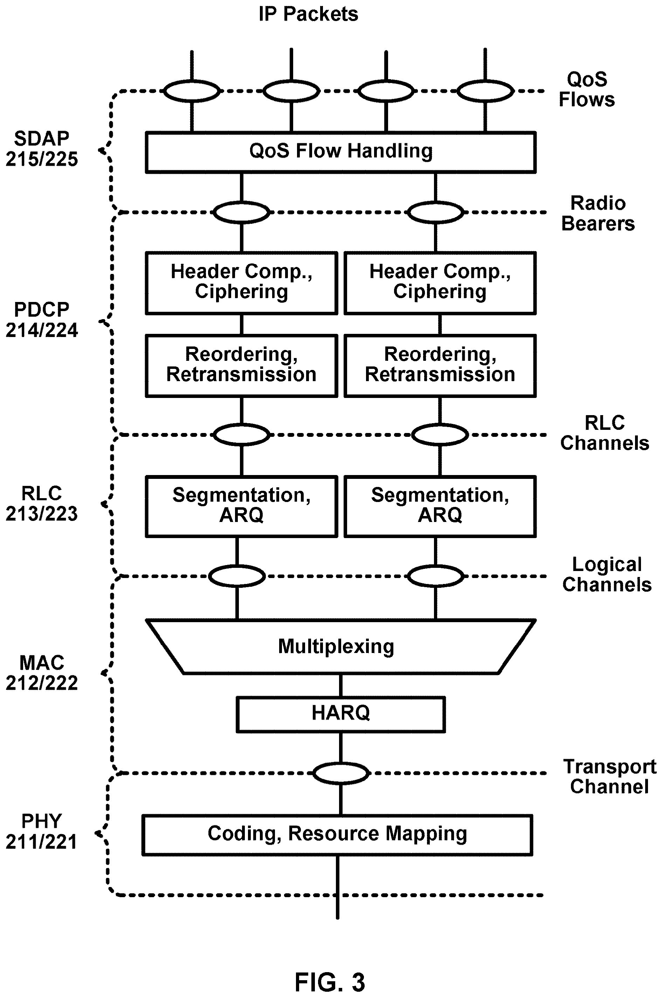

FIG. 3 illustrates an example of services provided between protocol layers of the NR user plane protocol stack. Starting from the top of FIG. 2A and FIG. 3, the SOAPs 215 and 225 may perform QoS flow handling. The UE 210 may receive services through a PDU session, which may be a logical connection between the UE 210 and a DN. The PDU session may have one or more QoS flows. A UPF of a CN (e.g., the UPF 158B) may map IP packets to the one or more QoS flows of the PDU session based on QoS requirements (e.g., in terms of delay, data rate, and/or error rate). The SOAPs 215 and 225 may perform mapping/de-mapping between the one or more QoS flows and one or more data radio bearers. The mapping/de-mapping between the QoS flows and the data radio bearers may be determined by the SDAP 225 at the gNB 220. The SDAP 215 at the UE 210 may be informed of the mapping between the QoS flows and the data radio bearers through reflective mapping or control signaling received from the gNB 220. For reflective mapping, the SDAP 225 at the gNB 220 may mark the downlink packets with a QoS flow indicator (QFI), which may be observed by the SDAP 215 at the UE 210 to determine the mapping/de-mapping between the QoS flows and the data radio bearers.

The PDCPs 214 and 224 may perform header compression/decompression to reduce the amount of data that needs to be transmitted over the air interface, ciphering/deciphering to prevent unauthorized decoding of data transmitted over the air interface, and integrity protection (to ensure control messages originate from intended sources. The PDCPs 214 and 224 may perform retransmissions of undelivered packets, in-sequence delivery and reordering of packets, and removal of packets received in duplicate due to, for example, an intra-gNB handover. The PDCPs 214 and 224 may perform packet duplication to improve the likelihood of the packet being received and, at the receiver, remove any duplicate packets. Packet duplication may be useful for services that require high reliability.

Although not shown in FIG. 3, PDCPs 214 and 224 may perform mapping/de-mapping between a split radio bearer and RLC channels in a dual connectivity scenario. Dual connectivity is a technique that allows a UE to connect to two cells or, more generally, two cell groups: a master cell group (MCG) and a secondary cell group (SCG). A split bearer is when a single radio bearer, such as one of the radio bearers provided by the PDCPs 214 and 224 as a service to the SOAPs 215 and 225, is handled by cell groups in dual connectivity. The PDCPs 214 and 224 may map/de-map the split radio bearer between RLC channels belonging to cell groups.

The RLCs 213 and 223 may perform segmentation, retransmission through Automatic Repeat Request (ARQ), and removal of duplicate data units received from MACs 212 and 222, respectively. The RLCs 213 and 223 may support three transmission modes: transparent mode (TM); unacknowledged mode (UM); and acknowledged mode (AM). Based on the transmission mode an RLC is operating, the RLC may perform one or more of the noted functions. The RLC configuration may be per logical channel with no dependency on numerologies and/or Transmission Time Interval (TTI) durations. As shown in FIG. 3, the RLCs 213 and 223 may provide RLC channels as a service to PDCPs 214 and 224, respectively.

The MACs 212 and 222 may perform multiplexing/demultiplexing of logical channels and/or mapping between logical channels and transport channels. The multiplexing/demultiplexing may include multiplexing/demultiplexing of data units, belonging to the one or more logical channels, into/from Transport Blocks (TBs) delivered to/from the PHYs 211 and 221. The MAC 222 may be configured to perform scheduling, scheduling information reporting, and priority handling between UEs by means of dynamic scheduling. Scheduling may be performed in the gNB 220 (at the MAC 222) for downlink and uplink. The MACs 212 and 222 may be configured to perform error correction through Hybrid Automatic Repeat Request (HARQ) (e.g., one HARQ entity per carrier in case of Carrier Aggregation (CA)), priority handling between logical channels of the UE 210 by means of logical channel prioritization, and/or padding. The MACs 212 and 222 may support one or more numerologies and/or transmission timings. In an example, mapping restrictions in a logical channel prioritization may control which numerology and/or transmission timing a logical channel may use. As shown in FIG. 3, the MACs 212 and 222 may provide logical channels as a service to the RLCs 213 and 223.

The PHYs 211 and 221 may perform mapping of transport channels to physical channels and digital and analog signal processing functions for sending and receiving information over the air interface. These digital and analog signal processing functions may include, for example, coding/decoding and modulation/demodulation. The PHYs 211 and 221 may perform multi-antenna mapping. As shown in FIG. 3, the PHYs 211 and 221 may provide one or more transport channels as a service to the MACs 212 and 222.

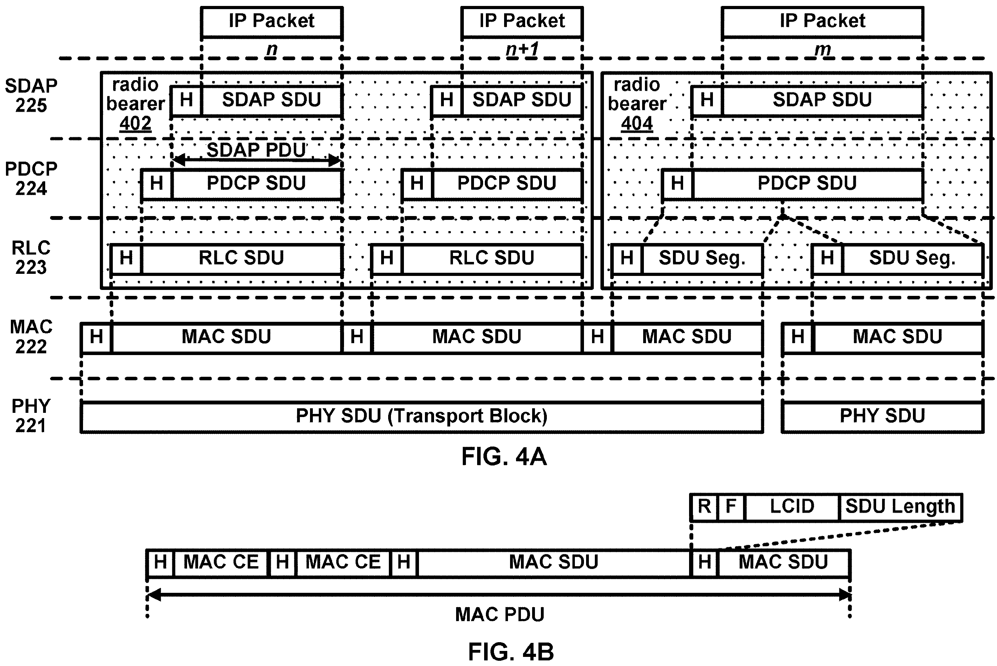

FIG. 4A illustrates an example downlink data flow through the NR user plane protocol stack. FIG. 4A illustrates a downlink data flow of three IP packets (*n, n+1,* and m) through the NR user plane protocol stack to generate two TBs at the gNB 220. An uplink data flow through the NR user plane protocol stack may be similar to the downlink data flow depicted in FIG. 4A.

The downlink data flow of FIG. 4A begins when SDAP 225 receives the three IP packets from one or more QoS flows and maps the three packets to radio bearers. In FIG. 4A, the SDAP 225 maps IP packets n and *n+1* to a first radio bearer 402 and maps IP packet m to a second radio bearer 404. An SDAP header (labeled with an "H" in FIG. 4A) is added to an IP packet. The data unit from/to a higher protocol layer is referred to as a service data unit (SDU) of the lower protocol layer and the data unit to/from a lower protocol layer is referred to as a protocol data unit (PDU) of the higher protocol layer. As shown in FIG. 4A, the data unit from the SDAP 225 is an SDU of lower protocol layer PDCP 224 and is a PDU of the SDAP 225.

The remaining protocol layers in FIG. 4A may perform their associated functionality (e.g., with respect to FIG. 3), add corresponding headers, and forward their respective outputs to the next lower layer. For example, the PDCP 224 may perform IP-header compression and ciphering and forward its output to the RLC 223. The RLC 223 may optionally perform segmentation (e.g., as shown for IP packet m in FIG. 4A) and forward its output to the MAC 222. The MAC 222 may multiplex a number of RLC PDUs and may attach a MAC subheader to an RLC PDU to form a transport block. In NR, the MAC subheaders may be distributed across the MAC PDU, as illustrated in FIG. 4A. In LTE, the MAC subheaders may be entirely located at the beginning of the MAC PDU. The NR MAC PDU structure may reduce processing time and associated latency because the MAC PDU subheaders may be computed before the full MAC PDU is assembled.

FIG. 4B illustrates an example format of a MAC subheader in a MAC PDU. The MAC subheader includes: an SDU length field for indicating the length (e.g., in bytes) of the MAC SDU to which the MAC subheader corresponds; a logical channel identifier (LCID) field for identifying the logical channel from which the MAC SDU originated to aid in the demultiplexing process; a flag (F) for indicating the size of the SDU length field; and a reserved bit (R) field for future use.

FIG. 4B further illustrates MAC control elements (CEs) inserted into the MAC PDU by a MAC, such as MAC 223 or MAC 222. For example, FIG. 4B illustrates two MAC CEs inserted into the MAC PDU. MAC CEs may be inserted at the beginning of a MAC PDU for downlink transmissions (as shown in FIG. 4B) and at the end of a MAC PDU for uplink transmissions. MAC CEs may be used for in-band control signaling. Example MAC CEs include: scheduling-related MAC CEs, such as buffer status reports and power headroom reports; activation/deactivation MAC CEs, such as those for activation/deactivation of PDCP duplication detection, channel state information (CSI) reporting, sounding reference signal (SRS) transmission, and prior configured components; discontinuous reception (DRX) related MAC CEs; timing advance MAC CEs; and random access related MAC CEs. A MAC CE may be preceded by a MAC subheader with a similar format as described for MAC SDUs and may be identified with a reserved value in the LCID field that indicates the type of control information included in the MAC CE.

Before describing the NR control plane protocol stack, logical channels, transport channels, and physical channels are first described as well as a mapping between the channel types. One or more of the channels may be used to carry out functions associated with the NR control plane protocol stack described later below.

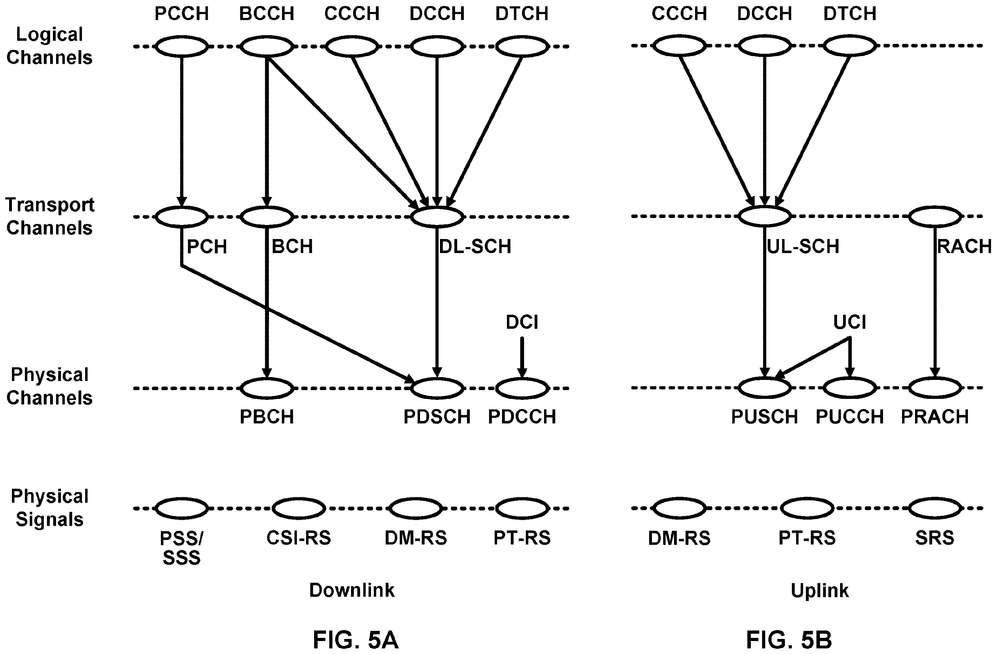

FIG. 5A and FIG. 5B illustrate, for downlink and uplink respectively, a mapping between logical channels, transport channels, and physical channels. Information is passed through channels between the RLC, the MAC, and the PHY of the NR protocol stack. A logical channel may be used between the RLC and the MAC and may be classified as a control channel that carries control and configuration information in the NR control plane or as a traffic channel that carries data in the NR user plane. A logical channel may be classified as a dedicated logical channel that is dedicated to a specific UE or as a common logical channel that may be used by more than one UE. A logical channel may also be defined by the type of information it carries. The set of logical channels defined by NR include, for example:
-- a paging control channel (PCCH) for carrying paging messages used to page a UE whose location is not known to the network on a cell level;
-- a broadcast control channel (BCCH) for carrying system information messages in the form of a master information block (MIB) and several system information blocks (SIBs), wherein the system information messages may be used by the UEs to obtain information about how a cell is configured and how to operate within the cell;
-- a common control channel (CCCH) for carrying control messages together with random access;
-- a dedicated control channel (DCCH) for carrying control messages to/from a specific the UE to configure the UE; and
-- a dedicated traffic channel (DTCH) for carrying user data to/from a specific the UE.

Transport channels are used between the MAC and PHY layers and may be defined by how the information they carry is transmitted over the air interface. The set of transport channels defined by NR include, for example:
-- a paging channel (PCH) for carrying paging messages that originated from the PCCH;
-- a broadcast channel (BCH) for carrying the MIB from the BCCH;
-- a downlink shared channel (DL-SCH) for carrying downlink data and signaling messages, including the SIBs from the BCCH;
-- an uplink shared channel (UL-SCH) for carrying uplink data and signaling messages; and
-- a random access channel (RACH) for allowing a UE to contact the network without any prior scheduling.

The PHY may use physical channels to pass information between processing levels of the PHY. A physical channel may have an associated set of time-frequency resources for carrying the information of one or more transport channels. The PHY may generate control information to support the low-level operation of the PHY and provide the control information to the lower levels of the PHY via physical control channels, known as L1/L2 control channels. The set of physical channels and physical control channels defined by NR include, for example:
-- a physical broadcast channel (PBCH) for carrying the MIB from the BCH;
-- a physical downlink shared channel (PDSCH) for carrying downlink data and signaling messages from the DL-SCH, as well as paging messages from the PCH;
-- a physical downlink control channel (PDCCH) for carrying downlink control information (DCI), which may include downlink scheduling commands, uplink scheduling grants, and uplink power control commands;
-- a physical uplink shared channel (PUSCH) for carrying uplink data and signaling messages from the UL-SCH and in some instances uplink control information (UCI) as described below;
-- a physical uplink control channel (PUCCH) for carrying UCI, which may include HARQ acknowledgments, channel quality indicators (CQI), pre-coding matrix indicators (PMI), rank indicators (RI), and scheduling requests (SR); and
-- a physical random access channel (PRACH) for random access.

Similar to the physical control channels, the physical layer generates physical signals to support the low-level operation of the physical layer. As shown in FIG. 5A and FIG. 5B, the physical layer signals defined by NR include: primary synchronization signals (PSS), secondary synchronization signals (SSS), channel state information reference signals (CSI-RS), demodulation reference signals (DMRS), sounding reference signals (SRS), and phase-tracking reference signals (PT-RS). These physical layer signals will be described in greater detail below.

FIG. 2B illustrates an example NR control plane protocol stack. As shown in FIG. 2B, the NR control plane protocol stack may use the same/similar first four protocol layers as the example NR user plane protocol stack. These four protocol layers include the PHYs 211 and 221, the MACs 212 and 222, the RLCs 213 and 223, and the PDCPs 214 and 224. Instead of having the SOAPs 215 and 225 at the top of the stack as in the NR user plane protocol stack, the NR control plane stack has radio resource controls (RRCs) 216 and 226 and NAS protocols 217 and 237 at the top of the NR control plane protocol stack.

The NAS protocols 217 and 237 may provide control plane functionality between the UE 210 and the AMF 230 (e.g., the AMF 158A) or, more generally, between the UE 210 and the CN. The NAS protocols 217 and 237 may provide control plane functionality between the UE 210 and the AMF 230 via signaling messages, referred to as NAS messages. There is no direct path between the UE 210 and the AMF 230 through which the NAS messages can be transported. The NAS messages may be transported using the AS of the Uu and NG interfaces. NAS protocols 217 and 237 may provide control plane functionality such as authentication, security, connection setup, mobility management, and session management.

The RRCs 216 and 226 may provide control plane functionality between the UE 210 and the gNB 220 or, more generally, between the UE 210 and the RAN. The RRCs 216 and 226 may provide control plane functionality between the UE 210 and the gNB 220 via signaling messages, referred to as RRC messages. RRC messages may be transmitted between the UE 210 and the RAN using signaling radio bearers and the same/similar PDCP, RLC, MAC, and PHY protocol layers. The MAC may multiplex control-plane and user-plane data into the same transport block (TB). The RRCs 216 and 226 may provide control plane functionality such as: broadcast of system information related to AS and NAS; paging initiated by the CN or the RAN; establishment, maintenance and release of an RRC connection between the UE 210 and the RAN; security functions including key management; establishment, configuration, maintenance and release of signaling radio bearers and data radio bearers; mobility functions; QoS management functions; the UE measurement reporting and control of the reporting; detection of and recovery from radio link failure (RLF); and/or NAS message transfer. As part of establishing an RRC connection, RRCs 216 and 226 may establish an RRC context, which may involve configuring parameters for communication between the UE 210 and the RAN.

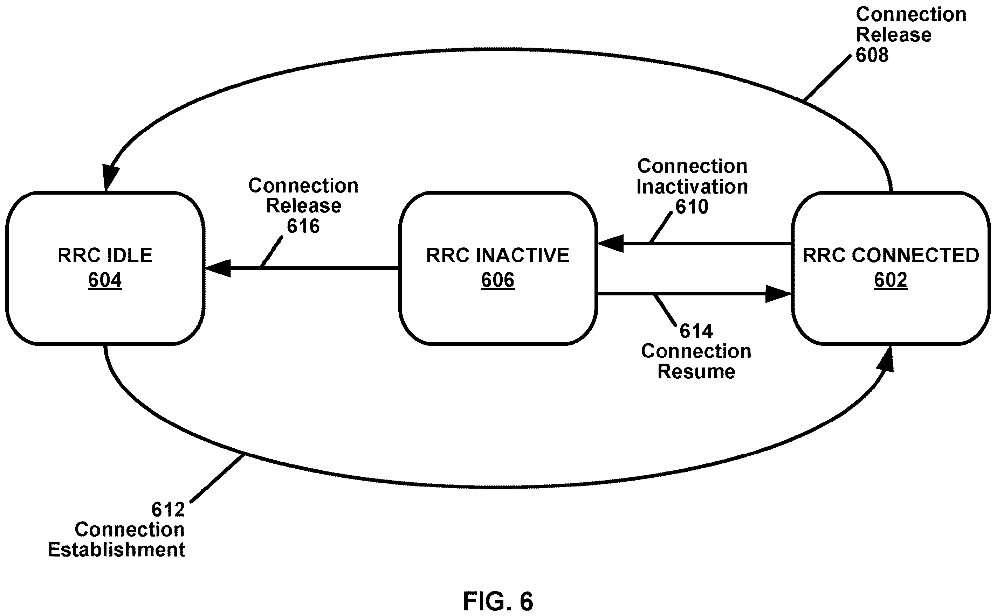

FIG. 6 is an example diagram showing RRC state transitions of a UE. The UE may be the same or similar to the wireless device 106 depicted in FIG. 1A, the UE 210 depicted in FIG. 2A and FIG. 2B, or any other wireless device described in the present disclosure. As illustrated in FIG. 6, a UE may be in at least one of three RRC states: RRC connected 602 (e.g., RRC_CONNECTED), RRC idle 604 (e.g., RRC_IDLE), and RRC inactive 606 (e.g., RRC_INACTIVE).

In RRC connected 602, the UE has an established RRC context and may have at least one RRC connection with a base station. The base station may be similar to one of the one or more base stations included in the RAN 104 depicted in FIG. 1A, one of the gNBs 160 or ng-eNBs 162 depicted in FIG. 1B, the gNB 220 depicted in FIG. 2A and FIG. 2B, or any other base station described in the present disclosure. The base station with which the UE is connected may have the RRC context for the UE. The RRC context, referred to as the UE context, may comprise parameters for communication between the UE and the base station. These parameters may include, for example: one or more AS contexts; one or more radio link configuration parameters; bearer configuration information (e.g., relating to a data radio bearer, signaling radio bearer, logical channel, QoS flow, and/or PDU session); security information; and/or PHY, MAC, RLC, PDCP, and/or SDAP layer configuration information. While in RRC connected 602, mobility of the UE may be managed by the RAN (e.g., the RAN 104 or the NG-RAN 154). The UE may measure the signal levels (e.g., reference signal levels) from a serving cell and neighboring cells and report these measurements to the base station currently serving the UE. The UE's serving base station may request a handover to a cell of one of the neighboring base stations based on the reported measurements. The RRC state may transition from RRC connected 602 to RRC idle 604 through a connection release procedure 608 or to RRC inactive 606 through a connection inactivation procedure 610.

In RRC idle 604, an RRC context may not be established for the UE. In RRC idle 604, the UE may not have an RRC connection with the base station. While in RRC idle 604, the UE may be in a sleep state for the majority of the time (e.g., to conserve battery power). The UE may wake up periodically (e.g., once in every discontinuous reception cycle) to monitor for paging messages from the RAN. Mobility of the UE may be managed by the UE through a procedure known as cell reselection. The RRC state may transition from RRC idle 604 to RRC connected 602 through a connection establishment procedure 612, which may involve a random access procedure as discussed in greater detail below.

In RRC inactive 606, the RRC context previously established is maintained in the UE and the base station. This allows for a fast transition to RRC connected 602 with reduced signaling overhead as compared to the transition from RRC idle 604 to RRC connected 602. While in RRC inactive 606, the UE may be in a sleep state and mobility of the UE may be managed by the UE through cell reselection. The RRC state may transition from RRC inactive 606 to RRC connected 602 through a connection resume procedure 614 or to RRC idle 604 though a connection release procedure 616 that may be the same as or similar to connection release procedure 608.

An RRC state may be associated with a mobility management mechanism. In RRC idle 604 and RRC inactive 606, mobility is managed by the UE through cell reselection. The purpose of mobility management in RRC idle 604 and RRC inactive 606 is to allow the network to be able to notify the UE of an event via a paging message without having to broadcast the paging message over the entire mobile communications network. The mobility management mechanism used in RRC idle 604 and RRC inactive 606 may allow the network to track the UE on a cell-group level so that the paging message may be broadcast over the cells of the cell group that the UE currently resides within instead of the entire mobile communication network. The mobility management mechanisms for RRC idle 604 and RRC inactive 606 track the UE on a cell-group level. They may do so using different granularities of grouping. For example, there may be three levels of cell-grouping granularity: individual cells; cells within a RAN area identified by a RAN area identifier (RAI); and cells within a group of RAN areas, referred to as a tracking area and identified by a tracking area identifier (TAI).

Tracking areas may be used to track the UE at the CN level. The CN (e.g., the CN 102 or the 5G-CN 152) may provide the UE with a list of TAls associated with a UE registration area. If the UE moves, through cell reselection, to a cell associated with a TAI not included in the list of TAls associated with the UE registration area, the UE may perform a registration update with the CN to allow the CN to update the UE's location and provide the UE with a new the UE registration area.

RAN areas may be used to track the UE at the RAN level. For a UE in RRC inactive 606 state, the UE may be assigned a RAN notification area. A RAN notification area may comprise one or more cell identities, a list of RAls, or a list of TAls. In an example, a base station may belong to one or more RAN notification areas. In an example, a cell may belong to one or more RAN notification areas. If the UE moves, through cell reselection, to a cell not included in the RAN notification area assigned to the UE, the UE may perform a notification area update with the RAN to update the UE's RAN notification area.

A base station storing an RRC context for a UE or a last serving base station of the UE may be referred to as an anchor base station. An anchor base station may maintain an RRC context for the UE at least during a period of time that the UE stays in a RAN notification area of the anchor base station and/or during a period of time that the UE stays in RRC inactive 606.

A gNB, such as gNBs 160 in FIG. 1B, may be split into two parts: a central unit (gNB-CU), and one or more distributed units (gNB-DU). A gNB-CU may be coupled to one or more gNB-DUs using an F1 interface. The gNB-CU may comprise the RRC, the PDCP, and the SDAP. A gNB-DU may comprise the RLC, the MAC, and the PHY.

In NR, the physical signals and physical channels (discussed with respect to FIG. 5A and FIG. 5B) may be mapped onto orthogonal frequency divisional multiplexing (OFDM) symbols. OFDM is a multicarrier communication scheme that transmits data over F orthogonal subcarriers (or tones). Before transmission, the data may be mapped to a series of complex symbols (e.g., M-quadrature amplitude modulation (M-QAM) or M-phase shift keying (M-PSK) symbols), referred to as source symbols, and divided into F parallel symbol streams. The F parallel symbol streams may be treated as though they are in the frequency domain and used as inputs to an Inverse Fast Fourier Transform (IFFT) block that transforms them into the time domain. The IFFT block may take in F source symbols at a time, one from each of the F parallel symbol streams, and use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. After some processing (e.g., addition of a cyclic prefix) and up-conversion, an OFDM symbol provided by the IFFT block may be transmitted over the air interface on a carrier frequency. The F parallel symbol streams may be mixed using an FFT block before being processed by the IFFT block. This operation produces Discrete Fourier Transform (DFT)-precoded OFDM symbols and may be used by UEs in the uplink to reduce the peak to average power ratio (PAPR). Inverse processing may be performed on the OFDM symbol at a receiver using an FFT block to recover the data mapped to the source symbols.

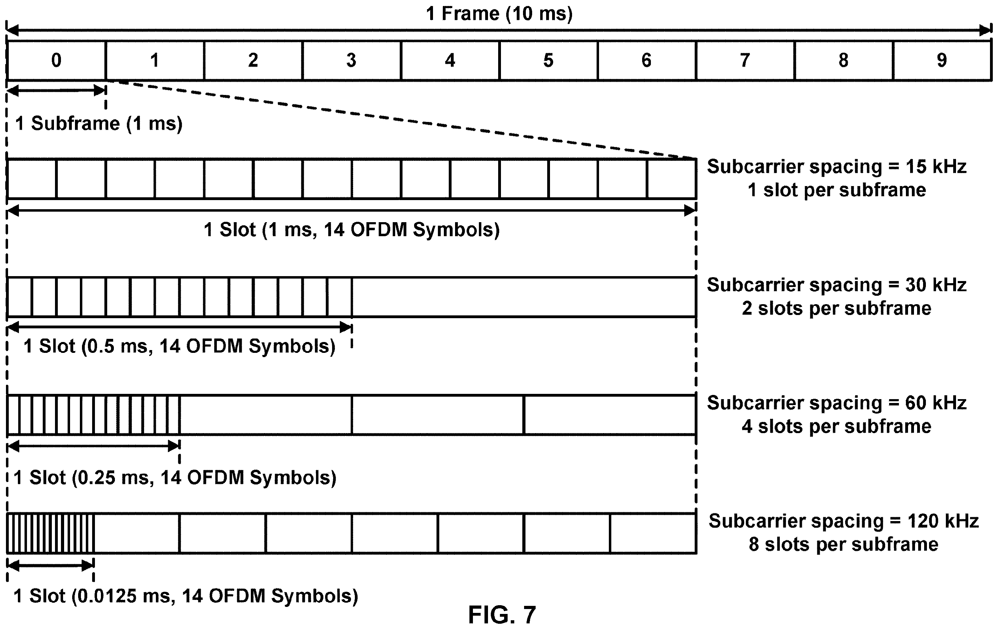

FIG. 7 illustrates an example configuration of an NR frame into which OFDM symbols are grouped. An NR frame may be identified by a system frame number (SFN). The SFN may repeat with a period of 1024 frames. As illustrated, one NR frame may be 10 milliseconds (ms) in duration and may include 10 subframes that are 1 ms in duration. A subframe may be divided into slots that include, for example, 14 OFDM symbols per slot.

The duration of a slot may depend on the numerology used for the OFDM symbols of the slot. In NR, a flexible numerology is supported to accommodate different cell deployments (e.g., cells with carrier frequencies below 1 GHz up to cells with carrier frequencies in the mm-wave range). A numerology may be defined in terms of subcarrier spacing and cyclic prefix duration. For a numerology in NR, subcarrier spacings may be scaled up by powers of two from a baseline subcarrier spacing of 15 kHz, and cyclic prefix durations may be scaled down by powers of two from a baseline cyclic prefix duration of 4.7 µs. For example, NR defines numerologies with the following subcarrier spacing/cyclic prefix duration combinations: 15 kHz/4.7 µs; 30 kHz/2.3 µs; 60 kHz/1.2 µs; 120 kHz/0.59 µs; and 240 kHz/0.29 µs.

A slot may have a fixed number of OFDM symbols (e.g., 14 OFDM symbols). A numerology with a higher subcarrier spacing has a shorter slot duration and, correspondingly, more slots per subframe. FIG. 7 illustrates this numerology-dependent slot duration and slots-per-subframe transmission structure (the numerology with a subcarrier spacing of 240 kHz is not shown in FIG. 7 for ease of illustration). A subframe in NR may be used as a numerology-independent time reference, while a slot may be used as the unit upon which uplink and downlink transmissions are scheduled. To support low latency, scheduling in NR may be decoupled from the slot duration and start at any OFDM symbol and last for as many symbols as needed for a transmission. These partial slot transmissions may be referred to as mini-slot or subslot transmissions.

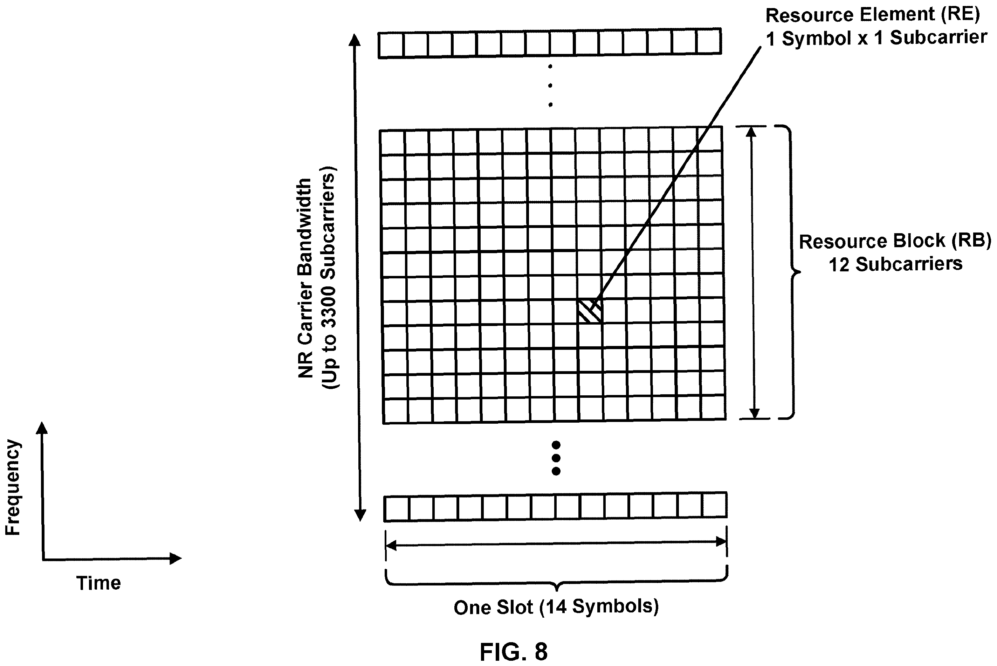

FIG. 8 illustrates an example configuration of a slot in the time and frequency domain for an NR carrier. The slot includes resource elements (REs) and resource blocks (RBs). An RE is the smallest physical resource in NR. An RE spans one OFDM symbol in the time domain by one subcarrier in the frequency domain as shown in FIG. 8. An RB spans twelve consecutive REs in the frequency domain as shown in FIG. 8. An NR carrier may be limited to a width of 275 RBs or 275×12 = 3300 subcarriers. Such a limitation, if used, may limit the NR carrier to 50, 100, 200, and 400 MHz for subcarrier spacings of 15, 30, 60, and 120 kHz, respectively, where the 400 MHz bandwidth may be set based on a 400 MHz per carrier bandwidth limit.

FIG. 8 illustrates a single numerology being used across the entire bandwidth of the NR carrier. In other example configurations, multiple numerologies may be supported on the same carrier.

NR may support wide carrier bandwidths (e.g., up to 400 MHz for a subcarrier spacing of 120 kHz). Not all UEs may be able to receive the full carrier bandwidth (e.g., due to hardware limitations). Also, receiving the full carrier bandwidth may be prohibitive in terms of UE power consumption. In an example, to reduce power consumption and/or for other purposes, a UE may adapt the size of the UE's receive bandwidth based on the amount of traffic the UE is scheduled to receive. This is referred to as bandwidth adaptation.

NR defines bandwidth parts (BWPs) to support UEs not capable of receiving the full carrier bandwidth and to support bandwidth adaptation. In an example, a BWP may be defined by a subset of contiguous RBs on a carrier. A UE may be configured (e.g., via RRC layer) with one or more downlink BWPs and one or more uplink BWPs per serving cell (e.g., up to four downlink BWPs and up to four uplink BWPs per serving cell). At a given time, one or more of the configured BWPs for a serving cell may be active. These one or more BWPs may be referred to as active BWPs of the serving cell. When a serving cell is configured with a secondary uplink carrier, the serving cell may have one or more first active BWPs in the uplink carrier and one or more second active BWPs in the secondary uplink carrier.

For unpaired spectra, a downlink BWP from a set of configured downlink BWPs may be linked with an uplink BWP from a set of configured uplink BWPs if a downlink BWP index of the downlink BWP and an uplink BWP index of the uplink BWP are the same. For unpaired spectra, a UE may expect that a center frequency for a downlink BWP is the same as a center frequency for an uplink BWP.

For a downlink BWP in a set of configured downlink BWPs on a primary cell (PCell), a base station may configure a UE with one or more control resource sets (CORESETs) for at least one search space. A search space is a set of locations in the time and frequency domains where the UE may find control information. The search space may be a UE-specific search space or a common search space (potentially usable by a plurality of UEs). For example, a base station may configure a UE with a common search space, on a PCell or on a primary secondary cell (PSCell), in an active downlink BWP.

For an uplink BWP in a set of configured uplink BWPs, a BS may configure a UE with one or more resource sets for one or more PUCCH transmissions. A UE may receive downlink receptions (e.g., PDCCH or PDSCH) in a downlink BWP according to a configured numerology (e.g., subcarrier spacing and cyclic prefix duration) for the downlink BWP. The UE may transmit uplink transmissions (e.g., PUCCH or PUSCH) in an uplink BWP according to a configured numerology (e.g., subcarrier spacing and cyclic prefix length for the uplink BWP).

One or more BWP indicator fields may be provided in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a UE with a default downlink BWP within a set of configured downlink BWPs associated with a PCell. If the base station does not provide the default downlink BWP to the UE, the default downlink BWP may be an initial active downlink BWP. The UE may determine which BWP is the initial active downlink BWP based on a CORESET configuration obtained using the PBCH.

A base station may configure a UE with a BWP inactivity timer value for a PCell. The UE may start or restart a BWP inactivity timer at any appropriate time. For example, the UE may start or restart the BWP inactivity timer (a) when the UE detects a DCI indicating an active downlink BWP other than a default downlink BWP for a paired spectra operation; or (b) when a UE detects a DCI indicating an active downlink BWP or active uplink BWP other than a default downlink BWP or uplink BWP for an unpaired spectra operation. If the UE does not detect DCI during an interval of time (e.g., 1 ms or 0.5 ms), the UE may run the BWP inactivity timer toward expiration (for example, increment from zero to the BWP inactivity timer value, or decrement from the BWP inactivity timer value to zero). When the BWP inactivity timer expires, the UE may switch from the active downlink BWP to the default downlink BWP.

In an example, a base station may semi-statically configure a UE with one or more BWPs. A UE may switch an active BWP from a first BWP to a second BWP in response to receiving a DCI indicating the second BWP as an active BWP and/or in response to an expiry of the BWP inactivity timer (e.g., if the second BWP is the default BWP).

Downlink and uplink BWP switching (where BWP switching refers to switching from a currently active BWP to a not currently active BWP) may be performed independently in paired spectra. In unpaired spectra, downlink and uplink BWP switching may be performed simultaneously. Switching between configured BWPs may occur based on RRC signaling, DCI, expiration of a BWP inactivity timer, and/or an initiation of random access.

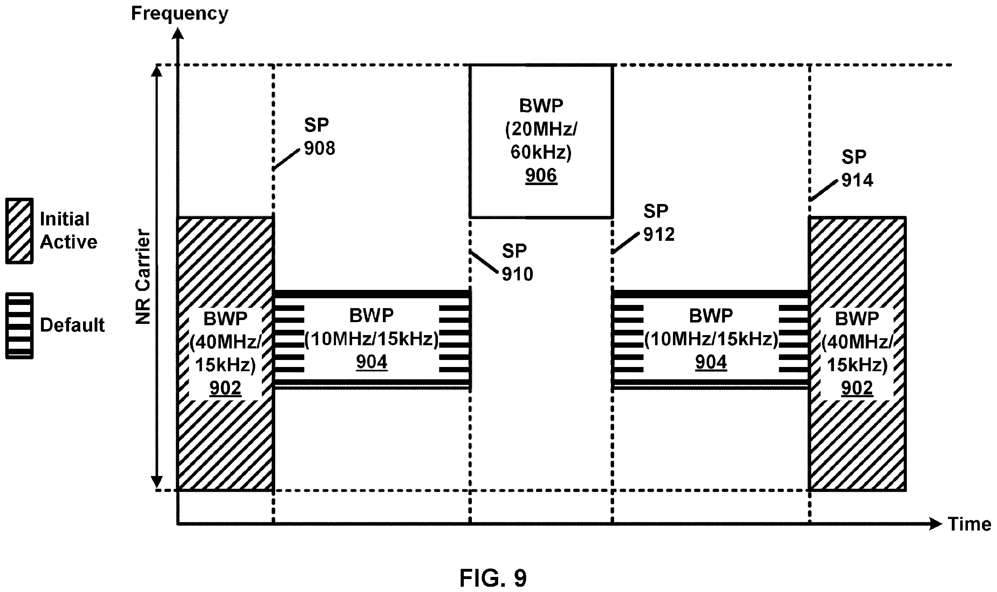

FIG. 9 illustrates an example of bandwidth adaptation using three configured BWPs for an NR carrier. A UE configured with the three BWPs may switch from one BWP to another BWP at a switching point. In the example illustrated in FIG. 9, the BWPs include: a BWP 902 with a bandwidth of 40 MHz and a subcarrier spacing of 15 kHz; a BWP 904 with a bandwidth of 10 MHz and a subcarrier spacing of 15 kHz; and a BWP 906 with a bandwidth of 20 MHz and a subcarrier spacing of 60 kHz. The BWP 902 may be an initial active BWP, and the BWP 904 may be a default BWP. The UE may switch between BWPs at switching points. In the example of FIG. 9, the UE may switch from the BWP 902 to the BWP 904 at a switching point 908. The switching at the switching point 908 may occur for any suitable reason, for example, in response to an expiry of a BWP inactivity timer (indicating switching to the default BWP) and/or in response to receiving a DCI indicating BWP 904 as the active BWP. The UE may switch at a switching point 910 from active BWP 904 to BWP 906 in response to receiving a DCI indicating BWP 906 as the active BWP. The UE may switch at a switching point 912 from active BWP 906 to BWP 904 in response to an expiry of a BWP inactivity timer and/or in response to receiving a DCI indicating BWP 904 as the active BWP. The UE may switch at a switching point 914 from active BWP 904 to BWP 902 in response to receiving a DCI indicating BWP 902 as the active BWP.

If a UE is configured for a secondary cell with a default downlink BWP in a set of configured downlink BWPs and a timer value, UE procedures for switching BWPs on a secondary cell may be the same/similar as those on a primary cell. For example, the UE may use the timer value and the default downlink BWP for the secondary cell in the same/similar manner as the UE would use these values for a primary cell.

To provide for greater data rates, two or more carriers can be aggregated and simultaneously transmitted to/from the same UE using carrier aggregation (CA). The aggregated carriers in CA may be referred to as component carriers (CCs). When CA is used, there are a number of serving cells for the UE, one for a CC. The CCs may have three configurations in the frequency domain.

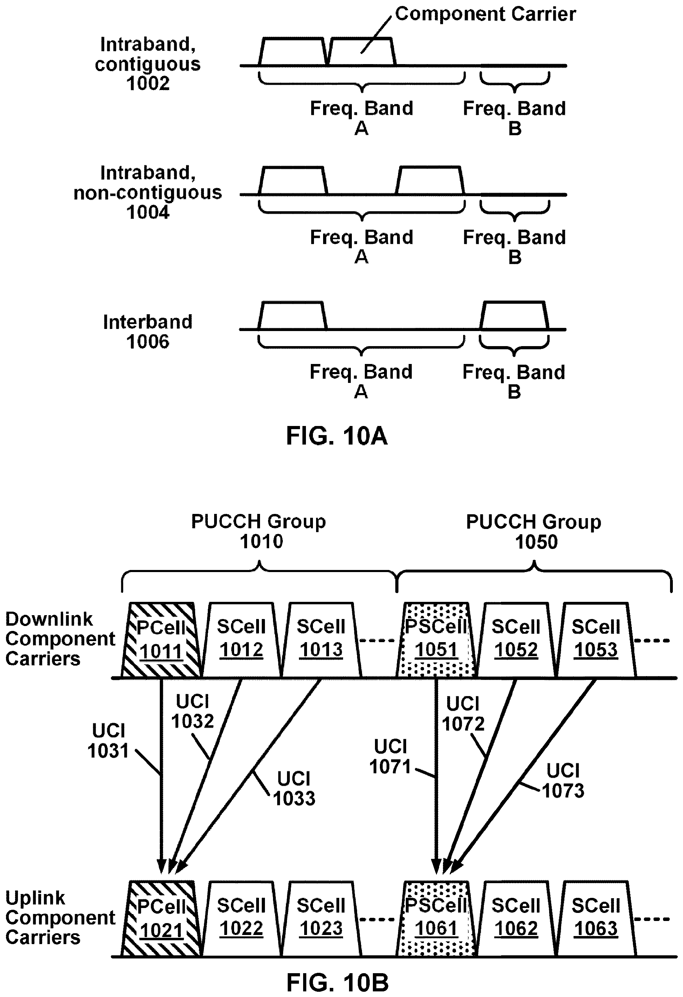

FIG. 10A illustrates the three CA configurations with two CCs. In the intraband, contiguous configuration 1002, the two CCs are aggregated in the same frequency band (frequency band A) and are located directly adjacent to each other within the frequency band. In the intraband, non-contiguous configuration 1004, the two CCs are aggregated in the same frequency band (frequency band A) and are separated in the frequency band by a gap. In the interband configuration 1006, the two CCs are located in frequency bands (frequency band A and frequency band B).

In an example, up to 32 CCs may be aggregated. The aggregated CCs may have the same or different bandwidths, subcarrier spacing, and/or duplexing schemes (TDD or FDD). A serving cell for a UE using CA may have a downlink CC. For FDD, one or more uplink CCs may be optionally configured for a serving cell. The ability to aggregate more downlink carriers than uplink carriers may be useful, for example, when the UE has more data traffic in the downlink than in the uplink.

When CA is used, one of the aggregated cells for a UE may be referred to as a primary cell (PCell). The PCell may be the serving cell that the UE initially connects to at RRC connection establishment, reestablishment, and/or handover. The PCell may provide the UE with NAS mobility information and the security input. UEs may have different PCells. In the downlink, the carrier corresponding to the PCell may be referred to as the downlink primary CC (DL PCC). In the uplink, the carrier corresponding to the PCell may be referred to as the uplink primary CC (UL PCC). The other aggregated cells for the UE may be referred to as secondary cells (SCells). In an example, the SCells may be configured after the PCell is configured for the UE. For example, an SCell may be configured through an RRC Connection Reconfiguration procedure. In the downlink, the carrier corresponding to an SCell may be referred to as a downlink secondary CC (DL SCC). In the uplink, the carrier corresponding to the SCell may be referred to as the uplink secondary CC (UL SCC).

Configured SCells for a UE may be activated and deactivated based on, for example, traffic and channel conditions. Deactivation of an SCell may mean that PDCCH and PDSCH reception on the SCell is stopped and PUSCH, SRS, and CQI transmissions on the SCell are stopped. Configured SCells may be activated and deactivated using a MAC CE with respect to FIG. 4B. For example, a MAC CE may use a bitmap (e.g., one bit per SCell) to indicate which SCells (e.g., in a subset of configured SCells) for the UE are activated or deactivated. Configured SCells may be deactivated in response to an expiration of an SCell deactivation timer (e.g., one SCell deactivation timer per SCell).

Downlink control information, such as scheduling assignments and scheduling grants, for a cell may be transmitted on the cell corresponding to the assignments and grants, which is known as self-scheduling. The DCI for the cell may be transmitted on another cell, which is known as cross-carrier scheduling. Uplink control information (e.g., HARQ acknowledgments and channel state feedback, such as CQl, PMI, and/or RI) for aggregated cells may be transmitted on the PUCCH of the PCell. For a larger number of aggregated downlink CCs, the PUCCH of the PCell may become overloaded. Cells may be divided into multiple PUCCH groups.

FIG. 10B illustrates an example of how aggregated cells may be configured into one or more PUCCH groups. A PUCCH group 1010 and a PUCCH group 1050 may include one or more downlink CCs, respectively. In the example of FIG. 10B, the PUCCH group 1010 includes three downlink CCs: a PCell 1011, an SCell 1012, and an SCell 1013. The PUCCH group 1050 includes three downlink CCs in the present example: a PCell 1051, an SCell 1052, and an SCell 1053. One or more uplink CCs may be configured as a PCell 1021, an SCell 1022, and an SCell 1023. One or more other uplink CCs may be configured as a primary SCell (PSCell) 1061, an SCell 1062, and an SCell 1063. Uplink control information (UCI) related to the downlink CCs of the PUCCH group 1010, shown as UCI 1031, UCI 1032, and UCI 1033, may be transmitted in the uplink of the PCell 1021. Uplink control information (UCI) related to the downlink CCs of the PUCCH group 1050, shown as UCI 1071, UCI 1072, and UCI 1073, may be transmitted in the uplink of the PSCell 1061. In an example, if the aggregated cells depicted in FIG. 10B were not divided into the PUCCH group 1010 and the PUCCH group 1050, a single uplink PCell to transmit UCI relating to the downlink CCs, and the PCell may become overloaded. By dividing transmissions of UCI between the PCell 1021 and the PSCell 1061, overloading may be prevented.

A cell, comprising a downlink carrier and optionally an uplink carrier, may be assigned with a physical cell ID and a cell index. The physical cell ID or the cell index may identify a downlink carrier and/or an uplink carrier of the cell, for example, depending on the context in which the physical cell ID is used. A physical cell ID may be determined using a synchronization signal transmitted on a downlink component carrier. A cell index may be determined using RRC messages. In the disclosure, a physical cell ID may be referred to as a carrier ID, and a cell index may be referred to as a carrier index. For example, when the disclosure refers to a first physical cell ID for a first downlink carrier, the disclosure may mean the first physical cell ID is for a cell comprising the first downlink carrier. The same/similar concept may apply to, for example, a carrier activation. When the disclosure indicates that a first carrier is activated, the specification may mean that a cell comprising the first carrier is activated.

In CA, a multi-carrier nature of a PHY may be exposed to a MAC. In an example, a HARQ entity may operate on a serving cell. A transport block may be generated per assignment/grant per serving cell. A transport block and potential HARQ retransmissions of the transport block may be mapped to a serving cell.

In the downlink, a base station may transmit (e.g., unicast, multicast, and/or broadcast) one or more Reference Signals (RSs) to a UE (e.g., PSS, SSS, CSI-RS, DMRS, and/or PT-RS, as shown in FIG. 5A). In the uplink, the UE may transmit one or more RSs to the base station (e.g., DMRS, PT-RS, and/or SRS, as shown in FIG. 5B). The PSS and the SSS may be transmitted by the base station and used by the UE to synchronize the UE to the base station. The PSS and the SSS may be provided in a synchronization signal (SS) / physical broadcast channel (PBCH) block that includes the PSS, the SSS, and the PBCH. The base station may periodically transmit a burst of SS/PBCH blocks.

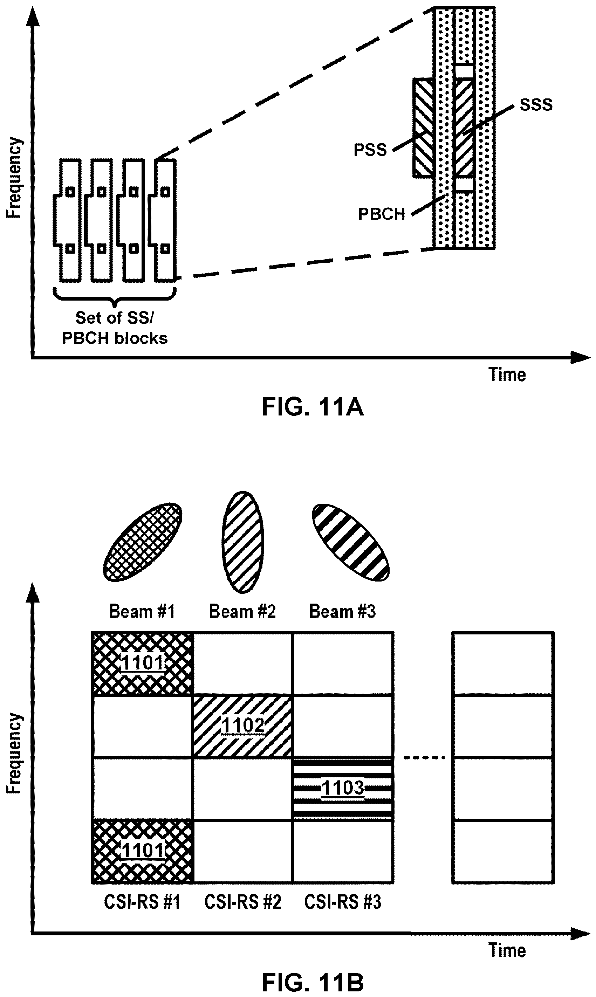

FIG. 11A illustrates an example of an SS/PBCH block's structure and location. A burst of SS/PBCH blocks may include one or more SS/PBCH blocks (e.g., 4 SS/PBCH blocks, as shown in FIG. 11A). Bursts may be transmitted periodically (e.g., every 2 frames or 20 ms). A burst may be restricted to a half-frame (e.g., a first half-frame having a duration of 5 ms). It will be understood that FIG. 11A is an example, and that these parameters (number of SS/PBCH blocks per burst, periodicity of bursts, position of burst within the frame) may be configured based on, for example: a carrier frequency of a cell in which the SS/PBCH block is transmitted; a numerology or subcarrier spacing of the cell; a configuration by the network (e.g., using RRC signaling); or any other suitable factor. In an example, the UE may assume a subcarrier spacing for the SS/PBCH block based on the carrier frequency being monitored, unless the radio network configured the UE to assume a different subcarrier spacing.

The SS/PBCH block may span one or more OFDM symbols in the time domain (e.g., 4 OFDM symbols, as shown in the example of FIG. 11A) and may span one or more subcarriers in the frequency domain (e.g., 240 contiguous subcarriers). The PSS, the SSS, and the PBCH may have a common center frequency. The PSS may be transmitted first and may span, for example, 1 OFDM symbol and 127 subcarriers. The SSS may be transmitted after the PSS (e.g., two symbols later) and may span 1 OFDM symbol and 127 subcarriers. The PBCH may be transmitted after the PSS (e.g., across the next 3 OFDM symbols) and may span 240 subcarriers.

The location of the SS/PBCH block in the time and frequency domains may not be known to the UE (e.g., if the UE is searching for the cell). To find and select the cell, the UE may monitor a carrier for the PSS. For example, the UE may monitor a frequency location within the carrier. If the PSS is not found after a certain duration (e.g., 20 ms), the UE may search for the PSS at a different frequency location within the carrier, as indicated by a synchronization raster. If the PSS is found at a location in the time and frequency domains, the UE may determine, based on a known structure of the SS/PBCH block, the locations of the SSS and the PBCH, respectively. The SS/PBCH block may be a cell-defining SS block (CD-SSB). In an example, a primary cell may be associated with a CD-SSB. The CD-SSB may be located on a synchronization raster. In an example, a cell selection/search and/or reselection may be based on the CD-SSB.

The SS/PBCH block may be used by the UE to determine one or more parameters of the cell. For example, the UE may determine a physical cell identifier (PCI) of the cell based on the sequences of the PSS and the SSS, respectively. The UE may determine a location of a frame boundary of the cell based on the location of the SS/PBCH block. For example, the SS/PBCH block may indicate that it has been transmitted in accordance with a transmission pattern, wherein a SS/PBCH block in the transmission pattern is a known distance from the frame boundary.

The PBCH may use a QPSK modulation and may use forward error correction (FEC). The FEC may use polar coding. One or more symbols spanned by the PBCH may carry one or more DMRSs for demodulation of the PBCH. The PBCH may include an indication of a current system frame number (SFN) of the cell and/or a SS/PBCH block timing index. These parameters may facilitate time synchronization of the UE to the base station. The PBCH may include a master information block (MIB) used to provide the UE with one or more parameters. The MIB may be used by the UE to locate remaining minimum system information (RMSI) associated with the cell. The RMSI may include a System Information Block Type 1 (SIB1). The SIB1 may contain information needed by the UE to access the cell. The UE may use one or more parameters of the MIB to monitor PDCCH, which may be used to schedule PDSCH. The PDSCH may include the SIB1. The SIB1 may be decoded using parameters provided in the MIB. The PBCH may indicate an absence of SIB1. Based on the PBCH indicating the absence of SIB1, the UE may be pointed to a frequency. The UE may search for an SS/PBCH block at the frequency to which the UE is pointed.

The UE may assume that one or more SS/PBCH blocks transmitted with a same SS/PBCH block index are quasi co-located (QCLed) (e.g., having the same/similar Doppler spread, Doppler shift, average gain, average delay, and/or spatial Rx parameters). The UE may not assume QCL for SS/PBCH block transmissions having different SS/PBCH block indices.

SS/PBCH blocks (e.g., those within a half-frame) may be transmitted in spatial directions (e.g., using different beams that span a coverage area of the cell). In an example, a first SS/PBCH block may be transmitted in a first spatial direction using a first beam, and a second SS/PBCH block may be transmitted in a second spatial direction using a second beam.

In an example, within a frequency span of a carrier, a base station may transmit a plurality of SS/PBCH blocks. In an example, a first PCI of a first SS/PBCH block of the plurality of SS/PBCH blocks may be different from a second PCI of a second SS/PBCH block of the plurality of SS/PBCH blocks. The PCIs of SS/PBCH blocks transmitted in different frequency locations may be different or the same.

The CSI-RS may be transmitted by the base station and used by the UE to acquire channel state information (CSI). The base station may configure the UE with one or more CSI-RSs for channel estimation or any other suitable purpose. The base station may configure a UE with one or more of the same/similar CSI-RSs. The UE may measure the one or more CSI-RSs. The UE may estimate a downlink channel state and/or generate a CSI report based on the measuring of the one or more downlink CSI-RSs. The UE may provide the CSI report to the base station. The base station may use feedback provided by the UE (e.g., the estimated downlink channel state) to perform link adaptation.

The base station may semi-statically configure the UE with one or more CSI-RS resource sets. A CSI-RS resource may be associated with a location in the time and frequency domains and a periodicity. The base station may selectively activate and/or deactivate a CSI-RS resource. The base station may indicate to the UE that a CSI-RS resource in the CSI-RS resource set is activated and/or deactivated.

The base station may configure the UE to report CSI measurements. The base station may configure the UE to provide CSI reports periodically, aperiodically, or semi-persistently. For periodic CSI reporting, the UE may be configured with a timing and/or periodicity of a plurality of CSI reports. For aperiodic CSI reporting, the base station may request a CSI report. For example, the base station may command the UE to measure a configured CSI-RS resource and provide a CSI report relating to the measurements. For semi-persistent CSI reporting, the base station may configure the UE to transmit periodically, and selectively activate or deactivate the periodic reporting. The base station may configure the UE with a CSI-RS resource set and CSI reports using RRC signaling.

The CSI-RS configuration may comprise one or more parameters indicating, for example, up to 32 antenna ports. The UE may be configured to employ the same OFDM symbols for a downlink CSI-RS and a control resource set (CORESET) when the downlink CSI-RS and CORESET are spatially QCLed and resource elements associated with the downlink CSI-RS are outside of the physical resource blocks (PRBs) configured for the CORESET. The UE may be configured to employ the same OFDM symbols for downlink CSI-RS and SS/PBCH blocks when the downlink CSI-RS and SS/PBCH blocks are spatially QCLed and resource elements associated with the downlink CSI-RS are outside of PRBs configured for the SS/PBCH blocks.

Downlink DMRSs may be transmitted by a base station and used by a UE for channel estimation. For example, the downlink DMRS may be used for coherent demodulation of one or more downlink physical channels (e.g., PDSCH). An NR network may support one or more variable and/or configurable DMRS patterns for data demodulation. At least one downlink DMRS configuration may support a front-loaded DMRS pattern. A front-loaded DMRS may be mapped over one or more OFDM symbols (e.g., one or two adjacent OFDM symbols). A base station may semi-statically configure the UE with a number (e.g., a maximum number) of front-loaded DMRS symbols for PDSCH. A DMRS configuration may support one or more DMRS ports. For example, for single user-MIMO, a DMRS configuration may support up to eight orthogonal downlink DMRS ports per UE. For multiuser-MIMO, a DMRS configuration may support up to 4 orthogonal downlink DMRS ports per UE. A radio network may support (e.g., at least for CP-OFDM) a common DMRS structure for downlink and uplink, wherein a DMRS location, a DMRS pattern, and/or a scrambling sequence may be the same or different. The base station may transmit a downlink DMRS and a corresponding PDSCH using the same precoding matrix. The UE may use the one or more downlink DMRSs for coherent demodulation/channel estimation of the PDSCH.

In an example, a transmitter (e.g., a base station) may use a precoder matrices for a part of a transmission bandwidth. For example, the transmitter may use a first precoder matrix for a first bandwidth and a second precoder matrix for a second bandwidth. The first precoder matrix and the second precoder matrix may be different based on the first bandwidth being different from the second bandwidth. The UE may assume that a same precoding matrix is used across a set of PRBs. The set of PRBs may be denoted as a precoding resource block group (PRG).

A PDSCH may comprise one or more layers. The UE may assume that at least one symbol with DMRS is present on a layer of the one or more layers of the PDSCH. A higher layer may configure up to 3 DMRSs for the PDSCH.

Downlink PT-RS may be transmitted by a base station and used by a UE for phase-noise compensation. Whether a downlink PT-RS is present or not may depend on an RRC configuration. The presence and/or pattern of the downlink PT-RS may be configured on a UE-specific basis using a combination of RRC signaling and/or an association with one or more parameters employed for other purposes (e.g., modulation and coding scheme (MCS)), which may be indicated by DCI. When configured, a dynamic presence of a downlink PT-RS may be associated with one or more DCI parameters comprising at least MCS. An NR network may support a plurality of PT-RS densities defined in the time and/or frequency domains. When present, a frequency domain density may be associated with at least one configuration of a scheduled bandwidth. The UE may assume a same precoding for a DMRS port and a PT-RS port. A number of PT-RS ports may be fewer than a number of DMRS ports in a scheduled resource. Downlink PT-RS may be confined in the scheduled time/frequency duration for the UE. Downlink PT-RS may be transmitted on symbols to facilitate phase tracking at the receiver.

The UE may transmit an uplink DMRS to a base station for channel estimation. For example, the base station may use the uplink DMRS for coherent demodulation of one or more uplink physical channels. For example, the UE may transmit an uplink DMRS with a PUSCH and/or a PUCCH. The uplink DM-RS may span a range of frequencies that is similar to a range of frequencies associated with the corresponding physical channel. The base station may configure the UE with one or more uplink DMRS configurations. At least one DMRS configuration may support a front-loaded DMRS pattern. The front-loaded DMRS may be mapped over one or more OFDM symbols (e.g., one or two adjacent OFDM symbols). One or more uplink DMRSs may be configured to transmit at one or more symbols of a PUSCH and/or a PUCCH. The base station may semi-statically configure the UE with a number (e.g., maximum number) of front-loaded DMRS symbols for the PUSCH and/or the PUCCH, which the UE may use to schedule a single-symbol DMRS and/or a double-symbol DMRS. An NR network may support (e.g., for cyclic prefix orthogonal frequency division multiplexing (CP-OFDM)) a common DMRS structure for downlink and uplink, wherein a DMRS location, a DMRS pattern, and/or a scrambling sequence for the DMRS may be the same or different.

A PUSCH may comprise one or more layers, and the UE may transmit at least one symbol with DMRS present on a layer of the one or more layers of the PUSCH. In an example, a higher layer may configure up to three DMRSs for the PUSCH.

Uplink PT-RS (which may be used by a base station for phase tracking and/or phase-noise compensation) may or may not be present depending on an RRC configuration of the UE. The presence and/or pattern of uplink PT-RS may be configured on a UE-specific basis by a combination of RRC signaling and/or one or more parameters employed for other purposes (e.g., Modulation and Coding Scheme (MCS)), which may be indicated by DCI. When configured, a dynamic presence of uplink PT-RS may be associated with one or more DCI parameters comprising at least MCS. A radio network may support a plurality of uplink PT-RS densities defined in time/frequency domain. When present, a frequency domain density may be associated with at least one configuration of a scheduled bandwidth. The UE may assume a same precoding for a DMRS port and a PT-RS port. A number of PT-RS ports may be fewer than a number of DMRS ports in a scheduled resource. For example, uplink PT-RS may be confined in the scheduled time/frequency duration for the UE.

SRS may be transmitted by a UE to a base station for channel state estimation to support uplink channel dependent scheduling and/or link adaptation. SRS transmitted by the UE may allow a base station to estimate an uplink channel state at one or more frequencies. A scheduler at the base station may employ the estimated uplink channel state to assign one or more resource blocks for an uplink PUSCH transmission from the UE. The base station may semi-statically configure the UE with one or more SRS resource sets. For an SRS resource set, the base station may configure the UE with one or more SRS resources. An SRS resource set applicability may be configured by a higher layer (e.g., RRC) parameter. For example, when a higher layer parameter indicates beam management, an SRS resource in an SRS resource set of the one or more SRS resource sets (e.g., with the same/similar time domain behavior, periodic, aperiodic, and/or the like) may be transmitted at a time instant (e.g., simultaneously). The UE may transmit one or more SRS resources in SRS resource sets. An NR network may support aperiodic, periodic and/or semi-persistent SRS transmissions. The UE may transmit SRS resources based on one or more trigger types, wherein the one or more trigger types may comprise higher layer signaling (e.g., RRC) and/or one or more DCI formats. In an example, at least one DCI format may be employed for the UE to select at least one of one or more configured SRS resource sets. An SRS trigger type 0 may refer to an SRS triggered based on a higher layer signaling. An SRS trigger type 1 may refer to an SRS triggered based on one or more DCI formats. In an example, when PUSCH and SRS are transmitted in a same slot, the UE may be configured to transmit SRS after a transmission of a PUSCH and a corresponding uplink DMRS.

The base station may semi-statically configure the UE with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port is defined such that the channel over which a symbol on the antenna port is conveyed can be inferred from the channel over which another symbol on the same antenna port is conveyed. If a first symbol and a second symbol are transmitted on the same antenna port, the receiver may infer the channel (e.g., fading gain, multipath delay, and/or the like) for conveying the second symbol on the antenna port, from the channel for conveying the first symbol on the antenna port. A first antenna port and a second antenna port may be referred to as quasi co-located (QCLed) if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming require beam management. Beam management may comprise beam measurement, beam selection, and beam indication. A beam may be associated with one or more reference signals. For example, a beam may be identified by one or more beamformed reference signals. The UE may perform downlink beam measurement based on downlink reference signals (e.g., a channel state information reference signal (CSI-RS)) and generate a beam measurement report. The UE may perform the downlink beam measurement procedure after an RRC connection is set up with a base station.

FIG. 11B illustrates an example of channel state information reference signals (CSI-RSs) that are mapped in the time and frequency domains. A square shown in FIG. 11B may span a resource block (RB) within a bandwidth of a cell. A base station may transmit one or more RRC messages comprising CSI-RS resource configuration parameters indicating one or more CSI-RSs. One or more of the following parameters may be configured by higher layer signaling (e.g., RRC and/or MAC signaling) for a CSI-RS resource configuration: a CSI-RS resource configuration identity, a number of CSI-RS ports, a CSI-RS configuration (e.g., symbol and resource element (RE) locations in a subframe), a CSI-RS subframe configuration (e.g., subframe location, offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., *QCL-scramblingidentity, crs-portscount, mbsfn-subframeconfiglist, csi-rs-configZPid, qcl-csi-rs-configNZPid),* and/or other radio resource parameters.

The three beams illustrated in FIG. 11B may be configured for a UE in a UE-specific configuration. Three beams are illustrated in FIG. 11B (beam #1, beam #2, and beam #3), more or fewer beams may be configured. Beam #1 may be allocated with CSI-RS 1101 that may be transmitted in one or more subcarriers in an RB of a first symbol. Beam #2 may be allocated with CSI-RS 1102 that may be transmitted in one or more subcarriers in an RB of a second symbol. Beam #3 may be allocated with CSI-RS 1103 that may be transmitted in one or more subcarriers in an RB of a third symbol. By using frequency division multiplexing (FDM), a base station may use other subcarriers in a same RB (for example, those that are not used to transmit CSI-RS 1101) to transmit another CSI-RS associated with a beam for another UE. By using time domain multiplexing (TDM), beams used for the UE may be configured such that beams for the UE use symbols from beams of other UEs.

CSI-RSs such as those illustrated in FIG. 11B (e.g., CSI-RS 1101, 1102, 1103) may be transmitted by the base station and used by the UE for one or more measurements. For example, the UE may measure a reference signal received power (RSRP) of configured CSI-RS resources. The base station may configure the UE with a reporting configuration and the UE may report the RSRP measurements to a network (for example, via one or more base stations) based on the reporting configuration. In an example, the base station may determine, based on the reported measurement results, one or more transmission configuration indication (TCI) states comprising a number of reference signals. In an example, the base station may indicate one or more TCI states to the UE (e.g., via RRC signaling, a MAC CE, and/or a DCI). The UE may receive a downlink transmission with a receive (Rx) beam determined based on the one or more TCI states. In an example, the UE may or may not have a capability of beam correspondence. If the UE has the capability of beam correspondence, the UE may determine a spatial domain filter of a transmit (Tx) beam based on a spatial domain filter of the corresponding Rx beam. If the UE does not have the capability of beam correspondence, the UE may perform an uplink beam selection procedure to determine the spatial domain filter of the Tx beam. The UE may perform the uplink beam selection procedure based on one or more sounding reference signal (SRS) resources configured to the UE by the base station. The base station may select and indicate uplink beams for the UE based on measurements of the one or more SRS resources transmitted by the UE.

In a beam management procedure, a UE may assess (e.g., measure) a channel quality of one or more beam pair links, a beam pair link comprising a transmitting beam transmitted by a base station and a receiving beam received by the UE. Based on the assessment, the UE may transmit a beam measurement report indicating one or more beam pair quality parameters comprising, e.g., one or more beam identifications (e.g., a beam index, a reference signal index, or the like), RSRP, a precoding matrix indicator (PMI), a channel quality indicator (CQI), and/or a rank indicator (RI).

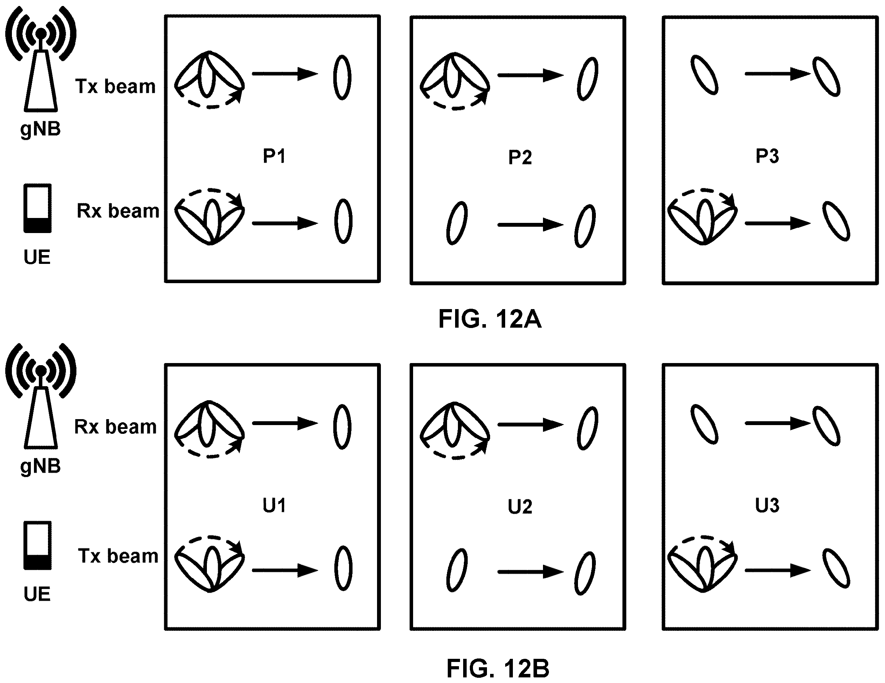

FIG. 12A illustrates examples of three downlink beam management procedures: P1, P2, and P3. Procedure P1 may enable a UE measurement on transmit (Tx) beams of a transmission reception point (TRP) (or multiple TRPs), e.g., to support a selection of one or more base station Tx beams and/or UE Rx beams (shown as ovals in the top row and bottom row, respectively, of P1). Beamforming at a TRP may comprise a Tx beam sweep for a set of beams (shown, in the top rows of P1 and P2, as ovals rotated in a counterclockwise direction indicated by the dashed arrow). Beamforming at a UE may comprise an Rx beam sweep for a set of beams (shown, in the bottom rows of P1 and P3, as ovals rotated in a clockwise direction indicated by the dashed arrow). Procedure P2 may be used to enable a UE measurement on Tx beams of a TRP (shown, in the top row of P2, as ovals rotated in a counterclockwise direction indicated by the dashed arrow). The UE and/or the base station may perform procedure P2 using a smaller set of beams than is used in procedure P1, or using narrower beams than the beams used in procedure P1. This may be referred to as beam refinement. The UE may perform procedure P3 for Rx beam determination by using the same Tx beam at the base station and sweeping an Rx beam at the UE.

FIG. 12B illustrates examples of three uplink beam management procedures: U1, U2, and U3. Procedure U1 may be used to enable a base station to perform a measurement on Tx beams of a UE, e.g., to support a selection of one or more UE Tx beams and/or base station Rx beams (shown as ovals in the top row and bottom row, respectively, of U1). Beamforming at the UE may include, e.g., a Tx beam sweep from a set of beams (shown in the bottom rows of U1 and U3 as ovals rotated in a clockwise direction indicated by the dashed arrow). Beamforming at the base station may include, e.g., an Rx beam sweep from a set of beams (shown, in the top rows of U1 and U2, as ovals rotated in a counterclockwise direction indicated by the dashed arrow). Procedure U2 may be used to enable the base station to adjust its Rx beam when the UE uses a fixed Tx beam. The UE and/or the base station may perform procedure U2 using a smaller set of beams than is used in procedure P1, or using narrower beams than the beams used in procedure P1. This may be referred to as beam refinement The UE may perform procedure U3 to adjust its Tx beam when the base station uses a fixed Rx beam.

A UE may initiate a beam failure recovery (BFR) procedure based on detecting a beam failure. The UE may transmit a BFR request (e.g., a preamble, a UCI, an SR, a MAC CE, and/or the like) based on the initiating of the BFR procedure. The UE may detect the beam failure based on a determination that a quality of beam pair link(s) of an associated control channel is unsatisfactory (e.g., having an error rate higher than an error rate threshold, a received signal power lower than a received signal power threshold, an expiration of a timer, and/or the like).

The UE may measure a quality of a beam pair link using one or more reference signals (RSs) comprising one or more SS/PBCH blocks, one or more CSI-RS resources, and/or one or more demodulation reference signals (DMRSs). A quality of the beam pair link may be based on one or more of a block error rate (BLER), an RSRP value, a signal to interference plus noise ratio (SINR) value, a reference signal received quality (RSRQ) value, and/or a CSI value measured on RS resources. The base station may indicate that an RS resource is quasi co-located (QCLed) with one or more DM-RSs of a channel (e.g., a control channel, a shared data channel, and/or the like). The RS resource and the one or more DMRSs of the channel may be QCLed when the channel characteristics (e.g., Doppler shift, Doppler spread, average delay, delay spread, spatial Rx parameter, fading, and/or the like) from a transmission via the RS resource to the UE are similar or the same as the channel characteristics from a transmission via the channel to the UE.

A network (e.g., a gNB and/or an ng-eNB of a network) and/or the UE may initiate a random access procedure. A UE in an RRC_IDLE state and/or an RRC_INACTIVE state may initiate the random access procedure to request a connection setup to a network. The UE may initiate the random access procedure from an RRC_CONNECTED state. The UE may initiate the random access procedure to request uplink resources (e.g., for uplink transmission of an SR when there is no PUCCH resource available) and/or acquire uplink timing (e.g., when uplink synchronization status is non-synchronized). The UE may initiate the random access procedure to request one or more system information blocks (SIBs) (e.g., other system information such as SIB2, SIB3, and/or the like). The UE may initiate the random access procedure for a beam failure recovery request. A network may initiate a random access procedure for a handover and/or for establishing time alignment for an SCell addition.

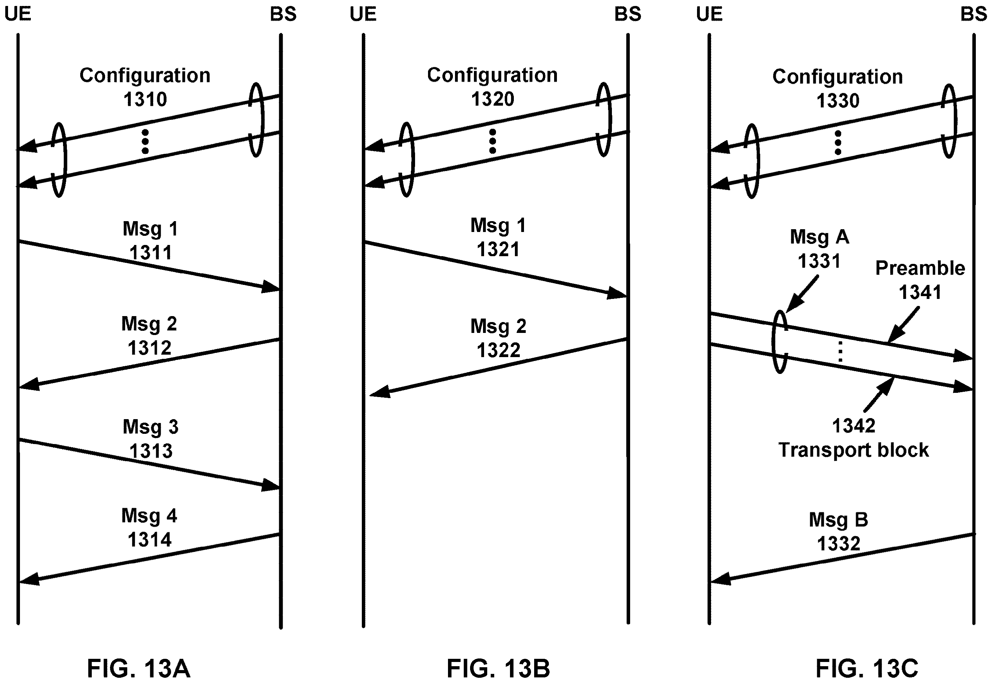

FIG. 13A illustrates a four-step contention-based random access procedure. Prior to initiation of the procedure, a base station may transmit a configuration message 1310 to the UE. The procedure illustrated in FIG. 13A comprises transmission of four messages: a Msg 1 1311, a Msg 2 1312, a Msg 3 1313, and a Msg 4 1314. The Msg 1 1311 may include and/or be referred to as a preamble (or a random access preamble). The Msg 2 1312 may include and/or be referred to as a random access response (RAR).

The configuration message 1310 may be transmitted, for example, using one or more RRC messages. The one or more RRC messages may indicate one or more random access channel (RACH) parameters to the UE. The one or more RACH parameters may comprise at least one of following: general parameters for one or more random access procedures (e.g., *RACH-configGeneral);* cell-specific parameters (e.g., *RACH-ConfigCommon*); and/or dedicated parameters (e.g., *RACH-configDedicated*). The base station may broadcast or multicast the one or more RRC messages to one or more UEs. The one or more RRC messages may be UE-specific (e.g., dedicated RRC messages transmitted to a UE in an RRC_CONNECTED state and/or in an RRC_INACTIVE state). The UE may determine, based on the one or more RACH parameters, a time-frequency resource and/or an uplink transmit power for transmission of the Msg 1 1311 and/or the Msg 3 1313. Based on the one or more RACH parameters, the UE may determine a reception timing and a downlink channel for receiving the Msg 2 1312 and the Msg 4 1314.

The one or more RACH parameters provided in the configuration message 1310 may indicate one or more Physical RACH (PRACH) occasions available for transmission of the Msg 1 1311. The one or more PRACH occasions may be predefined. The one or more RACH parameters may indicate one or more available sets of one or more PRACH occasions (e.g., *prach-ConfigIndex*). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. For example, the one or more RACH parameters may indicate a number of SS/PBCH blocks mapped to a PRACH occasion and/or a number of preambles mapped to a SS/PBCH blocks.

The one or more RACH parameters provided in the configuration message 1310 may be used to determine an uplink transmit power of Msg 1 1311 and/or Msg 3 1313. For example, the one or more RACH parameters may indicate a reference power for a preamble transmission (e.g., a received target power and/or an initial power of the preamble transmission). There may be one or more power offsets indicated by the one or more RACH parameters. For example, the one or more RACH parameters may indicate: a power ramping step; a power offset between SSB and CSI-RS; a power offset between transmissions of the Msg 1 1311 and the Msg 3 1313; and/or a power offset value between preamble groups. The one or more RACH parameters may indicate one or more thresholds based on which the UE may determine at least one reference signal (e.g., an SSB and/or CSI-RS) and/or an uplink carrier (e.g., a normal uplink (NUL) carrier and/or a supplemental uplink (SUL) carrier).

The Msg 1 1311 may include one or more preamble transmissions (e.g., a preamble transmission and one or more preamble retransmissions). An RRC message may be used to configure one or more preamble groups (e.g., group A and/or group B). A preamble group may comprise one or more preambles. The UE may determine the preamble group based on a pathloss measurement and/or a size of the Msg 3 1313. The UE may measure an RSRP of one or more reference signals (e.g., SSBs and/or CSI-RSs) and determine at least one reference signal having an RSRP above an RSRP threshold (e.g., *rsrp-ThresholdSSB* and/or *rsrp-ThresholdCSI-RS).* The UE may select at least one preamble associated with the one or more reference signals and/or a selected preamble group, for example, if the association between the one or more preambles and the at least one reference signal is configured by an RRC message.

The UE may determine the preamble based on the one or more RACH parameters provided in the configuration message 1310. For example, the UE may determine the preamble based on a pathloss measurement, an RSRP measurement, and/or a size of the Msg 3 1313. As another example, the one or more RACH parameters may indicate: a preamble format; a maximum number of preamble transmissions; and/or one or more thresholds for determining one or more preamble groups (e.g., group A and group B). A base station may use the one or more RACH parameters to configure the UE with an association between one or more preambles and one or more reference signals (e.g., SSBs and/or CSI-RSs). If the association is configured, the UE may determine the preamble to include in Msg 1 1311 based on the association. The Msg 1 1311 may be transmitted to the base station via one or more PRACH occasions. The UE may use one or more reference signals (e.g., SSBs and/or CSI-RSs) for selection of the preamble and for determining of the PRACH occasion. One or more RACH parameters (e.g., *ra-ssb-OccasionMskIndex* and/or *ra-OccasionList)* may indicate an association between the PRACH occasions and the one or more reference signals.

The UE may perform a preamble retransmission if no response is received following a preamble transmission. The UE may increase an uplink transmit power for the preamble retransmission. The UE may select an initial preamble transmit power based on a pathloss measurement and/or a target received preamble power configured by the network. The UE may determine to retransmit a preamble and may ramp up the uplink transmit power. The UE may receive one or more RACH parameters (e.g., *PREAMBLE_POWER_RAMPING_STEP)* indicating a ramping step for the preamble retransmission. The ramping step may be an amount of incremental increase in uplink transmit power for a retransmission. The UE may ramp up the uplink transmit power if the UE determines a reference signal (e.g., SSB and/or CSI-RS) that is the same as a previous preamble transmission. The UE may count a number of preamble transmissions and/or retransmissions (e.g., *PREAMBLE_TRANSMISSION_COUNTER).* The UE may determine that a random access procedure completed unsuccessfully, for example, if the number of preamble transmissions exceeds a threshold configured by the one or more RACH parameters (e.g., *preamble TransMax).*

The Msg 2 1312 received by the UE may include an RAR. In some scenarios, the Msg 2 1312 may include multiple RARs corresponding to multiple UEs. The Msg 2 1312 may be received after or in response to the transmitting of the Msg 1 1311. The Msg 2 1312 may be scheduled on the DL-SCH and indicated on a PDCCH using a random access RNTI (RA-RNTI). The Msg 2 1312 may indicate that the Msg 1 1311 was received by the base station. The Msg 2 1312 may include a time-alignment command that may be used by the UE to adjust the UE's transmission timing, a scheduling grant for transmission of the Msg 3 1313, and/or a Temporary Cell RNTI (TC-RNTI). After transmitting a preamble, the UE may start a time window (e.g., *ra-ResponseWindow*) to monitor a PDCCH for the Msg 2 1312. The UE may determine when to start the time window based on a PRACH occasion that the UE uses to transmit the preamble. For example, the UE may start the time window one or more symbols after a last symbol of the preamble (e.g., at a first PDCCH occasion from an end of a preamble transmission). The one or more symbols may be determined based on a numerology. The PDCCH may be in a common search space (e.g., a Type1-PDCCH common search space) configured by an RRC message. The UE may identify the RAR based on a Radio Network Temporary Identifier (RNTI). RNTIs may be used depending on one or more events initiating the random access procedure. The UE may use random access RNTI (RA-RNTI). The RA-RNTI may be associated with PRACH occasions in which the UE transmits a preamble. For example, the UE may determine the RA-RNTI based on: an OFDM symbol index; a slot index; a frequency domain index; and/or a UL carrier indicator of the PRACH occasions. An example of RA-RNTI may be as follows:

RA-RNTI= 1 + s_id + 14 × t_id + 14 × 80 × f_id + 14 × 80 × 8 × ul_carrier_id, where s_id may be an index of a first OFDM symbol of the PRACH occasion (e.g., 0 ≤ s_id < 14), t_id may be an index of a first slot of the PRACH occasion in a system frame (e.g., 0 ≤ t_id < 80), f_id may be an index of the PRACH occasion in the frequency domain (e.g., 0 ≤ f_id < 8), and ul_carrier_id may be a UL carrier used for a preamble transmission (e.g., 0 for an NUL carrier, and 1 for an SUL carrier).

The UE may transmit the Msg 3 1313 in response to a successful reception of the Msg 2 1312 (e.g., using resources identified in the Msg 2 1312). The Msg 3 1313 may be used for contention resolution in, for example, the contention-based random access procedure illustrated in FIG. 13A. In some scenarios, a plurality of UEs may transmit a same preamble to a base station and the base station may provide an RAR that corresponds to a UE. Collisions may occur if the plurality of UEs interpret the RAR as corresponding to themselves. Contention resolution (e.g., using the Msg 3 1313 and the Msg 4 1314) may be used to increase the likelihood that the UE does not incorrectly use an identity of another the UE. To perform contention resolution, the UE may include a device identifier in the Msg 3 1313 (e.g., a C-RNTI if assigned, a TC-RNTI included in the Msg 2 1312, and/or any other suitable identifier).

The Msg 4 1314 may be received after or in response to the transmitting of the Msg 3 1313. If a C-RNTI was included in the Msg 3 1313, the base station will address the UE on the PDCCH using the C-RNTI. If the UE's unique C-RNTI is detected on the PDCCH, the random access procedure is determined to be successfully completed. If a TC-RNTI is included in the Msg 3 1313 (e.g., if the UE is in an RRC_IDLE state or not otherwise connected to the base station), Msg 4 1314 will be received using a DL-SCH associated with the TC-RNTI. If a MAC PDU is successfully decoded and a MAC PDU comprises the UE contention resolution identity MAC CE that matches or otherwise corresponds with the CCCH SDU sent (e.g., transmitted) in Msg 3 1313, the UE may determine that the contention resolution is successful and/or the UE may determine that the random access procedure is successfully completed.

The UE may be configured with a supplementary uplink (SUL) carrier and a normal uplink (NUL) carrier. An initial access (e.g., random access procedure) may be supported in an uplink carrier. For example, a base station may configure the UE with two separate RACH configurations: one for an SUL carrier and the other for an NUL carrier. For random access in a cell configured with an SUL carrier, the network may indicate which carrier to use (NUL or SUL). The UE may determine the SUL carrier, for example, if a measured quality of one or more reference signals is lower than a broadcast threshold. Uplink transmissions of the random access procedure (e.g., the Msg 1 1311 and/or the Msg 3 1313) may remain on the selected carrier. The UE may switch an uplink carrier during the random access procedure (e.g., between the Msg 1 1311 and the Msg 3 1313) in one or more cases. For example, the UE may determine and/or switch an uplink carrier for the Msg 1 1311 and/or the Msg 3 1313 based on a channel clear assessment (e.g., a listen-before-talk).

FIG. 13B illustrates a two-step contention-free random access procedure. Similar to the four-step contention-based random access procedure illustrated in FIG. 13A, a base station may, prior to initiation of the procedure, transmit a configuration message 1320 to the UE. The configuration message 1320 may be analogous in some respects to the configuration message 1310. The procedure illustrated in FIG. 13B comprises transmission of two messages: a Msg 1 1321 and a Msg 2 1322. The Msg 1 1321 and the Msg 2 1322 may be analogous in some respects to the Msg 1 1311 and a Msg 2 1312 illustrated in FIG. 13A, respectively. As will be understood from FIGS. 13A and 13B, the contention-free random access procedure may not include messages analogous to the Msg 3 1313 and/or the Msg 4 1314.

The contention-free random access procedure illustrated in FIG. 13B may be initiated for a beam failure recovery, other SI request, SCell addition, and/or handover. For example, a base station may indicate or assign to the UE the preamble to be used for the Msg 1 1321. The UE may receive, from the base station via PDCCH and/or RRC, an indication of a preamble (e.g., *ra-Preamblelndex).*

After transmitting a preamble, the UE may start a time window (e.g., *ra-ResponseWindow*) to monitor a PDCCH for the RAR. In the event of a beam failure recovery request, the base station may configure the UE with a separate time window and/or a separate PDCCH in a search space indicated by an RRC message (e.g., *recoverySearchSpaceId*)*.* The UE may monitor for a PDCCH transmission addressed to a Cell RNTI (C-RNTI) on the search space. In the contention-free random access procedure illustrated in FIG. 13B, the UE may determine that a random access procedure successfully completes after or in response to transmission of Msg 1 1321 and reception of a corresponding Msg 2 1322. The UE may determine that a random access procedure successfully completes, for example, if a PDCCH transmission is addressed to a C-RNTI. The UE may determine that a random access procedure successfully completes, for example, if the UE receives an RAR comprising a preamble identifier corresponding to a preamble transmitted by the UE and/or the RAR comprises a MAC sub-PDU with the preamble identifier. The UE may determine the response as an indication of an acknowledgement for an SI request.

FIG. 13C illustrates another two-step random access procedure. Similar to the random access procedures illustrated in FIGS. 13A and 13B, a base station may, prior to initiation of the procedure, transmit a configuration message 1330 to the UE. The configuration message 1330 may be analogous in some respects to the configuration message 1310 and/or the configuration message 1320. The procedure illustrated in FIG. 13C comprises transmission of two messages: a Msg A 1331 and a Msg B 1332.

Msg A 1331 may be transmitted in an uplink transmission by the UE. Msg A 1331 may comprise one or more transmissions of a preamble 1341 and/or one or more transmissions of a transport block 1342. The transport block 1342 may comprise contents that are similar and/or equivalent to the contents of the Msg 3 1313 illustrated in FIG. 13A. The transport block 1342 may comprise UCI (e.g., an SR, a HARQ ACK/NACK, and/or the like). The UE may receive the Msg B 1332 after or in response to transmitting the Msg A 1331. The Msg B 1332 may comprise contents that are similar and/or equivalent to the contents of the Msg 2 1312 (e.g., an RAR) illustrated in FIGS. 13A and 13B and/or the Msg 4 1314 illustrated in FIG. 13A.

The UE may initiate the two-step random access procedure in FIG. 13C for licensed spectrum and/or unlicensed spectrum. The UE may determine, based on one or more factors, whether to initiate the two-step random access procedure. The one or more factors may be: a radio access technology in use (e.g., LTE, NR, and/or the like); whether the UE has valid TA or not; a cell size; the UE's RRC state; a type of spectrum (e.g., licensed vs. unlicensed); and/or any other suitable factors.

The UE may determine, based on two-step RACH parameters included in the configuration message 1330, a radio resource and/or an uplink transmit power for the preamble 1341 and/or the transport block 1342 included in the Msg A 1331. The RACH parameters may indicate a modulation and coding schemes (MCS), a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the UE to determine a reception timing and a downlink channel for monitoring for and/or receiving Msg B 1332.

The transport block 1342 may comprise data (e.g., delay-sensitive data), an identifier of the UE, security information, and/or device information (e.g., an International Mobile Subscriber Identity (IMSI)). The base station may transmit the Msg B 1332 as a response to the Msg A 1331. The Msg B 1332 may comprise at least one of following: a preamble identifier; a timing advance command; a power control command; an uplink grant (e.g., a radio resource assignment and/or an MCS); a UE identifier for contention resolution; and/or an RNTI (e.g., a C-RNTI or a TC-RNTI). The UE may determine that the two-step random access procedure is successfully completed if: a preamble identifier in the Msg B 1332 is matched to a preamble transmitted by the UE; and/or the identifier of the UE in Msg B 1332 is matched to the identifier of the UE in the Msg A 1331 (e.g., the transport block 1342).

A UE and a base station may exchange control signaling. The control signaling may be referred to as L1/L2 control signaling and may originate from the PHY layer (e.g., layer 1) and/or the MAC layer (e.g., layer 2). The control signaling may comprise downlink control signaling transmitted from the base station to the UE and/or uplink control signaling transmitted from the UE to the base station.

The downlink control signaling may comprise: a downlink scheduling assignment; an uplink scheduling grant indicating uplink radio resources and/or a transport format; a slot format information; a preemption indication; a power control command; and/or any other suitable signaling. The UE may receive the downlink control signaling in a payload transmitted by the base station on a physical downlink control channel (PDCCH). The payload transmitted on the PDCCH may be referred to as downlink control information (DCI). In some scenarios, the PDCCH may be a group common PDCCH (GC-PDCCH) that is common to a group of UEs.

A base station may attach one or more cyclic redundancy check (CRC) parity bits to a DCI in order to facilitate detection of transmission errors. When the DCI is intended for a UE (or a group of the UEs), the base station may scramble the CRC parity bits with an identifier of the UE (or an identifier of the group of the UEs). Scrambling the CRC parity bits with the identifier may comprise Modulo-2 addition (or an exclusive OR operation) of the identifier value and the CRC parity bits. The identifier may comprise a 16-bit value of a radio network temporary identifier (RNTI).

DCls may be used for different purposes. A purpose may be indicated by the type of RNTI used to scramble the CRC parity bits. For example, a DCI having CRC parity bits scrambled with a paging RNTI (P-RNTI) may indicate paging information and/or a system information change notification. The P-RNTI may be predefined as "FFFE" in hexadecimal. A DCI having CRC parity bits scrambled with a system information RNTI (SI-RNTI) may indicate a broadcast transmission of the system information. The SI-RNTI may be predefined as "FFFF" in hexadecimal. A DCI having CRC parity bits scrambled with a random access RNTI (RA-RNTI) may indicate a random access response (RAR). A DCI having CRC parity bits scrambled with a cell RNTI (C-RNTI) may indicate a dynamically scheduled unicast transmission and/or a triggering of PDCCH-ordered random access. A DCI having CRC parity bits scrambled with a temporary cell RNTI (TC-RNTI) may indicate a contention resolution (e.g., a Msg 3 analogous to the Msg 3 1313 illustrated in FIG. 13A). Other RNTIs configured to the UE by a base station may comprise a Configured Scheduling RNTI (CS-RNTI), a Transmit Power Control-PUCCH RNTI (TPC-PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C-RNTI), and/or the like.

Depending on the purpose and/or content of a DCI, the base station may transmit the DCls with one or more DCI formats. For example, DCI format 0_0 may be used for scheduling of PUSCH in a cell. DCI format 0_0 may be a fallback DCI format (e.g., with compact DCI payloads). DCI format 0_1 may be used for scheduling of PUSCH in a cell (e.g., with more DCI payloads than DCI format 0_0). DCI format 1_0 may be used for scheduling of PDSCH in a cell. DCI format 1_0 may be a fallback DCI format (e.g., with compact DCI payloads). DCI format 1_1 may be used for scheduling of PDSCH in a cell (e.g., with more DCI payloads than DCI format 1_0). DCI format 2_0 may be used for providing a slot format indication to a group of UEs. DCI format 2_1 may be used for notifying a group of UEs of a physical resource block and/or OFDM symbol where the UE may assume no transmission is intended to the UE. DCI format 2_2 may be used for transmission of a transmit power control (TPC) command for PUCCH or PUSCH. DCI format 2_3 may be used for transmission of a group of TPC commands for SRS transmissions by one or more UEs. DCI format(s) for new functions may be defined in future releases. DCI formats may have different DCI sizes, or may share the same DCI size.

After scrambling a DCI with a RNTI, the base station may process the DCI with channel coding (e.g., polar coding), rate matching, scrambling and/or QPSK modulation. A base station may map the coded and modulated DCI on resource elements used and/or configured for a PDCCH. Based on a payload size of the DCI and/or a coverage of the base station, the base station may transmit the DCI via a PDCCH occupying a number of contiguous control channel elements (CCEs). The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

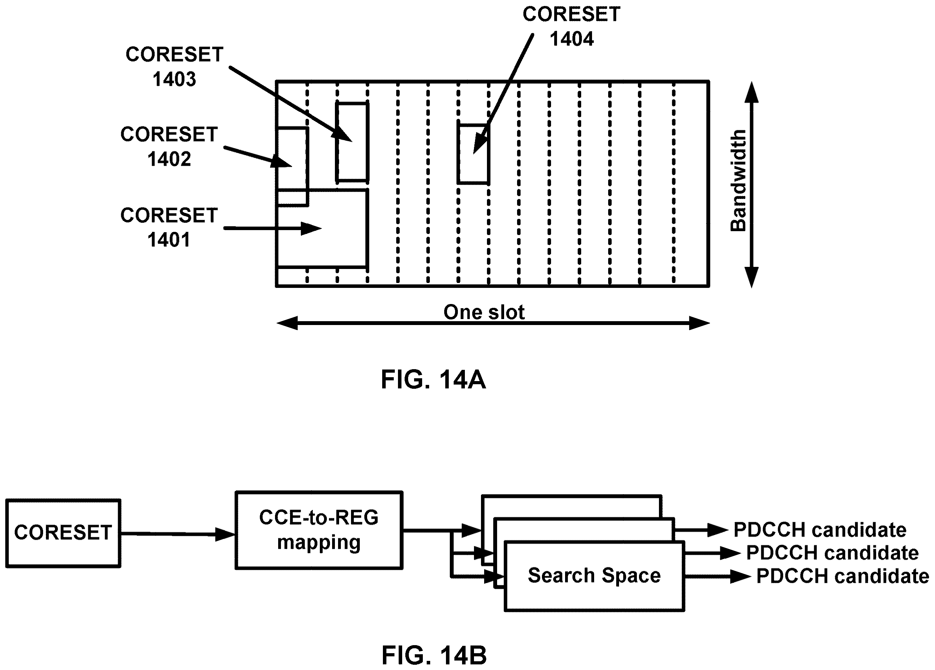

FIG. 14A illustrates an example of CORESET configurations for a bandwidth part. The base station may transmit a DCI via a PDCCH on one or more control resource sets (CORESETs). A CORESET may comprise a time-frequency resource in which the UE tries to decode a DCI using one or more search spaces. The base station may configure a CORESET in the time-frequency domain. In the example of FIG. 14A, a first CORESET 1401 and a second CORESET 1402 occur at the first symbol in a slot. The first CORESET 1401 overlaps with the second CORESET 1402 in the frequency domain. A third CORESET 1403 occurs at a third symbol in the slot. A fourth CORESET 1404 occurs at the seventh symbol in the slot. CORESETs may have a different number of resource blocks in frequency domain.

FIG. 14B illustrates an example of a CCE-to-REG mapping for DCI transmission on a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping by RRC configuration. A CORESET may be configured with an antenna port quasi co-location (QCL) parameter. The antenna port QCL parameter may indicate QCL information of a demodulation reference signal (DMRS) for PDCCH reception in the CORESET.

The base station may transmit, to the UE, RRC messages comprising configuration parameters of one or more CORESETs and one or more search space sets. The configuration parameters may indicate an association between a search space set and a CORESET. A search space set may comprise a set of PDCCH candidates formed by CCEs at a given aggregation level. The configuration parameters may indicate: a number of PDCCH candidates to be monitored per aggregation level; a PDCCH monitoring periodicity and a PDCCH monitoring pattern; one or more DCI formats to be monitored by the UE; and/or whether a search space set is a common search space set or a UE-specific search space set. A set of CCEs in the common search space set may be predefined and known to the UE. A set of CCEs in the UE-specific search space set may be configured based on the UE's identity (e.g., C-RNTI).

As shown in FIG. 14B, the UE may determine a time-frequency resource for a CORESET based on RRC messages. The UE may determine a CCE-to-REG mapping (e.g., interleaved or non-interleaved, and/or mapping parameters) for the CORESET based on configuration parameters of the CORESET. The UE may determine a number (e.g., at most 10) of search space sets configured on the CORESET based on the RRC messages. The UE may monitor a set of PDCCH candidates according to configuration parameters of a search space set. The UE may monitor a set of PDCCH candidates in one or more CORESETs for detecting one or more DCls. Monitoring may comprise decoding one or more PDCCH candidates of the set of the PDCCH candidates according to the monitored DCI formats. Monitoring may comprise decoding a DCI content of one or more PDCCH candidates with possible (or configured) PDCCH locations, possible (or configured) PDCCH formats (e.g., number of CCEs, number of PDCCH candidates in common search spaces, and/or number of PDCCH candidates in the UE-specific search spaces) and possible (or configured) DCI formats. The decoding may be referred to as blind decoding. The UE may determine a DCI as valid for the UE, in response to CRC checking (e.g., scrambled bits for CRC parity bits of the DCI matching a RNTI value). The UE may process information contained in the DCI (e.g., a scheduling assignment, an uplink grant, power control, a slot format indication, a downlink preemption, and/or the like).

The UE may transmit uplink control signaling (e.g., uplink control information (UCI)) to a base station. The uplink control signaling may comprise hybrid automatic repeat request (HARQ) acknowledgements for received DL-SCH transport blocks. The UE may transmit the HARQ acknowledgements after receiving a DL-SCH transport block. Uplink control signaling may comprise channel state information (CSI) indicating channel quality of a physical downlink channel. The UE may transmit the CSI to the base station. The base station, based on the received CSI, may determine transmission format parameters (e.g., comprising multi-antenna and beamforming schemes) for a downlink transmission. Uplink control signaling may comprise scheduling requests (SR). The UE may transmit an SR indicating that uplink data is available for transmission to the base station. The UE may transmit a UCI (e.g., HARQ acknowledgements (HARQ-ACK), CSI report, SR, and the like) via a physical uplink control channel (PUCCH) or a physical uplink shared channel (PUSCH). The UE may transmit the uplink control signaling via a PUCCH using one of several PUCCH formats.

There may be five PUCCH formats and the UE may determine a PUCCH format based on a size of the UCI (e.g., a number of uplink symbols of UCI transmission and a number of UCI bits). PUCCH format 0 may have a length of one or two OFDM symbols and may include two or fewer bits. The UE may transmit UCI in a PUCCH resource using PUCCH format 0 if the transmission is over one or two symbols and the number of HARQ-ACK information bits with positive or negative SR (HARQ-ACK/SR bits) is one or two. PUCCH format 1 may occupy a number between four and fourteen OFDM symbols and may include two or fewer bits. The UE may use PUCCH format 1 if the transmission is four or more symbols and the number of HARQ-ACK/SR bits is one or two. PUCCH format 2 may occupy one or two OFDM symbols and may include more than two bits. The UE may use PUCCH format 2 if the transmission is over one or two symbols and the number of UCI bits is two or more. PUCCH format 3 may occupy a number between four and fourteen OFDM symbols and may include more than two bits. The UE may use PUCCH format 3 if the transmission is four or more symbols, the number of UCI bits is two or more and PUCCH resource does not include an orthogonal cover code. PUCCH format 4 may occupy a number between four and fourteen OFDM symbols and may include more than two bits. The UE may use PUCCH format 4 if the transmission is four or more symbols, the number of UCI bits is two or more and the PUCCH resource includes an orthogonal cover code.

The base station may transmit configuration parameters to the UE for a plurality of PUCCH resource sets using, for example, an RRC message. The plurality of PUCCH resource sets (e.g., up to four sets) may be configured on an uplink BWP of a cell. A PUCCH resource set may be configured with a PUCCH resource set index, a plurality of PUCCH resources with a PUCCH resource being identified by a PUCCH resource identifier (e.g., *pucch-Resourceid*)*,* and/or a number (e.g., a maximum number) of UCI information bits the UE may transmit using one of the plurality of PUCCH resources in the PUCCH resource set. When configured with a plurality of PUCCH resource sets, the UE may select one of the plurality of PUCCH resource sets based on a total bit length of the UCI information bits (e.g., HARQ-ACK, SR, and/or CSI). If the total bit length of UCI information bits is two or fewer, the UE may select a first PUCCH resource set having a PUCCH resource set index equal to "0". If the total bit length of UCI information bits is greater than two and less than or equal to a first configured value, the UE may select a second PUCCH resource set having a PUCCH resource set index equal to "1". If the total bit length of UCI information bits is greater than the first configured value and less than or equal to a second configured value, the UE may select a third PUCCH resource set having a PUCCH resource set index equal to "2". If the total bit length of UCI information bits is greater than the second configured value and less than or equal to a third value (e.g., 1406), the UE may select a fourth PUCCH resource set having a PUCCH resource set index equal to "3".

After determining a PUCCH resource set from a plurality of PUCCH resource sets, the UE may determine a PUCCH resource from the PUCCH resource set for UCI (HARQ-ACK, CSI, and/or SR) transmission. The UE may determine the PUCCH resource based on a PUCCH resource indicator in a DCI (e.g., with a DCI format 1_0 or DCI for 1_1) received on a PDCCH. A three-bit PUCCH resource indicator in the DCI may indicate one of eight PUCCH resources in the PUCCH resource set. Based on the PUCCH resource indicator, the UE may transmit the UCI (HARQ-ACK, CSI and/or SR) using a PUCCH resource indicated by the PUCCH resource indicator in the DCI.

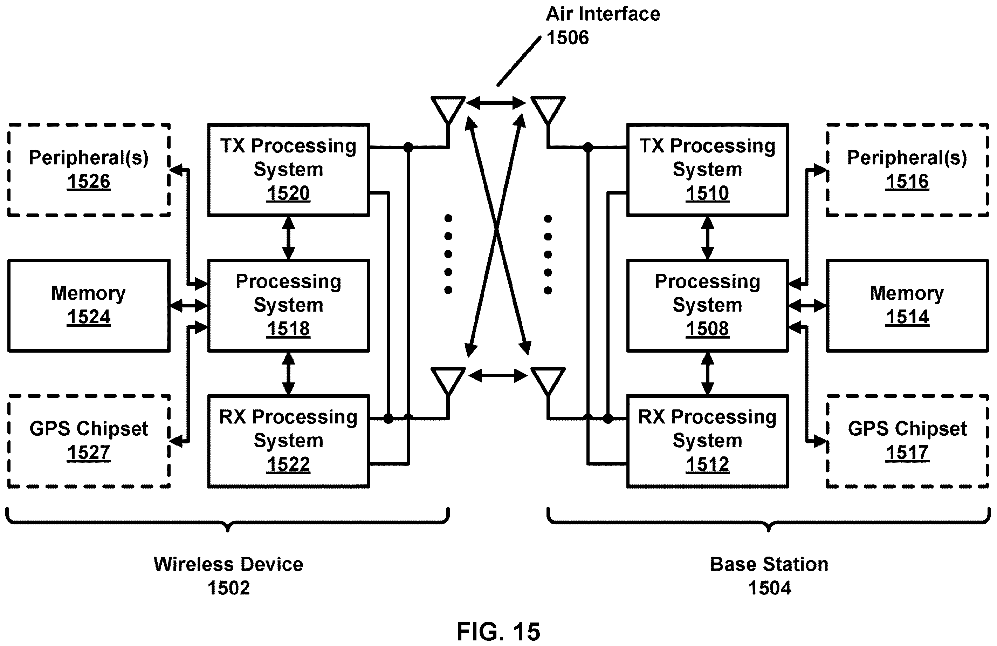

FIG. 15 illustrates an example of a wireless device 1502 in communication with a base station 1504 in accordance with embodiments of the present disclosure. The wireless device 1502 and base station 1504 may be part of a mobile communication network, such as the mobile communication network 100 illustrated in FIG. 1A, the mobile communication network 150 illustrated in FIG. 1B, or any other communication network. Only one wireless device 1502 and one base station 1504 are illustrated in FIG. 15, but it will be understood that a mobile communication network may include more than one UE and/or more than one base station, with the same or similar configuration as those shown in FIG. 15.

The base station 1504 may connect the wireless device 1502 to a core network (not shown) through radio communications over the air interface (or radio interface) 1506. The communication direction from the base station 1504 to the wireless device 1502 over the air interface 1506 is known as the downlink, and the communication direction from the wireless device 1502 to the base station 1504 over the air interface is known as the uplink. Downlink transmissions may be separated from uplink transmissions using FDD, TDD, and/or some combination of the two duplexing techniques.

In the downlink, data to be sent to the wireless device 1502 from the base station 1504 may be provided to the processing system 1508 of the base station 1504. The data may be provided to the processing system 1508 by, for example, a core network. In the uplink, data to be sent to the base station 1504 from the wireless device 1502 may be provided to the processing system 1518 of the wireless device 1502. The processing system 1508 and the processing system 1518 may implement layer 3 and layer 2 OSI functionality to process the data for transmission. Layer 2 may include an SDAP layer, a PDCP layer, an RLC layer, and a MAC layer, for example, with respect to FIG. 2A, FIG. 2B, FIG. 3, and FIG. 4A. Layer 3 may include an RRC layer as with respect to FIG. 2B.

After being processed by processing system 1508, the data to be sent to the wireless device 1502 may be provided to a transmission processing system 1510 of base station 1504. Similarly, after being processed by the processing system 1518, the data to be sent to base station 1504 may be provided to a transmission processing system 1520 of the wireless device 1502. The transmission processing system 1510 and the transmission processing system 1520 may implement layer 1 OSI functionality. Layer 1 may include a PHY layer with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

At the base station 1504, a reception processing system 1512 may receive the uplink transmission from the wireless device 1502. At the wireless device 1502, a reception processing system 1522 may receive the downlink transmission from base station 1504. The reception processing system 1512 and the reception processing system 1522 may implement layer 1 OSI functionality. Layer 1 may include a PHY layer with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

As shown in FIG. 15, a wireless device 1502 and the base station 1504 may include multiple antennas. The multiple antennas may be used to perform one or more MIMO or multi-antenna techniques, such as spatial multiplexing (e.g., single-user MIMO or multi-user MIMO), transmit/receive diversity, and/or beamforming. In other examples, the wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518 to carry out one or more of the functionalities discussed in the present application. Although not shown in FIG. 15, the transmission processing system 1510, the transmission processing system 1520, the reception processing system 1512, and/or the reception processing system 1522 may be coupled to a memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and the base station 1504 to operate in a wireless environment.

The processing system 1508 and/or the processing system 1518 may be connected to one or more peripherals 1516 and one or more peripherals 1526, respectively. The one or more peripherals 1516 and the one or more peripherals 1526 may include software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive user input data from and/or provide user output data to the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 and/or the processing system 1518 may be connected to a GPS chipset 1517 and a GPS chipset 1527, respectively. The GPS chipset 1517 and the GPS chipset 1527 may be configured to provide geographic location information of the wireless device 1502 and the base station 1504, respectively.

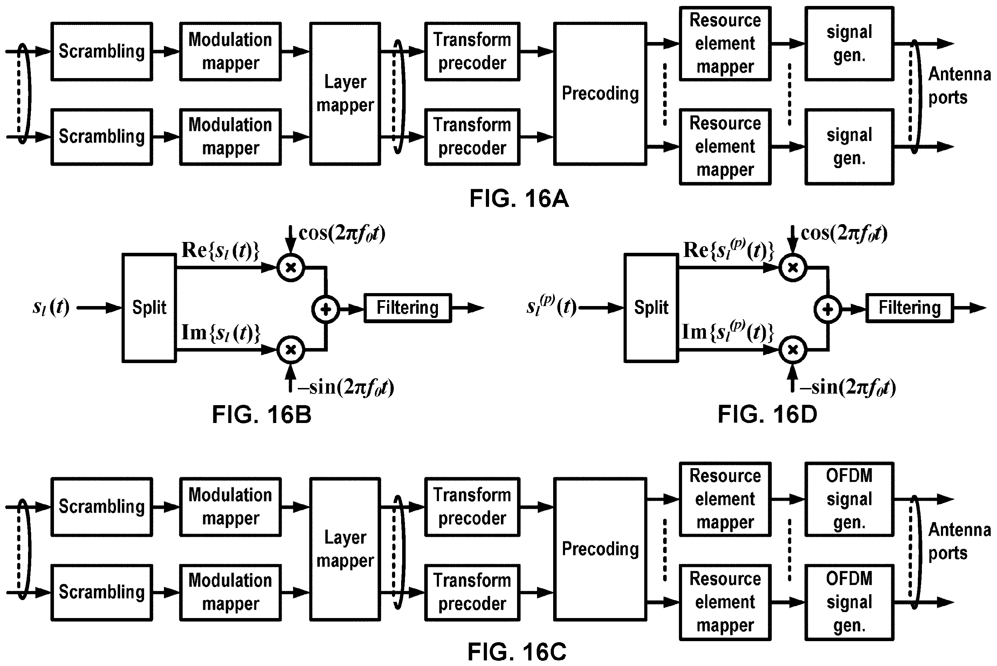

FIG. 16A illustrates an example structure for uplink transmission. A baseband signal representing a physical uplink shared channel may perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA) or CP-OFDM signal for an antenna port; and/or the like. In an example, when transform precoding is enabled, a SC-FDMA signal for uplink transmission may be generated. In an example, when transform precoding is not enabled, a CP-OFDM signal for uplink transmission may be generated by FIG. 16A. These functions are illustrated as examples and it is anticipated that other mechanisms may be implemented in various embodiments.

FIG. 16B illustrates an example structure for modulation and up-conversion of a baseband signal to a carrier frequency. The baseband signal may be a complex-valued SC-FDMA or CP-OFDM baseband signal for an antenna port and/or a complex-valued Physical Random Access Channel (PRACH) baseband signal. Filtering may be employed prior to transmission.

FIG. 16C illustrates an example structure for downlink transmissions. A baseband signal representing a physical downlink channel may perform one or more functions. The one or more functions may comprise: scrambling of coded bits in a codeword to be transmitted on a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are illustrated as examples and it is anticipated that other mechanisms may be implemented in various embodiments.

FIG. 16D illustrates another example structure for modulation and up-conversion of a baseband signal to a carrier frequency. The baseband signal may be a complex-valued OFDM baseband signal for an antenna port. Filtering may be employed prior to transmission.

A wireless device may receive from a base station one or more messages (e.g., RRC messages) comprising configuration parameters of a plurality of cells (e.g., primary cell, secondary cell). The wireless device may communicate with at least one base station (e.g., two or more base stations in dual connectivity) via the plurality of cells. The one or more messages (e.g., as a part of the configuration parameters) may comprise parameters of physical, MAC, RLC, PCDP, SDAP, RRC layers for configuring the wireless device. For example, the configuration parameters may comprise parameters for configuring physical and MAC layer channels, bearers, etc. For example, the configuration parameters may comprise parameters indicating values of timers for physical, MAC, RLC, PCDP, SDAP, RRC layers, and/or communication channels.

A timer may begin running once it is started and continue running until it is stopped or until it expires. A timer may be started if it is not running or restarted if it is running. A timer may be associated with a value (e.g., the timer may be started or restarted from a value or may be started from zero and expire once it reaches the value). The duration of a timer may not be updated until the timer is stopped or expires (e.g., due to BWP switching). A timer may be used to measure a time period/window for a process. When the specification refers to an implementation and procedure related to one or more timers, it will be understood that there are multiple ways to implement the one or more timers. For example, it will be understood that one or more of the multiple ways to implement a timer may be used to measure a time period/window for the procedure. For example, a random access response window timer may be used for measuring a window of time for receiving a random access response. In an example, instead of starting and expiry (or expiration) of a random access response window timer, the time difference between two time stamps may be used. When a timer is restarted, a process for measurement of time window may be restarted. Other example implementations may be provided to restart a measurement of a time window.

A base station may support subband full duplex (SBFD) in a cell. The SBFD (or an SBFD configuration or SBFD parameters) may include one or more uplink subbands and one or more downlink subbands. A downlink subband or an uplink subband may comprise one or more frequency resources, e.g., one or more resource blocks (RBs). A resource block may also be referred to as a physical resource block or a virtual resource block.

In an example, one or more uplink subbands and one or more downlink subbands may be comprised in an SBFD time resource, e.g., an SBFD symbol, an SBFD slot, an SBFD subframe, etc. In an example, the one or more uplink subbands, the one or more downlink subbands, and/or one or more SBFD time resources may be referred to as an SBFD resource. In another example, frequency resources in the one or more uplink subbands and frequency resources in the one or more downlink subbands may also be referred to as an SBFD resource.

At least during the same SBFD symbol, no frequency resource among frequency resources in an uplink subband may overlap (in frequency) with any frequency resource among frequency resources in a downlink subband. At least during the same SBFD symbol, no frequency resource among frequency resources in a downlink subband may overlap (in frequency) with any frequency resource among frequency resources in an uplink subband.

The SBFD (or an SBFD configuration or SBFD parameters) may include one or more SBFD time resources (e.g., one or more SBFD symbols) during a time period. The time period comprising the one or more SBFD time resources may also be referred to as an SBFD time period, a time period of the SBFD, or a periodicity of the SBFD. During the same SBFD symbol, a base station may simultaneously (e.g., at the same time) transmit a downlink signal in a downlink subband and receive an uplink signal in an uplink subband.

A base station may perform (or apply or execute) an SBFD operation in a cell based on the SBFD (or an SBFD configuration, or SBFD parameters). For example, the SBFD operation may be associated with a cell (e.g., a cell associated with or identified by a cell ID). The SBFD operation may also be referred to as an SBFD mode, an SBFD scheme, an SBFD technique, an SBFD procedure, or a subband nonoverlapping full duplex operation. At the same time in the SBFD operation, the base station may simultaneously (e.g., at the same time) transmit a downlink (DL) signal on a DL subband and receive an uplink (UL) signal on an UL subband. For example, in the same SBFD symbol in the SBFD operation, the base station may simultaneously (e.g., at the same time) transmit a DL signal on a DL subband and receive an UL signal on an UL subband.

In an example, in the SBFD operation, the DL signal on the DL subband and the UL signal on the UL subband may be associated with (or related to) different wireless devices, e.g., the DL signal may be associated with a first wireless device and the UL signal may be associated with a second wireless device. In another example, in the SBFD operation, the DL signal on the DL subband and the UL signal on the UL subband may be associated with (or related to) the same wireless device.

A wireless device may transmit and/or receive a signal (e.g., a reference signal, a channel, etc.) in a cell. The cell may be associated with a base station. The cell may be a serving cell or a non-serving cell of the wireless device. The serving cell may also be referred to as a special cell (spCell), a primary cell (PCell), a secondary cell (SCell), or a primary secondary cell (PSCell). The non-serving cell may also be referred to as a neighboring cell or a neighbor cell. The cell may be identified by an identifier e.g., a cell identifier. In an example, the cell identifier may be referred to as a physical cell identifier (PCI) or a cell global identifier (CGI). In example, the CGI may be a unique identifier of a cell. For example, a CGI associated with a cell may uniquely (or globally) identify the cell.

In an example, a wireless device may transmit a signal (e.g., an uplink signal) in an uplink subband during an SBFD symbol. In another example, a wireless device may receive a signal (e.g., a downlink signal) in a downlink subband during an SBFD symbol.

In an example, the signal (e.g., a downlink signal and/or an uplink signal) may be a physical signal. For example, a physical signal may not include higher layer information (e.g., user and/or control data). An example of a physical signal is a reference signal. In another example, a signal may be referred to as a channel. For example, a channel may include (or carry) higher layer information (e.g., user and/or control data). A channel may be a data channel and/or a control channel. A channel may be an uplink channel and/or a downlink channel.

In an example, an uplink channel may also be referred to as an uplink physical channel. In an example, the downlink channel may also be referred to as a downlink physical channel. In an example, a downlink physical channel (or a downlink channel) may be a Physical Downlink Shared Channel (PDSCH), a Physical Downlink Control Channel (PDCCH), a Physical Broadcast Channel (PBCH), etc. In an example, an uplink physical channel (or an uplink channel) may be a Physical Uplink Shared Channel (PUSCH), a Physical Uplink Control Channel (PUCCH), a Physical Random Access Channel (PRACH), etc.

In an example, the reference signal may be a downlink reference signal, e.g., transmitted by a base station. For example, the reference signal may be transmitted in one or more cells, e.g., in a serving cell and one or more neighbor cells of the wireless device. The one or more cells may be operated, managed, or served by one or more network nodes, e.g., one or more base stations.

Examples of the downlink reference signals may be a synchronization signal/physical broadcast channel block (SSB), a CSI-RS, a positioning reference signal (PRS), a radio link monitoring reference signal (RLM-RS) (e.g., a SSB, a CSI-RS, etc), a tracking reference signal (TRS), a demodulation reference signal (DMRS), a SS/PBCH Block Measurement Timing Configuration (SMTC), etc. Each SSB may include a primary synchronization signal (PSS), a secondary synchronization signal (SSS) and a physical broadcast channel (PBCH) within 4 successive symbols. The SSB may be transmitted periodically. For example, the SSB may occur with a periodicity, e.g., every 5 ms, 10 ms, 20 ms, 40 ms, 80 ms, 160 ms, etc.

The SMTC configuration may be associated with one or more SMTC parameters, e.g. a SMTC index or identifier, a SMTC duration or window, a SMTC periodicity, a SMTC time offset, etc. One or multiple SSBs are comprised within a SMTC duration. For example, the SMTC occasion may occur with a periodicity, e.g., every 5 ms, 10 ms, 20 ms, 40 ms, 80 ms, 160 ms, etc.

In another example, the reference signal may be an uplink reference signal, e.g., transmitted by the wireless device. Examples of the uplink reference signal may be a sounding reference signal (SRS), a demodulation reference signal (DMRS), etc. For example, the wireless device may transmit the uplink reference signals (e.g., an SRS) in a serving cell of the wireless device.

A beam may be a reference signal (e.g., an SSB, a CSI-RS, a PRS, etc.) associated with a direction. The beam may also be referred to as a lobe. In an example, the beam may also be referred to as a receive beam (e.g., a beam received by a wireless device from a certain direction). In another example, the beam may also be referred to as a transmit beam (e.g., a beam transmitted by a base station towards a certain direction). A beam (e.g., an SSB) may cover (or serve) an area (e.g., a geographical area) within a cell. In an example, a cell may transmit between 1 and 64 beams, e.g., up to 64 SSBs. For example, a cell may transmit two beams e.g., a first SSB (SSB1) and a second SSB (SSB2). In an example, SSB1 may cover one part of the cell and SSB2 may cover another part of the cell.

In an example, the direction of a cell may be based on (or determined by or characterized by) an angle in an azimuth plane and/or an angle in a zenith plane. The azimuth plane may also be referred to as a horizontal plane. The zenith plane may also be referred to as an elevation plane or a vertical plane. The beam may be between the wireless device and a base station. The radio link and/or the beam may be related to a cell associated with the base station. The cell may be a serving cell such as a spCell, a PCell, a PSCell, or an SCell. The beam may also be referred to as a beam of a cell, a cell beam, or a serving cell beam, a spCell beam, a PCell beam, a PSCell beam, an SCell beam, etc.

In an example, a cell may be associated with a carrier frequency. The carrier frequency may be an uplink carrier frequency or a downlink carrier frequency. The carrier frequency may also be referred to as a carrier, a frequency, a component carrier (CC), a layer, a frequency layer, frequency channel, positioning frequency layer (PFL), etc. The carrier frequency may belong to a frequency band. The frequency band may include one or multiple carrier frequencies. The number of the carrier frequencies within a frequency band may depend on a passband (e.g., length of the band in frequency domain) and/or a bandwidth of the carrier frequencies and/or a raster (e.g., a point in frequency where a carrier frequency may be centered, etc.).

In an example, information about (or associated with) the carrier frequency may be indicated by a channel number or an identifier. In example, the channel number or the identifier may be pre-defined. For example, the channel number may be an absolute radio frequency channel number (ARFCN). Examples of the ARFCN may be E-UTRA ARFCN (EARFCN), NR ARFCN (NR-ARFCN), etc. For example, a base station may transmit (e.g., in a broadcast channel) a channel number (e.g., an ARFCN, an NR-ARFCN, etc.) associated with a cell.

A reference signal transmitted in a cell may also be associated with the channel number, e.g., an ARFCN. For example, a carrier frequency associated with a CSI-RS may be indicated by a CSI-RS ARFCN, e.g., in a measurement configuration. In another example, a carrier frequency associated with an SSB may be indicated by an SSB ARFCN, e.g., in a measurement configuration. For example, the SSB ARFCN may indicate a frequency location within a bandwidth of an SSB. For example, the SSB may include 20 resource blocks enumerated from a resource block # 0 to a resource block # 19. In an example, the indicated frequency location (e.g., a SSB ARFCN) may correspond to a resource element # 0 within a resource block # 0 of the resource blocks of the SSB.

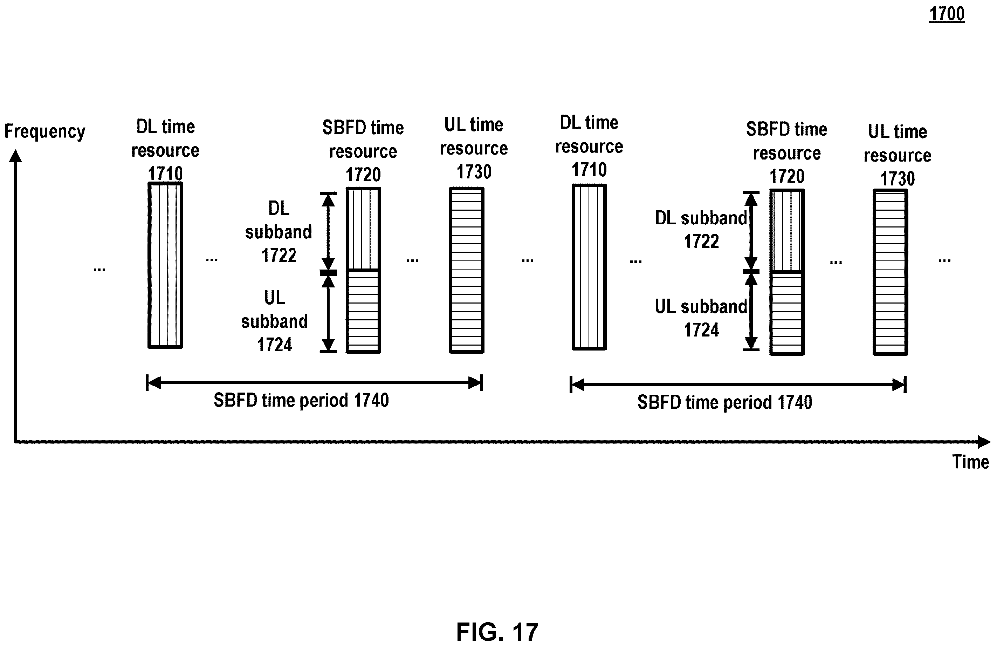

FIG. 17 illustrates an example of time-frequency resources 1700 per an aspect of the present disclosure. Time-frequency resources 1700 may be associated with a cell. A base station may serve, manage, or operate the cell.

In the example of FIG. 17, a time resource may be a downlink (DL) time resource 1710, a subband full duplex (SBFD) time resource 1720, or an uplink (UL) time resource 1730. In an example, an SBFD time period 1740 may include at least one SBFD time resource 1720. In another example, SBFD time period 1740 may include one or more DL time resources 1710 and one or more SBFD time resources 1720. In another example, SBFD time period 1740 may include one or more SBFD time resources 1720 and one or more UL time resources 1730. In another example, SBFD time period 1740 may include one or more DL time resources 1710, one or more SBFD time resources 1720, and one or more UL time resources 1730. In a frequency domain, SBFD time resource 1720 may include a DL subband 1722 and an UL subband 1724. In an example, in a frequency domain, SBFD time resource 1720 may include one or more DL subbands 1722 and one or more UL subbands 1724. DL time resource 1710 or UL time resource 1730 may also be referred to as a non-SBFD time resource.

A base station may transmit a signal in DL time resource 1710. A wireless device may receive a signal in DL time resource 1710. A base station may receive a signal in UL time resource 1710. A wireless device may transmit a signal in UL time resource 1730. A base station may transmit a signal in DL subband 1722 (e.g., DL subband 1722 of SBFD time resource 1720). A wireless device may receive a signal in DL subband 1722. A base station may receive a signal in UL subband 1724 (e.g., UL subband 1724 of SBFD time resource 1720). A wireless device may transmit a signal in UL subband 1724. The signal may be a reference signal and/or a channel (as described above).

DL time resource 1710 may be associated with a full duplex - frequency division duplexing (FD-FDD), a time division duplexing (TDD), a half-duplex - frequency division duplexing (HD-FDD), or supplemental downlink (SDL) operation (or mode). UL time resource 1710 may be associated with an FD-FDD, a TDD, a HD-FDD, or a supplemental uplink (SUL) operation (or mode).

At different times in a TDD operation, a wireless device may transmit an uplink (UL) signal and receive a downlink (DL) signal on the same carrier frequency. At different times in a TDD operation, a base station may transmit a DL signal and receive an UL signal on the same carrier frequency.

In an FD-FDD operation, a wireless device may simultaneously (e.g., at the same time) transmit an UL signal on an uplink carrier frequency and receive a downlink signal on a downlink carrier frequency. In an FD-FDD operation, a base station may simultaneously (e.g., at the same time) transmit a DL signal on a DL carrier frequency and receive an UL signal on an UL carrier frequency.

At different times in an HD-FDD operation, a wireless device may transmit an UL signal on an uplink carrier frequency and receive a downlink signal on a downlink carrier frequency. At different times in an HD-FDD operation, a base station may transmit a DL signal on a DL carrier frequency and receive an UL signal on an UL carrier frequency.

In a multicarrier operation, a wireless device may use an SDL band (and/or an SUL band) with an FDD-FDD, a HD-FDD, or a TDD band. Examples of the multicarrier operation may be carrier aggregation, multi-connectivity, dual connectivity, etc.

Referring to FIG. 17, DL subband 1722 may include one or more resource blocks. UL subband 1724 may include one or more resource blocks. In an example, the one or more resource blocks within DL subband 1722 may be consecutive (or adjacent) in a frequency domain. In an example, the one or more resource blocks within UL subband 1724 may be consecutive (or adjacent) in a frequency domain. In another example, DL subband 1722 and UL subband 1724 (belonging to a SBFD time resource 1720) may be within a bandwidth of a carrier frequency. In yet another example, one or more DL subbands 1722 and one or more UL subbands 1724 (belonging to a SBFD time resource 1720) may be within a bandwidth of a carrier frequency. The carrier frequency may also be referred to as a time division duplex (TDD) carrier frequency or a carrier frequency of a TDD operation (or a mode). For example, the bandwidth and the carrier frequency may be associated with a base station. In an example, a bandwidth of a carrier frequency may be 48 resource blocks (RBs). In another example, DL subband 1722 may include 8 RBs. In yet another example, UL subband 1724 may include 4 RBs. In yet another example, a base station may configure four DL subbands 1722 within the bandwidth (e.g., 48 RBs) of the carrier frequency. In yet another example, a base station may configure four UL subband 1724 within the bandwidth (e.g., 48 RBs) of the carrier frequency. In yet another example, a base station may configure five DL subbands 1722 within the bandwidth (e.g., 48 RBs) of the carrier frequency. In yet another example, a base station may configure two UL subband 1724 within the bandwidth (e.g., 48 RBs) of the carrier frequency.

A time resource may be referred to as a symbol, a slot, a subslot, a mini-slot, a subframe, or a frame. For example, the radio frame (e.g., 10 ms in length) may include 10 subframes (e.g., each of 1 ms in length). The time resource may be identified by a time resource number (e.g., a symbol number ranging from 0 to 13, a subframe number ranging from 0 to 9, etc.). A time resource may be a DL time resource (e.g., a DL symbol, a DL slot, a DL subframe, etc.) or an UL time resource (e.g., an UL symbol, an UL slot, an UL subframe, etc.). In an example, DL time resource 1710 may also be referred to as a DL symbol, a DL slot, a DL subframe, etc. In an example, UL time resource 1730 may also be referred to as a UL symbol, an UL slot, an UL subframe, etc. In an example, SBFD time resource 1720 may also be referred to an SBFD symbol, an SBFD slot, an SBFD subframe, etc. DL time resource 1710 or UL time resource 1730 may also be referred to as a non-SBFD symbol, a non-SBFD slot, a non-SBFD subframe, etc.

In an example, one or more DL time resources 1710, SBFD time resources 1720, and/or one or more UL time resources 1730 within SBFD time period 1740 may also be referred to as a pattern. The pattern may also be referred to as an SBFD pattern, an SBFD time resource pattern, an SBFD symbol pattern, an SBFD slot pattern, or an SBFD subframe pattern, etc. In an example, the pattern may be periodic (e.g., a periodic SBFD pattern) or aperiodic (e.g., an aperiodic SBFD pattern). In an example, a wireless device may receive one or more messages, from a base station, including the SBFD pattern. The one or more messages may be a radio resource control (RRC) message, a medium access control - control element (MAC-CE), or a downlink control information (DCI).

In an example, a periodicity of the periodic SBFD pattern may be based on (or correspond to) SBFD time period 1740. In an example, SBFD time period 1740 may be based on a periodicity of an uplink (UL) - downlink (DL) pattern periodicity.

In an example, an UL-DL pattern may be referred to as a time division duplex (TDD) UL-DL pattern or a TDD UL-DL subframe pattern. In an example, an UL-DL pattern (e.g., an IE *TDD-UL-DL-Patter*n*)* may include a periodicity, a number of DL slots, a number of UL slots, a number of UL symbols, and a number of DL symbols. The periodicity of an UL-DL pattern (or a TDD UL-DL pattern) may also be referred to as a DL-UL transmission periodicity (e.g., an IE *dl-UL-TransmissionPeriodicity),* a DL-UL transmission period, or a DL-UL transmission repetition period. In an example, the DL-UL transmission periodicity of a TDD-UL-DL pattern may be 0.5ms, 0.625ms, 1ms, 1.25ms, 2ms, 2.5ms, 3ms, 4ms, 5ms, 10ms, 20ms, 40ms, 60ms, 80ms, 100ms, 120ms, 140ms, 160ms, or any other reasonable time duration. A wireless device may receive, from a base station, a UL-DL pattern (e.g., an IE *TDD-UL-DL-Patter*n) including a DL-UL transmission periodicity (e.g., *dl-UL-TransmissionPeriodicity)* in a radio resource control (RRC) message. For example, the RRC message may be referred to as a TDD UL-DL common configuration (e.g., *TDD-UL-DL-ConfigCommon).* In an example, a wireless device may receive, from a base station, one UL-DL pattern. In an example, a wireless device may receive, from a base station, two or more UL-DL patterns.

In an example, SBFD time period 1740 may be based on a DL-UL transmission periodicity of a TDD-UL-DL pattern. For example, SBFD time period 1740 may correspond to the DL-UL transmission periodicity of a TDD-UL-DL pattern. In another example, SBFD time period 1740 may correspond to a sum of two or more DL-UL transmission periodicities. For example, a wireless device may receive two or more TDD-UL-DL patterns. In this example, each one of the two or more DL-UL transmission periodicities may be associated with (or related to) one of the two or more TDD-UL-DL patterns. For example, a wireless device may receive, from a base station, one TDD-UL-DL pattern with a periodicity corresponding to 5 ms, and another TDD-UL-DL pattern with a periodicity corresponding to 10 ms. In this example, SBFD time period 1740 may correspond to 15 ms.

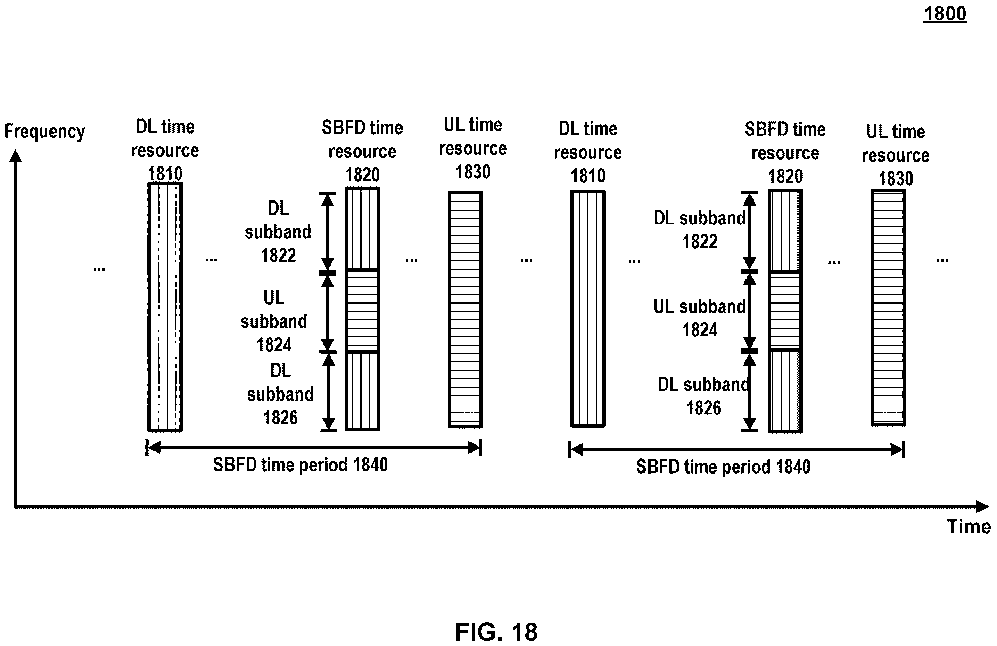

FIG. 18 illustrates an example of time-frequency resources 1800 per an aspect of the present disclosure. Time-frequency resources 1800 may be associated with a cell. A base station may serve, manage, or operate the cell.

In the example of FIG. 18, a downlink (DL) time resource 1810, a subband full duplex (SBFD) time resource 1820, and an uplink (UL) time resource 1830 are included in an SBFD time period 1840. DL time resource 1810, SBFD time resource 1820, UL time resource 1830, and SBFD time period 1840 are according to the example embodiments in FIG. 17 (e.g., DL time resource 1710, SBFD time resource 1720, UL time resource 1730, and SBFD time period 1740).

As illustrated in FIG. 18, SBFD time resource 1820 may include a downlink (DL) subband 1822, an uplink (UL) subband 1824, and a downlink (DL) subband 1826. DL subband 1822 and DL subband 1826 are according to the example embodiments in FIG. 17 (e.g., DL subband 1722). UL subband 1824 is according to the example embodiments in FIG. 17 (e.g., UL subband 1724). In an example, a number of frequency resources in DL subband 1822 and a number of frequency resources in DL subband 1826 may be different, e.g., 24 physical resource blocks (PRBs) in DL subband 1822 and 48 PRBs in DL subband 1826. In another example, a number of frequency resources in DL subband 1822 and a number of frequency resources in DL subband 1826 may be the same, e.g., 48 PRBs in DL subband 1822 and 48 PRBs in DL subband 1826.

One or more DL time resources, of one or more DL time resources 1810, one or more SBFD time resources, of one or more SBFD time resources 1820, and/or one or more UL time resources, of one or more UL time resources 1830, within SBFD time period 1840 may also be referred as a pattern or an SBFD pattern as described in FIG. 17 (e.g., the SBFD pattern).

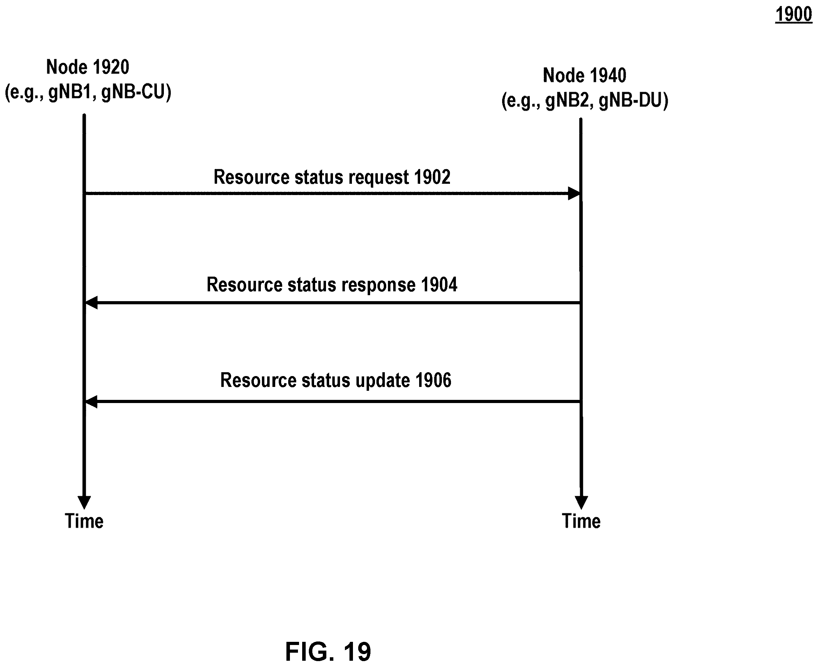

FIG. 19 illustrates an example of a resource status reporting procedure 1900 between a node 1920 and a node 1940 per an aspect of the present disclosure. Resource status reporting procedure 1900 may also be referred to as a resource status reporting initiation procedure or a resource status update procedure. Resource status reporting procedure 1900 may be associated with a cell. A base station may serve, manage, or operate the cell.

In the example of FIG. 19, resource status reporting procedure 1900 may be initiated by node 1920. During resource status reporting procedure 1900, node 1920 may communicate with node 1940. In an example, node 1920 may be a RAN node, or a core network node. In an example, node 1940 may be another RAN node. The RAN node may also be referred to as a next generation RAN (NG-RAN) node. Examples of the RAN node may be a base station (e.g., a gNB), an access point, a transmission reception point (TRP), a distributed unit of a base station (e.g., a gNB distributed unit (gNB-DU), a central unit of a base station (e.g., a gNB central unit (gNB-CU), etc. An example of the core network node is an access and mobility management function (AMF). In an example, node 1920 may be a first gNB or a gNB-CU. In an example, node 1940 may be another gNB (e.g., a second gNB) or a gNB-DU.

As shown in FIG. 19, node 1920 may transmit to node 1940, a resource status request 1902. Resource status request 1902 may be an Xn application protocol (XnAP), an F1 application protocol (F1AP), or a next generation application protocol (NGAP) message. Resource status request 1902 may be a request for a resource status of a cell associated with node 1940. For example, resource status request 1902 may comprise a list of one or more cells associated with node 1940. In an example, the one or more cells may be associated with one or more wireless devices. The one or more cells may also be referred to as serving cells, such as, e.g., a special cell (spCell), a primary cell (PCell), a primary secondary cell (PSCell), a secondary cell (SCell), etc. A cell may be indicated (or identified) by a cell identifier (cell ID). Examples of the cell ID may be a physical cell ID (PCI) or a cell global ID (CGI). For example, resource status request 1902 may comprise a cell ID (e.g., a PCI) of each cell included in list of the one or more cells.

In another example, resource status request 1902 may further comprise a time period. In an example, the time period may be referred to as a measurement period (or an estimation period), an averaging window, or a measurement window of the resource status. For example, node 1940 may estimate, determine, calculate, or measure the resource status during the time period. In another example, the time period may be referred to as a periodicity, a repetition periodicity, or a reporting periodicity of the resource status. For example, node 1940 may transmit the resource status at least once every time period.

The resource status may also be referred to as a measurement, a load measurement, a load estimation, a radio resource status, a resource usage, a radio resource usage, a channel usage, a physical channel usage, a resource block (RB) usage, or a physical resource block (PRB) usage. The resource status may be expressed in (or as) a ratio or a percentage of a resource usage (or a radio resource usage) in a cell. For example, the resource status may be a ratio of resource blocks (RBs) used in a cell to a total number of RBs of the cell during a time period. In another example, the resource status may be a percentage of RBs used in a cell from among total RBs of the cell during a time period.

The resource status may be associated with (or depend on or requested for) a direction of signals, e.g., DL signals, UL signals, etc. For example, the resource status may be separately estimated for DL RBs in the cell and UL RBs in the cell. In an example, the resource status may be a ratio of DL RBs used in a cell to a total number of RBs of the cell during a time period. In an example, the resource status may be a ratio of UL RBs used in a cell to a total number of RBs of the cell during a time period.

The resource status may be associated with (or depend on or requested for) a synchronization signal/physical broadcast channel block (SSB) area in a cell, a slice in a cell, or a multiple input multiple output (MIMO) in cell (e.g., for an uplink (UL) MIMO in a cell and/or a downlink (DL) MIMO in a cell). The slice may also be referred to as a network slice.

In an example a slice (or a network slice) may be a logical (or virtual) network (or a connection) for supporting different services associated with different requirements. For example, the requirements may be related to a bit rate, latency, and/or reliability of a service. The slice may be based on a network slicing mechanism. For example, the network slicing mechanism may divide (or split) a single network connection into multiple logical (or virtual) connections (or slices). The multiple logical connections (or the slices) may provide (or allocate or assign) different amounts of resources for different types of traffic. Examples of the resources may be resource blocks, carrier frequencies, beams, bandwidths, power, antennas, antenna panels, etc.

An example of a slice may be a slice for serving enhanced mobile broadband (eMBB) user. Another example of a slice may be a slice for serving a massive machine type communications (mMTC) user. Yet another example of a slice may be a slice for serving an ultra-reliable low latency communication (URLLC) user, etc. In an example, a slice may allocate a large bandwidth (e.g., a bandwidth (BW) above a first BW threshold) for a high latency and high reliability service to a critical internet of things (IoT) device (or user). In another example, a slice may allocate a small bandwidth (e.g., a bandwidth below a second BW threshold) for a low latency service to a massive loT device (or user).

A slice (or a network slice) may be uniquely identified by a slice identifier. An example of the slice identifier may be a network slice selection assistance information (NSSAI) or a single-network slice selection assistance information (S-NSSAI). For example, an S-NSSAI of a slice may indicate at least a type of the slice, e.g., a slice/service type (SST). An S-NSSAI may further (e.g., optionally) include a slice differentiator (SD). For example, the SD may differentiate amongst multiple slices. In an example, the SST may comprise 8 bits and the SD may comprise 24 bits.

Examples of the resource status may be an SSB area DL total resource block (PRB) usage, an SSB area UL total PRB usage, an SSB area DL guaranteed bit rate (GBR) PRB usage, an SSB area UL GBR PRB usage, an SSB area DL non-guaranteed bit rate (non-GBR) PRB usage, an SSB area UL non-GBR) PRB usage, a slice DL Total PRB allocation, a slice UL Total PRB allocation, a single - network slice selection assistance information (S-NSSAI) DL GBR PRB usage, an S-NSSAI UL GBR PRB usage, a S-NSSAI DL non-GBR PRB usage, an S-NSSAI UL non-GBR PRB usage, a DL Total PRB usage for MIMO, an UL Total PRB usage for MIMO, a DL GBR PRB usage for MIMO, an UL GBR PRB usage for MIMO, a DL non-GBR PRB usage for MIMO, or an UL non-GBR PRB usage for MIMO, etc.

As shown in FIG. 19, node 1920 may receive, from node 1940, a resource status response 1904. Resource status response 1904 may be an Xn application protocol (XnAP), an F1 application protocol (F1AP), or a next generation application protocol (NGAP) message. In an example, resource status response 1904 may indicate that node 1940 has initiated (or started or successfully started or successfully initiated) a measurement (e.g., a resource status) requested by node 1920 (e.g., in resource status request 1902). In another example, resource status response 1904 may indicate that node 1940 may initiate (or start or commence) a measurement (e.g., a resource status) requested by node 1920 (e.g., in resource status request 1902).

As shown in FIG. 19, node 1920 may receive from node 1940, a resource status update 1906. Resource status update 1906 may be an Xn application protocol (XnAP), an F1 application protocol (F1AP), or a next generation application protocol (NGAP) message. In an example, resource status update 1906 may comprise a result of the measurement (e.g., a resource status) requested by node 1920 (e.g., in resource status request 1902). The result of the measurement may be associated with (or related to) an SSB, a slice, or a MIMO in a cell. For example, resource status update 1906 may further comprise an SSB identifier (e.g., an SSB index) associated with the measurement and/or a slide identifier (e.g., S-NSSAI) associated with the measurement.

A cell may operate in a subband full duplex (SBFD) mode. The SBFD mode may comprise at least one DL subband (e.g., DL subband 1722 in FIG. 17, and DL subband 1822 and DL subband 1826 in FIG. 18) and at least one UL subband (e.g., UL subband 1724 in FIG. 17 and UL subband 1824 in FIG. 18). The at least one DL subband and the at least one UL subband may be comprised in the same time resource (e.g., SBFD time resource 1720 in FIG. 17 and SBFD time resource 1820 in FIG. 18).

A base station may manage, serve, or operate the cell. For example, the base station may transmit DL signals (e.g., a CSI-RS, a PDSCH, a PDCCH, etc.) in a DL subband of a cell during an SBFD symbol. The base station may receive UL signals (e.g., an SRS, a PUSCH, a PUCCH, a PRACH, etc.) in an UL subband of the cell during the SBFD symbol.

In an example, DL signals in the DL subband may interfere with a reception of the UL signals in the UL subband (e.g., at the base station). For example, transmissions of signals in the DL subband may cause radio emissions in the UL subband. The radio emissions may also be referred to as self-interference or a densitization of a receiver (e.g., at the base station). In another example, transmissions of the DL signals in a DL subband or in a DL symbol of a neighbor cell may cause interference in the UL subband. The interference from the neighbor cell may also be referred to as a cross-link interference (CLI) or an inter-cell interference. For example, interference (e.g., the radio emissions and/or the interference from the neighbor cell) from the DL signals may degrade reception quality of the UL signals at the base station in the cell.

In another example, UL signals in the UL subband (e.g., from a first wireless device) may interfere with a reception of the DL signals in the DL subband (e.g., by a second wireless device). For example, transmissions of signals in the UL subband may cause radio emissions in the UL subband. In an example, the first wireless device and the second wireless device may be served by (or belong to) the same cell. In another example, the first wireless device and the second wireless device may be served by (or belong to) different cells. For example, interference (e.g., the radio emissions) from the UL signals may degrade reception quality of the DL signals at the second wireless device.

Examples of the reception quality may be a signal to noise ratio (SNR), a signal to interference and noise (SINR), a block error rate (BLER), etc. The interference may increase with the increase in load in the cell. The load in the cell may depend on (or be based on) a number of wireless devices in the cell, allocated radio resources in the cell (e.g., a number of resource blocks allocated in the cell), transmit power of the DL signals, transmit power of the UL signals, etc.

The base station may reduce the load in the cell, e.g., by releasing radio resources (e.g., resource blocks) in the DL subband and/or in the UL subband. The radio resources may be allocated to (or assigned to) one or more wireless devices in the cell. For example, the base station may release one or more of the radio resources in the DL subband. To maintain user performance (e.g., downlink user bit rate), the base station may reallocate one or more radio resources (e.g., resource blocks) to the one or more wireless devices in the DL symbols. In another example, the base station may release resource blocks in the UL subband. To maintain user performance (e.g., uplink user bit rate), the base station may reallocate one or more radio resources (e.g., resource blocks) to the one or more wireless devices in the UL symbols.

For example, a reduction in the load in the DL subband may improve the reception quality of the UL signals (e.g., decrease an UL BLER, increase an UL SNR, and/or increase an UL SINR, etc.) in the UL subband. In another example, a reduction in the load in the UL subband may improve the reception quality of the DL signals (e.g., decrease a DL BLER, increase a DL SNR, and/or increase a DL SINR, etc.) in the DL subband.

On the one hand, the reduction in the load (e.g., based on a resource reallocation) in the DL subband and/or in the UL subband may reduce (or mitigate or lower) the interference, e.g., at the base station and/or at a wireless device. On the other hand, a mitigation of the interference based on the resource reallocation may lead to uneven allocation of radio resource across DL symbols, UL symbols, the DL subband and/or the UL subband in the cell.

In the existing technologies, a base station (e.g., a gNB, a gNB-DU, etc.) estimates (or measured or calculates) a load in a cell for DL radio resources (e.g., a DL resource block usage) and for UL radio resources (e.g., an UL resource block usage). The base station transmits the load in the cell to another (a target or a neighbor) base station (e.g., another gNB, a gNB-CU, etc.). For example, the neighbor base station may use the load in the cell for one or more operation tasks. Examples of the one or more operation tasks may be a cell change of a wireless device, an admission control of a wireless device, etc. Examples of the cell may be a handover, an RRC connection release with redirection, an RRC connection reestablishment, etc.

In the existing technologies, a base station may estimate a combined DL load for the DL radio resources across DL symbols and one or more DL subbands (e.g., in SBFD symbols). For example, the combined DL load (or a common or a generic DL load) may include (or indicate) a usage of DL resources in the DL symbols as well as in the one or more DL subbands (e.g., in the SBFD symbols). The combined DL load based on the existing technologies may not provide information about a DL resource block usage exclusively in one or more DL subbands in the cell.

In the existing technologies, a base station may estimate a combined UL load for the UL radio resources across UL symbols and one or more UL subbands (e.g., in SBFD symbols). For example, the combined UL load (or a common or a generic DL load) may include (or indicate) a usage of UL resources in the UL symbols as well as in the one or more UL subbands (e.g., in the SBFD symbols). The combined UL load based on the existing technologies may not provide information about an UL resource block usage exclusively in one or more UL subbands in the cell.

In the existing technologies, a target base station may not determine actual usage of radio resources in SBFD symbols based on the combined DL load and/or the combined UL load. As a result, the base station may incorrectly execute (or perform) the one or more tasks based on the combined DL load and/or the combined UL load. In an example, an incorrect execution of the one or more tasks may lead to a cell change failure (e.g., a handover failure). In another example, an incorrect execution of the one or more tasks may lead to a call dropping, a degradation of bit rates of one or more existing wireless devices, etc.

### <Replace with a detailed description of the problem illustrated in FIG. 19>.

In the existing technologies, a base station (e.g., a gNB, a gNB-DU, etc.) may estimate a combined DL resource block of DL resource blocks usage across DL symbols and SBFD symbols in a cell. In another example, the base station (e.g., a gNB-DU, a gNB) may estimate a combined UL resource block usage of UL resource blocks across UL symbols and SBFD symbols in a cell. The combined DL resource block usage and/or the combined DL resource block usage in the cell may be used by a target base station (e.g., another gNB, a gNB-CU, etc.) for one or more radio operations (e.g., an admission control, a cell change (e.g., a handover, etc.) of a wireless device, a load balancing, etc).

Based on an existing load estimation mechanism, the target base station (e.g., a target gNB, a gNB-CU, etc.) may incorrectly perform the one or more radio operations. For example, an incorrect decision by the target base station may result in a cell change failure (e.g., a handover failure), a call dropping, an increase in interference in a network, etc.

Embodiments of the present disclosure are related to an approach for solving the problems described above. These and other features of the present disclosure are described further below.

In an example embodiment, a first node may receive from a second node, a request for a resource status of a cell of the first node. The first node may transmit to the second node, a response comprising a ratio of subband full duplex (SBFD) frequency resources used in the cell.

In an example embodiment, a second node may transmit to a first node, a request for a resource status of a cell of the first node. The second node may receive from the second node, a response comprising a ratio of subband full duplex (SBFD) frequency resources used in the cell.

The first node (e.g., a gNB, a gNB-DU, etc.) may explicitly estimate the resource status of the cell in SBFD frequency resources (e.g., a ratio of a usage of SBFD frequency resources). The second node (e.g., a target gNB, a gNB-CU, etc.) based on the resource status of the cell in SBFD frequency resources may determine a load (e.g., a usage of resource blocks) in SBFD symbols of the cell. The second node based on the resource status of the cell in SBFD frequency resources may distinguish between a load in non-SBFD symbols (e.g., DL symbols and/or in UL symbols) and a load in SBFD symbols in the cell of the first node. The second node may improve (or enhance) one or more radio operations, e.g., a reduction in a cell change failure rate, a reduction in a call dropping rate, a reduction in interference, etc.

In an example embodiment, a first node may receive from a second node, a request for a resource status of a cell of the first node. The first node may transmit to the second node, a response comprising a ratio of frequency resources used in the cell to total frequency resources used in the cell. The total frequency resources may not comprise subband full duplex (SBFD) frequency resources.

In an example embodiment, a second node may transmit to a first node, a request for a resource status of a cell of the first node. The second node may receive from the second node, a response comprising a ratio of frequency resources used in the cell to total frequency resources used in the cell. The total frequency resources may not comprise subband full duplex (SBFD) frequency resources.

The first node (e.g., a gNB, a gNB-DU, etc.) may estimate the resource status of the frequency resources of the cell (e.g., a ratio of the frequency resources used in DL or in UL symbols) without including the SBFD frequency resources of the cell. The cell may support the SBFD, e.g., one or more DL subbbands and one or more UL subbands. The resource status of the frequency resources of the cell without including the SBFD frequency resources of the cell may simplify an implementation of a base station and may reduce complexity of the base station.

In an example embodiment, a first node may receive from a second node, a request for a resource status of a cell of the first node. The cell may operate in subband full duplex (SBFD). The first node may determine a percentage of SBFD frequency resources used in the cell from among total frequency resources of the cell during a time period. The first node may transmit to the second node, a response comprising the percentage of the SBFD frequency resources used in the cell from among the total frequency resources of the cell.

The first node (e.g., a gNB, a gNB-DU, etc.) may explicitly estimate the resource status of the cell in SBFD frequency resources (e.g., a percentage of a usage of SBFD frequency resources from among total frequency resources of the cell during a time period). The percentage of the usage of SBFD frequency resources may more precisely indicate a usage of SBFD frequency resources in the cell. The second node based on the percentage of SBFD frequency resources used in the cell may determine a variation of the usage of SBFD frequency resources over time. The second node may further improve (or enhance) one or more radio operations, e.g., a reduction in a cell change failure rate, a reduction in a call dropping rate, a reduction in interference, etc.

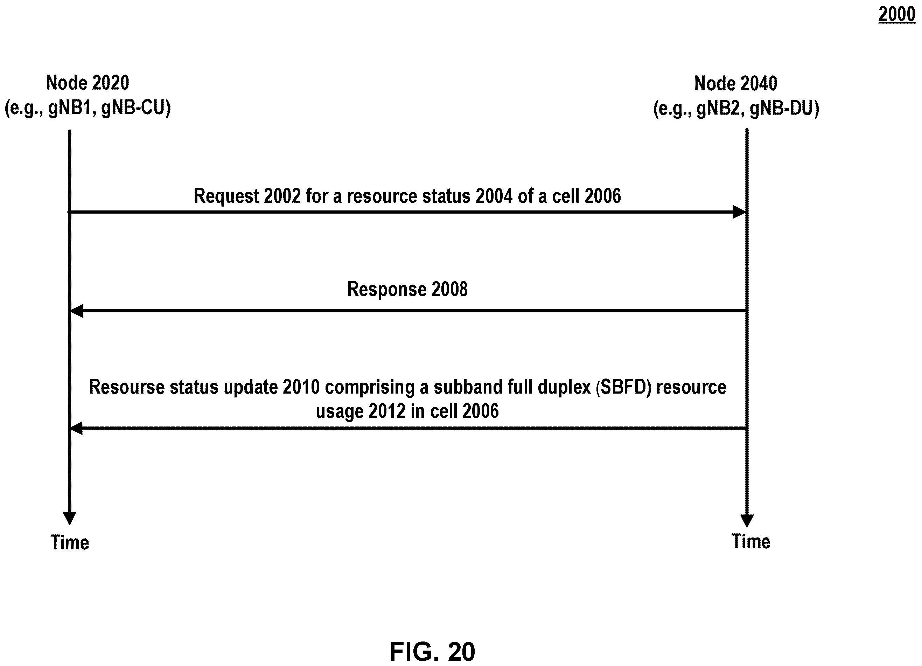

FIG. 20 illustrates an example of a resource status reporting procedure 2000 between a node 2020 and a node 2040 as per an aspect of an embodiment of the present disclosure. The features illustrated in FIG. 20 may be combined with the features previously discussed with reference to FIGs. 17, 18, and/or 19.

As shown in FIG. 20, node 2020 may transmit to node 2040, a request 2002 for a resource status 2004 of a cell 2006. Node 2020 may receive from node 2040, a response 2008. Node 2020 may receive from node 2040, a resource status update 2010 comprising a subband full duplex (SBFD) resource usage 2012 in cell 2006.

Resource status reporting procedure 2000 may be associated with a cell. A base station (e.g., a node 2040, a gNB-DU, a gNB, gNB2, etc.) may serve, manage, or operate a plurality of cells comprising the cell. The base station (e.g., the node 2040, the gNB-DU, the gNB, etc.) may perform the resource status reporting procedure 2000 for each of the plurality of cells. Resource status reporting procedure 2000 is according to the example embodiments in FIG. 19 (e.g., resource status reporting procedure 1900).

In the example of FIG. 20, resource status reporting procedure 2000 may be initiated by a node 2020 (e.g., gNB1, a gNB-CU). During resource status reporting procedure 2000, the node 2020 may communicate with the node 2040. The node 2020 corresponds to the node 1920 in FIG. 19. The node 2040 corresponds to the node 1940 in FIG. 19.

Request 2002 is according to the example embodiments in FIG. 19 (e.g., resource status request 1902). Resource status 2004 is according to the example embodiments in FIG. 19 (e.g., the resource status, the measurement, the load, the radio resource usage, the resource block usage, etc.). Cell 2006 may be associated with (or managed by or served by or controlled by) node 2040. Cell 2006 is according to the example embodiments in FIG. 19 (e.g., the cell, the one or more cells associated with node 1920).

Cell 2006 may operate in subband full duplex (SBFD). The SBFD may also be referred to as an SBFD operation, an SBFD mode, or an SBFD procedure (as described above).

The SBFD may comprise at least one SBFD time resource during an SBFD time period. In a frequency domain, the SBFD time resource (e.g., an SBFD symbol) may include at least one DL subband and at least one UL subband. The SBFD is according to the example embodiments in FIG. 17 and/or in FIG. 18. The SBFD time resource, the SBFD time period, the at least one DL subband, and the at least one UL subband are according to the example embodiments in FIG. 17 (e.g., SBFD time resource 1720, SBFD time period 1740, DL subband 1722, and UL subband 1724). The SBFD time resource, the SBFD time period, the at least one DL subband, and the at least one UL subband are according to the example embodiments in FIG. 18 (e.g., SBFD time resource 1820, SBFD time period 1840, DL subband 1822, DL subband 1826, and UL subband 1824).

In an example, request 2002 may comprise one or more identifiers associated with resource status 2004. For example, an identifier of resource status 2004 may indicate type of a measurement, e.g., a ratio of subband full duplex (SBFD) frequency resources used in the cell.

In an example, request 2002 may comprise an identifier (e.g., a PCI, a CGI, etc., as per 1902 in FIG. 19?) of cell 2006. The PCI may also be referred to as an NR PCI. The CGI may also be referred to as an NR CGI. In an example, the NR PCI may be indicated by an integer. A value of the integer may vary from 0 to 1007 with a granularity of 1, e.g., 1008 possible values of the NR PCI. In another example, the NR PCI may be indicated by a bit string, e.g., a size of 32 bits. In an example, a CGI (or the NR CGI) may comprise an identity of a public land mobile network (PLMN) and the NR PCI. For example, the identity of the PLMN (e.g., the PLMN ID) may be indicated by a string or an octet string, e.g., octet string of size 3 octets.

In an example, request 2002 may include a time period of resource status 2004. The time period of resource status 2004 is according to the example embodiments as described above (e.g., the time period of the resource status, the measurement period of the resource status, reporting periodicity of the resource status, etc.). For example, the time period of the resource status may comprise a value between 500ms and 10000ms. Examples of the values of the time period may be 500ms, 1000ms, 2000ms, 5000ms, 10000ms, or any other reasonable value.

In an example, request 2002 may include an SSB identifier (e.g., an SSB index) associated with resource status 2004. For example, the SSB identifier may indicate an area (or a zone or a geographical location) served by (or covered by) an SSB beam (or a beam of an SSB or a beam associated with an SSB) in cell 2006. The SSB identifier (e.g., an SSB index) may be indicated by an integer from 0 to 63 with a granularity of 1, e.g., 64 possible values of the SSB index. An area (or a zone) served by (or covered by) an SSB beam may be referred to as an SSB area, an area of an SSB, or an SSB zone.

In an example, request 2002 may include information associated with (or related) to a slice (or a network slice). For example, resource status 2004 may be associated with (or related to) the slice in cell 2006. For example, the information associated with the slice may comprise an identifier of the slice (e.g., S-NSSAI as described above).

In an example, request 2002 may include information associated with the SBFD (or the SBFD operation or the SBFD mode as described above). For example, resource status 2004 may be associated with (or related to) a usage of SBFD resources (e.g., an SBFD time resource, a DL subband, and/or an UL subband) in cell 2006. For example, request 2002 may comprise a filed indicating an SBFD resource usage (e.g., a usage of RBs in SBFD symbols), a DL subband resource usage (e.g., a usage of RBs in DL subbands), and/or an UL subband resource usage (e.g., a usage of RBs in UL subbands).

As shown in FIG. 20, node 2020 may receive from node 2040, response 2008. Response 2008 is according to the example embodiments in FIG. 19 (e.g., resource status response 1904). For example, response 2008 may indicate that node 2040 has initiated (or started or successfully started or successfully initiated) a measurement (e.g., the resource status) requested by node 2020 (e.g., in request 2002). In another example, response 2008 may indicate that node 2040 may initiate (or start or commence) a measurement (e.g., the resource status) requested by node 2020 (e.g., in request 2002). In an example, node 2020 may receive from node 2040, response 2008 in response to request 2002. In another example, request 2008 may be an optional message. For example, node 2040 may initiate a measurement (e.g., resource status 2004) based on request 2002, but node 2040 may not transmit (or send) response 2008. In this example, node 2020 may receive from node 2040, response 2008.

As shown in FIG. 20, node 2020 may receive from node 2040, resource status update 2010. Resource status update 2010 is according to the example embodiments in FIG. 19 (e.g., resource status update 1906). In an example, node 2020 may receive resource status update 2010 after response 2008. In another example, node 2020 may receive resource status update 2010 prior to response 2008, e.g., after sending request 2002 but before receiving response 2008. In yet another example, node 2020 may receive resource status update 2010 periodically. For example, the periodicity may correspond to (or be based on) the time period comprised in request 2002. In yet another example, node 2020 may receive resource status update 2010, at least L1 number of times. In an example, L1=1. In another example, L1 ≤ Lmax, e.g., Lmax = 4. In an example, Lmax may be pre-defined. In another example, node 2040 may receive from node 2020, a value of Lmax, e.g., in request 2002.

Resource status update 2010 may comprise a subband full duplex (SBFD) resource usage 2012 in cell 2006. SBFD resource usage 2012 may be referred to as a measurement, a resource status, a radio resource status, or an RB usage associated with an SBFD resource in cell 2006.

In an example, node 2040 may determine (or estimate or measure or calculate) SBFD resource usage 2012 in cell 2006 based on request 2002 (e.g., based on resource status 2004). For example, node 2040 may determine (or estimate or measure or calculate) SBFD resource usage 2012 in cell 2006 during a time period. In one example, node 2040 may receive from node 2020, the time period. For example, the time period may correspond to (or be based on) the time period of resource status 2004 comprised in request 2002 (as described above). In another example, node 2040 may receive from a node (other than node 2040), the time period. Examples of the node may be an operational and maintenance (ONM) node, a core network node, or a self-organizing network (SON) node.

In an example, node 2040 may determine (or estimate or measure or calculate) SBFD resource usage 2012 in cell 2006 based on whether cell 2006 is capable of or configured with an SBFD (e.g., with at least one DL subband and at least one UL subband). For example, node 2040 may determine whether cell 2006 supports (or is capable of) the SBFD based on a declaration (or a specification) of a manufacturer (or a vendor of node 2040). In another example, node 2040 may configure cell 2006 with the SBFD (e.g., with at least one DL subband and at least one UL subband). In yet another example, a node (e.g., an ONM node, a SON node, or a core network node) may configure cell 2006 with the SBFD (e.g., with at least one DL subband and at least one UL subband).

In response to determining that cell 2006 supports (or is capable of or is configured with) the SBFD, node 2040 may determine (or estimate or measure or calculate) SBFD resource usage 2012 in cell 2006. In this case, node 2040 may include SBFD resource usage 2012 in cell 2006 in resource status update 2010.

In response to determining that cell 2006 does not support (or is not capable of or is not configured with) the SBFD, node 2040 may not determine (or estimate or measure or calculate) SBFD resource usage 2012 in cell 2006. In this case, node 2040 may not include SBFD resource usage 2012 in cell 2006 in resource status update 2010. In an example, node 2040 may transmit to node 2020, a resource status failure message. For example, the resource status failure message may indicate that SBFD resource usage 2012 in cell 2006 is not initiated (or performed or completed or successful).

In an example, resource status update 2010 may comprise one or more identifiers associated with SBFD resource usage 2012. In an example, the one or more identifiers may be based on (or related to or correspond to) the one or more identifiers associated with resource status 2004 comprised in request 2002 (as described above). Node 2020 may identify (or determine) SBFD resource usage 2012 based on the one or more identifiers (associated with SBFD resource usage 2012) comprised in resource status update 2010.

In an example, resource status update 2010 may comprise an identifier of cell 2006 (e.g., a PCI, a CGI, an NR PCI, NR CG, etc., as described above). Node 2020 may identify (or determine) a cell (e.g., cell 2006) based on the identifier of cell 2006. SBFD resource usage 2012 comprised in resource status update 2010 may be associated with cell 2006.

In an example, SBFD resource usage 2012 in cell 2006 may indicate a usage of frequency resources (e.g., PRBs) per cell for one or more subbands associated with (or belong to) the SBFD, a usage of frequency resources (e.g., PRBs) per SSB area in one or more subbands associated with (or belong to) the SBFD, a usage of frequency resources (e.g., PRBs) per slice in one or more subbands associated with (or belong to) the SBFD, and/or a usage of frequency resources (e.g., PRBs) for MIMO in one or more subbands associated with (or belong to) the SBFD.

In an example, SBFD resource usage 2012 in cell 2006 may be a ratio of subband full duplex (SBFD) frequency resources used in cell 2006. In another example, the ratio of SBFD frequency resources used in cell 2006 may be determined during a time period (Tm) (e.g., the time period as described above). The time period (Tm) may also be referred to as a measurement time (or a measurement period) of the ratio of SBFD frequency resources used in cell 2006. For example, node 2040 may determine the ratio of SBFD frequency resources used in cell 2006 during Tm. In yet another example, the ratio of SBFD frequency resources used in cell 2006 may be a ratio of SBFD frequency resources used in cell 2006 to total frequency resources of cell 2006 during the time period (Tm). In an example, the ratio of SBFD frequency resources used in cell 2006 may have a value range between 0 and 1. In an example, the granularity of the value range of the ratio may be 0.0001, 0.001, 0.01, or 0.1.

Frequency resources (e.g., PRBs) used in cell 2006 during Tm may be referred to as the frequency resources (e.g., PRBs) used for a transmission of DL signals and/or a reception of UL signals in cell 2006 during Tm. Examples of the DL signals may be a PDSCH, a PDCCH, a PBCH, or a reference signal (e.g., an SSB, a CSI-RS, a PRS, a DMRS, etc.). Examples of the UL signals may be a PUSCH, a PUCCU, or a PRACH, a reference signal (e.g., an SRS, a DMRS, etc.).

In an example, the DL signals may be used (or allocated or assigned or scheduled) for DL traffic (e.g., data, control information, etc.). In another example, the UL signals may be used (or allocated or assigned or scheduled) for UL traffic (e.g., data, control information, etc.). For example, DL frequency resources (e.g., DL PRBs) used in cell 2006 during Tm may be referred to as the DL frequency resources (e.g., DL PRBs) used for a transmission of DL signals in cell 2006 during Tm. In another example, UL frequency resources (e.g., DL PRBs) used in cell 2006 during Tm may be referred to as the UL frequency resources (e.g., UL PRBs) used for a reception of UL signals in cell 2006 during Tm.

In an example, a total number of SBFD frequency resources (e.g., PRBs in SBFD resources) used (e.g., for a transmission of DL signals and/or a reception of UL signals) in cell 2006 during Tm may be N₁₁. As an example, a total number of frequency resources (e.g., PRBs in all resources including SBD resources) in cell 2006 (e.g., available in cell 2006) during Tm may be Nₜₒₜ. In this example, the ratio of SBFD frequency resources used in cell 2006 may be expressed as: N₁₁/Nₜₒₜ.

In another example, the total number of SBFD frequency resources (e.g., PRBs in SBFD resources) used in cell 2006 during Tm may be N₁₁ = m*N_{SBFD}. Where, m may be total SBFD frequency resources used in an SBFD time resource (e.g., an SBFD symbol) during Tm and N_{SBFD} may be total SBFD time resources during Tm.

In another example, the total number of SBFD frequency resources (e.g., PRBs in SBFD resources) used in cell 2006 during Tm may be N₁₁= Σmⱼ. Where, mⱼ may be total SBFD frequency resources used in an SBFD time resource j (e.g., an SBFD symbol) during Tm and N_{SBFD} may be total SBFD time resources during Tm (e.g., (1 ≤ j ≤ N_{SBFD})).

In an example, Nₜₒₜ = n₁₁*N_{DL} + n₁₂*N_{UL} + n₂₃*N_{SBFD}. Where, n₂₁ may be total number of DL frequency resources (e.g., PRBs in a DL symbo) in cell 2006 (e.g., available in cell 2006) during Tm, n₂₂ may be total number of UL frequency resources (e.g., PRBs in an UL symbol) in cell 2006 (e.g., available in cell 2006) during Tm, n₂₃ may be total SBFD frequency resources (e.g., PRBs) in an SBFD time resource (e.g., an SBFD symbol) in cell 2006 (e.g., available in cell 2006) during Tm, N_{DL} may be total SBFD time resources (e.g., SBFD symbols) during Tm, N_{UL} may be total SBFD time resources (e.g., SBFD symbols) during Tm, and N_{SBFD} may be total SBFD time resources (e.g., SBFD symbols) during Tm.

In an example, SBFD resource usage 2012 in cell 2006 may be a percentage of SBFD frequency resources used in cell 2006. In another example, the percentage of SBFD frequency resources used in cell 2006 may be determined during a time period (Tm) (e.g., the time period as described above). In yet another example, the percentage of SBFD frequency resources used in cell 2006 may be a percentage of SBFD frequency resources used in cell 2006 from among total frequency resources of cell 2006 during the time period (Tm). For example, the percentage of SBFD frequency resources used in cell 2006 may be expressed as: (N₁₁/Nₜₒₜ) % (where, N₁₁ and Nₜₒₜ are described above). In an example, the percentage of SBFD frequency resources used in cell 2006 may have a value range between 0% and 100%. In an example, the granularity of the value range of the percentage may be 0.1%, 1%, or 10%.

In an example, frequency resources may be physical resource blocks (PRBs), virtual resource blocks (VRBs), control channel elements (CCEs), resource elements (REs), subcarriers (SCs), or tones. A physical resource block (PRB) or a virtual resource block (VRB) may also be referred to as a resource blocks (RB).

In an example, the SBFD frequency resources of cell 2006 may be comprised in one or more uplink subbands, one or more downlink subbands, and/or one or more SBFD time resources of cell 2006. The one or more or more uplink subbands, the one or more downlink subbands, and/or the one or more SBFD time resources are according to the example embodiments in FIG. 17 (e.g., UL subband 1724, DL subband 1722, and SBFD time resource 1720), and/or in FIG. 18 (e.g., UL subband 1824, DL subband 1822, DL subband 1826, and SBFD time resource 1820).

In an example, the total frequency resources of cell 2006 may be comprised in one or more downlink time resources, one or more uplink time resources, and/or one or more SBFD time resources of cell 2006. In another example, the total frequency resources of cell 2006 may be comprised in one or more downlink time resources, one or more uplink time resources, and/or one or more SBFD time resources of cell 2006, during a time period (Tm). The one or more or more downlink time resources, the one or more uplink time resources, and/or the one or more SBFD time resources are according to the example embodiments in FIG. 17 (e.g., DL time resource 1710, UL time resource 1730, and SBFD time resource 1720), and/or in FIG. 18 (e.g., DL time resource 1810, UL time resource 1830, and SBFD time resource 1820).

In an example, the total frequency resources of cell 2006 may depend on a bandwidth of cell 2006. The bandwidth may also be referred to as a channel bandwidth, a transmission bandwidth, a carrier bandwidth, a cell bandwidth, etc. For example, the bandwidth may be expressed in Hertz (e.g., X11 MHz, X12 GHz, etc.) and/or in RBs (e.g., 11 RBs, 15 RBs, 24 RBs, 25 RBs, 38 RBs, 52 RBs, 188 RBs, 242 RBs, 270 RBs, 273 RBs, etc.). A number of RBs within a bandwidth may depend on numerology of a signal. Examples of the numerology may be a subcarrier spacing (SCS), a cyclic prefix (CP), a symbol duration, a slot length, etc. In an example, the bandwidth of cell 2006 may comprise 52 RBs. For example, the total frequency resources may be 52 RBs in a DL symbol and 52 RBs in an UL symbol. In another example, the total frequency resources may be 30 RBs in a DL subband and 20 RBs in an UL subband. The DL subband and the UL subband may be comprised in an SBFD symbol.

In an example, the ratio of SBFD frequency resources used in cell 2006 may be associated with (or related to) an SSB area (e.g., the SSB area as described above), a slice (e.g., the slice or the network slice as described above), a type of quality of service (QoS), and/or a multiple input and multiple output (MIMO). Examples of the type of QoS type may be a guaranteed bit rate (GBR), a non-guaranteed bit rate (non-GBR), a delay critical GBR, etc. Resources associated with the type of QoS may be referred to as a QoS resource type. For example, resources (e.g., DL PRBs and/or UL PRBs) allocated for a GBR (or a GBR service) may be referred to as GBR resources. In another example, resources (e.g., DL PRBs and/or UL PRBs) allocated for a non-GBR (or a non-GBR service) may be referred to as non-GBR resources. The MIMO may be related to (or comprised) a number of downlink antennas for downlink signals and/or a number of uplink antennas for uplink signals. For example, a MIMO configuration may be expressed in terms of N number of transmit antennas and M number of receive antennas.

In an example, the ratio of SBFD frequency resources used in cell 2006 may be a ratio of PRBs in SBFD symbols (e.g., DL subbands and UL subbands) used in cell 2006 to total PRBs of cell 2006 during the time period (Tm). In another example, the ratio of SBFD frequency resources used in cell 2006 may be a percentage of PRBs in SBFD symbols (e.g., DL subbands and UL subbands) used in cell 2006 from among a total PRBs of cell 2006 during Tm. The ratio or the percentage of the PRBs in SBFD symbols used in cell 2006 may also be referred to as a per cell total SBFD PRB usage or a per cell total SBFD PRB usage in percentage of the cell total PRB number.

In an example, the cell total PRB number may be referred to as (or may indicate) a total PRBs available (or supported) by a cell (e.g., by cell 2006) during Tm. The cell total PRB number may also be referred to as a cell capacity, a bandwidth capacity, or PRBs comprised within a bandwidth of a cell (e.g., cell 2006). For example, the cell total PRB number may indicate PRBs in DL symbols, UL symbols, and SBFD symbols, of a cell comprised within a bandwidth of the cell during Tm. In another example, the cell total PRB number may be referred to as (or may indicate) the total frequency resources (e.g., total PRBs, or all PRBs) of a cell (e.g., cell 2006) during Tm.

In an example, the ratio of SBFD frequency resources used in cell 2006 may be a ratio of PRBs in DL subbands (e.g., during SBFD symbols) used in cell 2006 to total PRBs of cell 2006 during the time period (Tm). In another example, the ratio of SBFD frequency resources used in cell 2006 may be a percentage of PRBs in DL subbands (e.g., during SBFD symbols) used in cell 2006 from among a total PRBs of cell 2006 during Tm. The ratio or the percentage of the PRBs in DL subbands (e.g., during SBFD symbols) used in cell 2006 may also be referred to as a per cell total DL subband PRB usage, a total DL subband PRB usage per cell, or a per cell total DL subband PRB usage in percentage of the cell total PRB number.

In an example, the ratio of SBFD frequency resources used in cell 2006 may be a ratio of PRBs in UL subbands (e.g., during SBFD symbols) used in cell 2006 to total PRBs of cell 2006 during the time period (Tm). In another example, the ratio of SBFD frequency resources used in cell 2006 may be a percentage of PRBs in UL subbands (e.g., during SBFD symbols) used in cell 2006 from among a total PRBs of cell 2006 during Tm. The ratio or the percentage of the PRBs in UL subbands (e.g., during SBFD symbols) used in cell 2006 may also be referred to as a per cell total UL subband PRB usage, a total UL subband PRB usage per cell, or a per cell total UL subband PRB usage in percentage of the cell total PRB number.

In an example, the ratio of SBFD frequency resources used in cell 2006 may be a ratio of SBFD frequency resources used in cell 2006 for a guaranteed bit rate (GBR) to total frequency resources of cell 2006 during the time period (Tm). For example, the ratio of SBFD frequency resources used in cell 2006 may be the ratio of PRBs in SBFD symbols (e.g., DL subbands and UL subbands) used in cell 2006 for a GBR to total PRBs of cell 2006 during the time Tm. In another example, the ratio of SBFD frequency resources used in cell 2006 may be a percentage of PRBs in SBFD symbols (e.g., DL subbands and UL subbands) used in cell 2006 for a GBR from among total PRBs of cell 2006 during Tm. The ratio or the percentage of the PRBs in SBFD symbols used in cell 2006 for the GBR may also be referred to as a per cell total SBFD GBR PRB usage, a total SBFD GBR PRB usage per cell, a total SBFD PRB usage for GBR per cell, or a per cell total SBFD GBR PRB usage in percentage of the cell total PRB number.

In an example, the ratio of SBFD frequency resources used in cell 2006 may be a ratio of SBFD frequency resources used in cell 2006 for a non-guaranteed bit rate (non-GBR) to total frequency resources of cell 2006 during the time period (Tm). For example, the ratio of SBFD frequency resources used in cell 2006 may be the ratio of PRBs in SBFD symbols (e.g., DL subbands and UL subbands) used in cell 2006 for a non-GBR to total PRBs of cell 2006 during the time Tm. In another example, the ratio of SBFD frequency resources used in cell 2006 may be a percentage of PRBs in SBFD symbols (e.g., DL subbands and UL subbands) used in cell 2006 for a non-GBR from among total PRBs of cell 2006 during Tm. The ratio or the percentage of the PRBs in SBFD symbols used in cell 2006 for the non-GBR may also be referred to as a per cell total SBFD non-GBR PRB usage, a total SBFD non-GBR PRB usage per cell, a total SBFD PRB usage for non-GBR per cell, or a per cell total SBFD non-GBR PRB usage in percentage of the cell total PRB number.

In an example, the ratio of SBFD frequency resources used in cell 2006 may be a ratio of DL subband frequency resources used in cell 2006 for a GBR to total frequency resources of cell 2006 during the time period (Tm). For example, the ratio of DL subband frequency resources used in cell 2006 may be the ratio of PRBs in DL subbands (e.g., DL subbands in SBFD symbols) used in cell 2006 for a GBR to total PRBs of cell 2006 during the time Tm. In another example, the ratio of DL subband frequency resources used in cell 2006 may be a percentage of PRBs in DL subbands (e.g., DL subbands in SBFD symbols) used in cell 2006 for a GBR from among total PRBs of cell 2006 during Tm. The ratio or the percentage of the DL subbands (e.g., DL subbands in SBFD symbols) used in cell 2006 for the GBR may also be referred to as a per cell total DL subband GBR PRB usage, a total DL subband PRB usage for GBR per cell, or a per cell total DL subband GBR PRB usage in percentage of the cell total PRB number.

In an example, the ratio of SBFD frequency resources used in cell 2006 may be a ratio of UL subband frequency resources used in cell 2006 for a GBR to total frequency resources of cell 2006 during the time period (Tm). For example, the ratio of UL subband frequency resources used in cell 2006 may be the ratio of PRBs in UL subbands (e.g., UL subbands in SBFD symbols) used in cell 2006 for a GBR to total PRBs of cell 2006 during the time Tm. In another example, the ratio of UL subband frequency resources used in cell 2006 may be a percentage of PRBs in UL subbands (e.g., UL subbands in SBFD symbols) used in cell 2006 for a GBR from among total PRBs of cell 2006 during Tm. The ratio or the percentage of the UL subbands (e.g., UL subbands in SBFD symbols) used in cell 2006 for the GBR may also be referred to as a per cell total UL subband GBR PRB usage, a total UL subband PRB usage for GBR per cell, or a per cell total UL subband GBR PRB usage in percentage of the cell total PRB number.

In an example, the ratio of SBFD frequency resources used in cell 2006 may be a ratio of DL subband frequency resources used in cell 2006 for a non-GBR to total frequency resources of cell 2006 during the time period (Tm). For example, the ratio of DL subband frequency resources used in cell 2006 may be the ratio of PRBs in DL subbands (e.g., DL subbands in SBFD symbols) used in cell 2006 for a non-GBR to total PRBs of cell 2006 during the time Tm. In another example, the ratio of DL subband frequency resources used in cell 2006 may be a percentage of PRBs in DL subbands (e.g., DL subbands in SBFD symbols) used in cell 2006 for a non-GBR from among total PRBs of cell 2006 during Tm. The ratio or the percentage of the DL subbands (e.g., DL subbands in SBFD symbols) used in cell 2006 for the non-GBR may also be referred to as a per cell total DL subband non-GBR PRB usage, a total DL subband PRB usage for non-GBR per cell, or a per cell total DL subband non-GBR PRB usage in percentage of the cell total PRB number.

In an example, the ratio of SBFD frequency resources used in cell 2006 may be a ratio of UL subband frequency resources used in cell 2006 for a non-GBR to total frequency resources of cell 2006 during the time period (Tm). For example, the ratio of UL subband frequency resources used in cell 2006 may be the ratio of PRBs in UL subbands (e.g., UL subbands in SBFD symbols) used in cell 2006 for a non-GBR to total PRBs of cell 2006 during the time Tm. In another example, the ratio of UL subband frequency resources used in cell 2006 may be a percentage of PRBs in UL subbands (e.g., UL subbands in SBFD symbols) used in cell 2006 for a non-GBR from among total PRBs of cell 2006 during Tm. The ratio or the percentage of the UL subbands (e.g., UL subbands in SBFD symbols) used in cell 2006 for the non-GBR may also be referred to as a per cell total UL subband non-GBR PRB usage, a total UL subband PRB usage for non-GBR per cell, or a per cell total UL subband non-GBR PRB usage in percentage of the cell total PRB number.

In an example, the ratio of SBFD frequency resources used in cell 2006 may be a ratio of PRBs in DL symbols (e.g., DL PRBs in DL symbols) used in cell 2006 to total PRBs of cell 2006 during the time period (Tm). In another example, the ratio of SBFD frequency resources used in cell 2006 may be a percentage of PRBs in DL symbols (e.g., DL PRBs in DL symbols) used in cell 2006 from among a total PRBs of cell 2006 during Tm. The ratio or the percentage of the PRBs in DL symbols used in cell 2006 may also be referred to as a per cell total DL PRB usage, a total DL PRB usage per cell, or a per cell total DL PRB usage in percentage of cell total PRB number. In this example, node 2040 may count (or calculate) the DL PRBs used only in DL symbols (e.g., PRBs in SBFD symbols may be excluded) during Tm for determining the ratio of SBFD frequency resources used in cell 2006.

In an example, the ratio of SBFD frequency resources used in cell 2006 may be a ratio of DL frequency resources used in cell 2006 for a GBR to total frequency resources of cell 2006 during the time period (Tm). For example, the ratio of DL frequency resources used in cell 2006 may be the ratio of PRBs in DL symbols (e.g., DL PRBs in DL symbols) used in cell 2006 for a GBR to total PRBs of cell 2006 during the time Tm. In another example, the ratio of DL frequency resources used in cell 2006 may be a percentage of PRBs in DL symbols (e.g., DL PRBs in DL symbols) used in cell 2006 for a GBR from among total PRBs of cell 2006 during Tm. The ratio or the percentage of the PRBs in DL symbols used in cell 2006 for the GBR may also be referred to as a per cell total DL GBR PRB usage, a total DL PRB usage for GBR per cell, or a per cell total DL GBR PRB usage in percentage of the cell total PRB number. In this example, node 2040 may count (or calculate) the DL PRBs used for the GBR only in DL symbols (e.g., PRBs in SBFD symbols may be excluded) during Tm for determining the ratio of SBFD frequency resources used in cell 2006.

In an example, the ratio of SBFD frequency resources used in cell 2006 may be a ratio of DL frequency resources used in cell 2006 for a non-GBR to total frequency resources of cell 2006 during the time period (Tm). For example, the ratio of DL frequency resources used in cell 2006 may be the ratio of PRBs in DL symbols (e.g., DL PRBs in DL symbols) used in cell 2006 for a non-GBR to total PRBs of cell 2006 during the time Tm. In another example, the ratio of DL frequency resources used in cell 2006 may be a percentage of DL symbols (e.g., DL PRBs in DL symbols) used in cell 2006 for a non-GBR from among total PRBs of cell 2006 during Tm. The ratio or the percentage of the PRBs in DL symbols used in cell 2006 for the non-GBR may also be referred to as a per cell total DL non-GBR PRB usage, a total DL PRB usage for non-GBR per cell, or a per cell total DL non-GBR PRB usage in percentage of the cell total PRB number. In this example, node 2040 may count (or calculate) the DL PRBs used for the non-GBR only in DL symbols (e.g., PRBs in SBFD symbols may be excluded) during Tm for determining the ratio of SBFD frequency resources used in cell 2006.

In an example, the ratio of SBFD frequency resources used in cell 2006 may be a ratio of SBFD frequency resources used in an SSB area of cell 2006 to total frequency resources of cell 2006 during the time period (Tm). For example, the ratio of SBFD frequency resources used in cell 2006 may be the ratio of PRBs in SBFD symbols (e.g., DL subbands and UL subbands) used in an SSB area of cell 2006 to total PRBs of cell 2006 during the time Tm. In another example, the ratio of SBFD frequency resources used in cell 2006 may be a percentage of PRBs in SBFD symbols (e.g., DL subbands and UL subbands) used in an SSB area of cell 2006 from among total PRBs of cell 2006 during Tm. The ratio or the percentage of the PRBs in SBFD symbols used in an SSB area of cell 2006 may also be referred to as a per SSB area SBFD PRB usage, an SBFD PRB usage in an SSB area, or a per SSB area SBFD PRB usage in percentage of the cell total PRB number.

In an example, the ratio of SBFD frequency resources used in cell 2006 may be a ratio of DL subband frequency resources used in an SSB area of cell 2006 to total frequency resources of cell 2006 during the time period (Tm). For example, the ratio of DL subband frequency resources used in cell 2006 may be the ratio of PRBs in DL subbands (e.g., DL subbands in SBFD symbols) used in an SSB area of cell 2006 to total PRBs of cell 2006 during the time Tm. In another example, the ratio of SBFD frequency resources used in cell 2006 may be a percentage of PRBs in DL subbands (e.g., DL subbands in SBFD symbols) used in an SSB area of cell 2006 from among total PRBs of cell 2006 during Tm. The ratio or the percentage of the PRBs in DL subbands (e.g., DL subbands in SBFD symbols) used in an SSB area of cell 2006 may also be referred to as a per SSB area DL subband PRB usage, a per SSB area DL subband PRB usage in percentage of the cell total PRB number, or a per SSB area DL subband total PRB usage in percentage of the cell total PRB number.

In an example, the ratio of SBFD frequency resources used in cell 2006 may be a ratio of UL subband frequency resources used in an SSB area of cell 2006 to total frequency resources of cell 2006 during the time period (Tm). For example, the ratio of UL subband frequency resources used in cell 2006 may be the ratio of PRBs in UL subbands (e.g., UL subbands in SBFD symbols) used in an SSB area of cell 2006 to total PRBs of cell 2006 during the time Tm. In another example, the ratio of SBFD frequency resources used in cell 2006 may be a percentage of PRBs in UL subbands (e.g., UL subbands in SBFD symbols) used in an SSB area of cell 2006 from among total PRBs of cell 2006 during Tm. The ratio or the percentage of the PRBs in DL subbands (e.g., DL subbands in SBFD symbols) used in an SSB area of cell 2006 may also be referred to as a per SSB area UL subband PRB usage, a per SSB area UL subband PRB usage in percentage of the cell total PRB number, or a per SSB area UL subband total PRB usage in percentage of the cell total PRB number.

In an example, the ratio of SBFD frequency resources used in cell 2006 may be a ratio of SBFD frequency resources used in an SSB area of cell 2006 for a GBR to total frequency resources of cell 2006 during the time period (Tm). For example, the ratio of SBFD frequency resources used in cell 2006 may be the ratio of PRBs in SBFD symbols (e.g., DL subbands and UL subbands) used in an SSB area of cell 2006 for a GBR to total PRBs of cell 2006 during the time Tm. In another example, the ratio of SBFD frequency resources used in cell 2006 may be a percentage of PRBs in SBFD symbols (e.g., DL subbands and UL subbands) used in an SSB area of cell 2006 for a GBR from among total PRBs of cell 2006 during Tm. The ratio or the percentage of the PRBs in SBFD symbols used in an SSB area of cell 2006 for the GBR may also be referred to as a per SSB area SBFD GBR PRB usage, an SBFD PRB usage for GBR in an SSB area, or a per SSB area SBFD GBR PRB usage in percentage of the cell total PRB number.

In an example, the ratio of SBFD frequency resources used in cell 2006 may be a ratio of SBFD frequency resources used in an SSB area of cell 2006 for a non-GBR to total frequency resources of cell 2006 during the time period (Tm). For example, the ratio of SBFD frequency resources used in cell 2006 may be the ratio of PRBs in SBFD symbols (e.g., DL subbands and UL subbands) used in an SSB area of cell 2006 for a non-GBR to total PRBs of cell 2006 during the time Tm. In another example, the ratio of SBFD frequency resources used in cell 2006 may be a percentage of PRBs in SBFD symbols (e.g., DL subbands and UL subbands) used in an SSB area of cell 2006 for a non-GBR from among total PRBs of cell 2006 during Tm. The ratio or the percentage of the PRBs in SBFD symbols used in an SSB area of cell 2006 for the non-GBR may also be referred to as a per SSB area SBFD non-GBR PRB usage, an SBFD PRB usage for non-GBR in an SSB area, or a per SSB area SBFD non-GBR PRB usage in percentage of the cell total PRB number.

In an example, the ratio of SBFD frequency resources used in cell 2006 may be a ratio of DL subband frequency resources used in an SSB area of cell 2006 for a GBR to total frequency resources of cell 2006 during the time period (Tm). For example, the ratio of DL subband frequency resources used in cell 2006 may be the ratio of PRBs in DL subbands (e.g., DL subbands in SBFD symbols) used in an SSB area of cell 2006 for a GBR to total PRBs of cell 2006 during the time Tm. In another example, the ratio of DL subband frequency resources used in cell 2006 may be a percentage of PRBs in DL subbands (e.g., DL subbands in SBFD symbols) used in an SSB area of cell 2006 for a GBR from among total PRBs of cell 2006 during Tm. The ratio or the percentage of the PRBs in DL subbands (e.g., DL subbands in SBFD symbols) used in an SSB area of cell 2006 for the GBR may also be referred to as a per SSB area DL subband GBR PRB usage, a DL subband PRB usage for GBR in an SSB area, or a per SSB area DL subband GBR PRB usage in percentage of the cell total PRB number.

In an example, the ratio of SBFD frequency resources used in cell 2006 may be a ratio of UL subband frequency resources used in an SSB area of cell 2006 for a non-GBR to total frequency resources of cell 2006 during the time period (Tm). For example, the ratio of UL subband frequency resources used in cell 2006 may be the ratio of PRBs in UL subbands (e.g., UL subbands in SBFD symbols) used in an SSB area of cell 2006 for a non-GBR to total PRBs of cell 2006 during the time Tm. In another example, the ratio of UL subband frequency resources used in cell 2006 may be a percentage of PRBs in UL subbands (e.g., UL subbands in SBFD symbols) used in an SSB area of cell 2006 for a non-GBR from among total PRBs of cell 2006 during Tm. The ratio or the percentage of the PRBs in UL subbands (e.g., UL subbands in SBFD symbols) used in an SSB area of cell 2006 for the non-GBR may also be referred to as a per SSB area UL subband non-GBR PRB usage, an UL subband PRB usage for GBR in an SSB area, or a per SSB area UL subband non-GBR PRB usage in percentage of the cell total PRB number.

In an example, the ratio of SBFD frequency resources used in cell 2006 may be a ratio of UL subband frequency resources used in an SSB area of cell 2006 for a non-GBR to total frequency resources of cell 2006 during the time period (Tm). For example, the ratio of UL subband frequency resources used in cell 2006 may be the ratio of PRBs in UL subbands (e.g., UL subbands in SBFD symbols) used in an SSB area of cell 2006 for a non-GBR to total PRBs of cell 2006 during the time Tm. In another example, the ratio of UL subband frequency resources used in cell 2006 may be a percentage of PRBs in UL subbands (e.g., UL subbands in SBFD symbols) used in an SSB area of cell 2006 for a non-GBR from among total PRBs of cell 2006 during Tm. The ratio or the percentage of the PRBs in UL subbands (e.g., UL subbands in SBFD symbols) used in an SSB area of cell 2006 for the non-GBR may also be referred to as a per SSB area UL subband non-GBR PRB usage, an UL subband PRB usage for non-GBR in an SSB area, or a per SSB area UL subband non-GBR PRB usage in percentage of the cell total PRB number.

In an example, the ratio of SBFD frequency resources used in cell 2006 may be a ratio of DL frequency resources used in an SSB area of cell 2006 to total frequency resources of cell 2006 during the time period (Tm). The DL frequency resources may comprise DL PRBs in DL symbols. The DL frequency resources may not comprise PRBs in SBFD symbols. For example, the ratio of SBFD frequency resources used in cell 2006 may be the ratio of PRBs in DL symbols (e.g., DL PRBs in DL symbols) used in an SSB area of cell 2006 to total PRBs of cell 2006 during the time Tm. In another example, the ratio of DL frequency resources used in cell 2006 may be a percentage of PRBs in DL symbols (e.g., DL PRBs in DL symbols) used in an SSB area of cell 2006 from among total PRBs of cell 2006 during Tm. The ratio or the percentage of the PRBs in DL symbols (e.g., DL PRBs in DL symbols) used in an SSB area of cell 2006 may also be referred to as an SSB area DL total PRB usage, a DL total PRB usage per SSB area, or a per SSB area DL total PRBs usage in percentage of the cell total PRB number.

In an example, the ratio of SBFD frequency resources used in cell 2006 may be a ratio of DL frequency resources used for a GBR in an SSB area of cell 2006 to total frequency resources of cell 2006 during the time period (Tm). The DL frequency resources may comprise DL PRBs for a GBR in DL symbols. The DL frequency resources may not comprise PRBs in SBFD symbols. For example, the ratio of SBFD frequency resources used in cell 2006 may be the ratio of PRBs in DL symbols (e.g., DL PRBs in DL symbols) used for a GBR in an SSB area of cell 2006 to total PRBs of cell 2006 during the time Tm. In another example, the ratio of DL frequency resources used in cell 2006 may be a percentage of PRBs in DL symbols (e.g., DL PRBs in DL symbols) used for a GBR in an SSB area of cell 2006 from among total PRBs of cell 2006 during Tm. The ratio or the percentage of the PRBs in DL symbols (e.g., DL PRBs in DL symbols) used for a GBR in an SSB area in cell 2006 may also be referred to as an SSB area DL GBR PRB usage, a DL GBR PRB usage per SSB area, or a per SSB area DL GBR PRBs usage in percentage of the cell total PRB number.

In an example, the ratio of SBFD frequency resources used in cell 2006 may be a ratio of DL frequency resources used for a non-GBR in an SSB area of cell 2006 to total frequency resources of cell 2006 during the time period (Tm). The DL frequency resources may comprise DL PRBs for a non-GBR in DL symbols. The DL frequency resources may not comprise PRBs in SBFD symbols. For example, the ratio of SBFD frequency resources used in cell 2006 may be the ratio of PRBs in DL symbols (e.g., DL PRBs in DL symbols) used for a non-GBR in an SSB area of cell 2006 to total PRBs of cell 2006 during the time Tm. In another example, the ratio of DL frequency resources used in cell 2006 may be a percentage of PRBs in DL symbols (e.g., DL PRBs in DL symbols) used for a non-GBR in an SSB area of cell 2006 from among total PRBs of cell 2006 during Tm. The ratio or the percentage of the PRBs in DL symbols (e.g., DL PRBs in DL symbols) used for a non-GBR in an SSB area in cell 2006 may also be referred to as an SSB area DL non-GBR PRB usage, a DL non-GBR PRB usage per SSB area, or a per SSB area DL non-GBR PRBs usage in percentage of the cell total PRB number.

In an example, the ratio of SBFD frequency resources used in cell 2006 may be a ratio of SBFD frequency resources used for a slice of cell 2006 to total frequency resources of cell 2006 during the time period (Tm). For example, the ratio of SBFD frequency resources used in cell 2006 may be the ratio of PRBs in SBFD symbols (e.g., DL subbands and UL subbands) used for a slice of cell 2006 to total PRBs of cell 2006 during the time Tm. In another example, the ratio of SBFD frequency resources used in cell 2006 may be a percentage of PRBs in SBFD symbols (e.g., DL subbands and UL subbands) used for a slice of cell 2006 from among total PRBs of cell 2006 during Tm. The ratio or the percentage of the PRBs in SBFD symbols used for a slice of cell 2006 may also be referred to as a per slice SBFD PRB usage, a slice SBFD total PRB usage, a S-NSSAI PRB usage, or a per slice SBFD PRB usage in percentage of the cell total PRB number.

In an example, the ratio of SBFD frequency resources used in cell 2006 may be a ratio of DL subband frequency resources used for a slice of cell 2006 to total frequency resources of cell 2006 during the time period (Tm). For example, the ratio of SBFD frequency resources used in cell 2006 may be the ratio of PRBs in DL subbands (e.g., DL subbands in SBFD symbols) used for a slice of cell 2006 to total PRBs of cell 2006 during the time Tm. In another example, the ratio of DL subband frequency resources used in cell 2006 may be a percentage of PRBs in DL subbands (e.g., DL subbands in SBFD symbols) used for a slice of cell 2006 from among total PRBs of cell 2006 during Tm. The ratio or the percentage of the PRBs in DL subbands (e.g., DL subbands in SBFD symbols) used for a slice of cell 2006 may also be referred to as a per slice DL subband PRB usage, a slice DL subband total PRB usage, a S-NSSAI DL subband PRB usage, or a per slice DL subband PRB usage in percentage of the cell total PRB number.

In an example, the ratio of SBFD frequency resources used in cell 2006 may be a ratio of UL subband frequency resources used for a slice of cell 2006 to total frequency resources of cell 2006 during the time period (Tm). For example, the ratio of SBFD frequency resources used in cell 2006 may be the ratio of PRBs in UL subbands (e.g., UL subbands in SBFD symbols) used for a slice of cell 2006 to total PRBs of cell 2006 during the time Tm. In another example, the ratio of UL subband frequency resources used in cell 2006 may be a percentage of PRBs in UL subbands (e.g., UL subbands in SBFD symbols) used for a slice of cell 2006 from among total PRBs of cell 2006 during Tm. The ratio or the percentage of the PRBs in UL subbands (e.g., UL subbands in SBFD symbols) used for a slice of cell 2006 may also be referred to as a per slice UL subband PRB usage, a slice UL subband total PRB usage, a S-NSSAI UL subband PRB usage, or a per slice UL subband PRB usage in percentage of the cell total PRB number.

In an example, the ratio of SBFD frequency resources used in cell 2006 may be a ratio of SBFD frequency resources used for a slice of cell 2006 for a GBR to total frequency resources of cell 2006 during the time period (Tm). For example, the ratio of SBFD frequency resources used in cell 2006 may be the ratio of PRBs in SBFD symbols (e.g., DL subbands and UL subbands) used for a slice of cell 2006 for a GBR to total PRBs of cell 2006 during the time Tm. In another example, the ratio of SBFD frequency resources used in cell 2006 may be a percentage of PRBs in SBFD symbols (e.g., DL subbands and UL subbands) used for a slice of cell 2006 for a GBR from among total PRBs of cell 2006 during Tm. The ratio or the percentage of the PRBs in SBFD symbols used for a slice of cell 2006 for the GBR may also be referred to as a per slice SBFD GBR PRB usage, a S-NSSAI SBFD GBR PRB usage, or a per slice SBFD GBR PRB usage in percentage of the cell total PRB number.

In an example, the ratio of SBFD frequency resources used in cell 2006 may be a ratio of SBFD frequency resources used for a slice of cell 2006 for a non-GBR to total frequency resources of cell 2006 during the time period (Tm). For example, the ratio of SBFD frequency resources used in cell 2006 may be the ratio of PRBs in SBFD symbols (e.g., DL subbands and UL subbands) used for a slice of cell 2006 for a non-GBR to total PRBs of cell 2006 during the time Tm. In another example, the ratio of SBFD frequency resources used in cell 2006 may be a percentage of PRBs in SBFD symbols (e.g., DL subbands and UL subbands) used for a slice of cell 2006 for a non-GBR from among total PRBs of cell 2006 during Tm. The ratio or the percentage of the PRBs in SBFD symbols used for a slice of cell 2006 for the non-GBR may also be referred to as a per slice SBFD non-GBR PRB usage, a S-NSSAI SBFD non-GBR PRB usage, or a per slice SBFD non-GBR PRB usage in percentage of the cell total PRB number.

In an example, the ratio of SBFD frequency resources used in cell 2006 may be a ratio of DL subband frequency resources used for a slice of cell 2006 for a GBR to total frequency resources of cell 2006 during the time period (Tm). For example, the ratio of SBFD frequency resources used in cell 2006 may be the ratio of PRBs in DL subbands (e.g., DL subbands in SBFD symbols) used for a slice of cell 2006 for a GBR to total PRBs of cell 2006 during the time Tm. In another example, the ratio of DL subband frequency resources used in cell 2006 may be a percentage of PRBs in DL subbands (e.g., DL subbands in SBFD symbols) used for a slice of cell 2006 for a GBR from among total PRBs of cell 2006 during Tm. The ratio or the percentage of the PRBs in DL subbands (e.g., DL subbands in SBFD symbols) used for a slice of cell 2006 for the GBR may also be referred to as a per slice DL subband GBR PRB usage, a S-NSSAI DL subband GBR PRB usage, or a per slice DL subband GBR PRB usage in percentage of the cell total PRB number.

In an example, the ratio of SBFD frequency resources used in cell 2006 may be a ratio of DL subband frequency resources used for a slice of cell 2006 for a non-GBR to total frequency resources of cell 2006 during the time period (Tm). For example, the ratio of SBFD frequency resources used in cell 2006 may be the ratio of PRBs in DL subbands (e.g., DL subbands in SBFD symbols) used for a slice of cell 2006 for a non-GBR to total PRBs of cell 2006 during the time Tm. In another example, the ratio of DL subband frequency resources used in cell 2006 may be a percentage of PRBs in DL subbands (e.g., DL subbands in SBFD symbols) used for a slice of cell 2006 for a non-GBR from among total PRBs of cell 2006 during Tm. The ratio or the percentage of the PRBs in DL subbands (e.g., DL subbands in SBFD symbols) used for a slice of cell 2006 for the GBR may also be referred to as a per slice DL subband non-GBR PRB usage, a S-NSSAI DL subband non-GBR PRB usage, or a per slice DL subband non-GBR PRB usage in percentage of the cell total PRB number.

In an example, the ratio of SBFD frequency resources used in cell 2006 may be a ratio of UL subband frequency resources used for a slice of cell 2006 for a GBR to total frequency resources of cell 2006 during the time period (Tm). For example, the ratio of SBFD frequency resources used in cell 2006 may be the ratio of PRBs in UL subbands (e.g., UL subbands in SBFD symbols) used for a slice of cell 2006 for a GBR to total PRBs of cell 2006 during the time Tm. In another example, the ratio of UL subband frequency resources used in cell 2006 may be a percentage of PRBs in UL subbands (e.g., UL subbands in SBFD symbols) used for a slice of cell 2006 for a GBR from among total PRBs of cell 2006 during Tm. The ratio or the percentage of the PRBs in DL subbands (e.g., DL subbands in SBFD symbols) used for a slice of cell 2006 for the GBR may also be referred to as a per slice UL subband GBR PRB usage, a S-NSSAI UL subband GBR PRB usage, or a per slice UL subband GBR PRB usage in percentage of the cell total PRB number.

In an example, the ratio of SBFD frequency resources used in cell 2006 may be a ratio of UL subband frequency resources used for a slice of cell 2006 for a non-GBR to total frequency resources of cell 2006 during the time period (Tm). For example, the ratio of SBFD frequency resources used in cell 2006 may be the ratio of PRBs in UL subbands (e.g., UL subbands in SBFD symbols) used for a slice of cell 2006 for a non-GBR to total PRBs of cell 2006 during the time Tm. In another example, the ratio of UL subband frequency resources used in cell 2006 may be a percentage of PRBs in UL subbands (e.g., UL subbands in SBFD symbols) used for a slice of cell 2006 for a non-GBR from among total PRBs of cell 2006 during Tm. The ratio or the percentage of the PRBs in UL subbands (e.g., UL subbands in SBFD symbols) used for a slice of cell 2006 for the GBR may also be referred to as a per slice UL subband non-GBR PRB usage, a S-NSSAI UL subband non-GBR PRB usage, or a per slice UL subband non-GBR PRB usage in percentage of the cell total PRB number.

In an example, the ratio of SBFD frequency resources used in cell 2006 may be a ratio of DL frequency resources used for a slice in cell 2006 to total frequency resources of cell 2006 during the time period (Tm). The DL frequency resources may comprise DL PRBs for a slice in DL symbols. The DL frequency resources may not comprise DL PRBs in SBFD symbols. For example, the ratio of SBFD frequency resources used in cell 2006 may be the ratio of PRBs in DL symbols (e.g., DL PRBs in DL symbols) used for a slice in cell 2006 to total PRBs of cell 2006 during the time Tm. In another example, the ratio of DL frequency resources used in cell 2006 may be a percentage of PRBs in DL symbols (e.g., DL PRBs in DL symbols) used for a slice in cell 2006 from among total PRBs of cell 2006 during Tm. The ratio or the percentage of the PRBs in DL symbols (e.g., DL PRBs in DL symbols) used for a slice in cell 2006 may also be referred to as a slice DL total PRB allocation, a slice DL total PRB usage, a DL total PRB usage for slice, a per slice DL PRB usage, a per slice DL total PRB usage, or a total amount of DL PRBs usage per cell for a slice in percentage of the cell total PRB number.

In an example, the ratio of SBFD frequency resources used in cell 2006 may be a ratio of DL frequency resources used for a GBR in a slice for cell 2006 to total frequency resources of cell 2006 during the time period (Tm). The DL frequency resources may comprise DL PRBs for a non-GBR in a slice in DL symbols. The DL frequency resources may not comprise DL PRBs in SBFD symbols. For example, the ratio of SBFD frequency resources used in cell 2006 may be the ratio of PRBs in DL symbols (e.g., DL PRBs in DL symbols) used for a GBR in a slice for cell 2006 to total PRBs of cell 2006 during the time Tm. In another example, the ratio of DL frequency resources used in cell 2006 may be a percentage of PRBs in DL symbols (e.g., DL PRBs in DL symbols) used for a GBR in a slice for cell 2006 from among total PRBs of cell 2006 during Tm. The ratio or the percentage of the PRBs in DL symbols (e.g., DL PRBs in DL symbols) used for a GBR in a slice for cell 2006 may also be referred to as an S-NSSAI DL GBR PRB, a DL GBR PRB usage for a slice, a DL GBR PRB usage per slice, or a per slice DL GBR PRB usage in percentage of the cell total PRB number.

In an example, the ratio of SBFD frequency resources used in cell 2006 may be a ratio of DL frequency resources used for a non-GBR in a slice for cell 2006 to total frequency resources of cell 2006 during the time period (Tm). The DL frequency resources may comprise DL PRBs for a non-GBR in a slice in DL symbols. The DL frequency resources may not comprise DL PRBs in SBFD symbols. For example, the ratio of SBFD frequency resources used in cell 2006 may be the ratio of PRBs in DL symbols (e.g., DL PRBs in DL symbols) used for a non-GBR in a slice for cell 2006 to total PRBs of cell 2006 during the time Tm. In another example, the ratio of DL frequency resources used in cell 2006 may be a percentage of PRBs in DL symbols (e.g., DL PRBs in DL symbols) used for a non-GBR in a slice for cell 2006 from among total PRBs of cell 2006 during Tm. The ratio or the percentage of the PRBs in DL symbols (e.g., DL PRBs in DL symbols) used for a non-GBR in a slice for cell 2006 may also be referred to as an S-NSSAI DL non-GBR PRB, a DL non-GBR PRB usage for a slice, a DL non-GBR PRB usage per slice, or a per slice DL non-GBR PRB usage in percentage of the cell total PRB number.

In an example, the ratio of SBFD frequency resources used in cell 2006 may be a ratio of SBFD frequency resources used for a multiple input and multiple output (MIMO) in cell 2006 to total frequency resources of cell 2006 during the time period (Tm). For example, the ratio of SBFD frequency resources used in cell 2006 may be the ratio of PRBs in SBFD symbols (e.g., DL subbands and UL subbands) used for a MIMO in cell 2006 to total PRBs of cell 2006 during the time Tm. In another example, the ratio of SBFD frequency resources used in cell 2006 may be a percentage of PRBs in SBFD symbols (e.g., DL subbands and UL subbands) used for a MIMO in cell 2006 from among total PRBs of cell 2006 during Tm. The ratio or the percentage of the PRBs in SBFD symbols used for a MIMO in cell 2006 may also be referred to as an SBFD PRB usage for MIMO, a SBFD total PRB usage for MIMO, or an SBFD PRB usage for MIMO in percentage of the cell total PRB number.

In an example, the ratio of SBFD frequency resources used in cell 2006 may be a ratio of DL subband frequency resources used for a MIMO in cell 2006 to total frequency resources of cell 2006 during the time period (Tm). For example, the ratio of SBFD frequency resources used in cell 2006 may be the ratio of PRBs in DL subbands (e.g., DL subbands in SBFD symbols) used for a MIMO in cell 2006 to total PRBs of cell 2006 during the time Tm. In another example, the ratio of DL subband frequency resources used in cell 2006 may be a percentage of PRBs in DL subbands (e.g., DL subbands in SBFD symbols) used for a MIMO in cell 2006 from among total PRBs of cell 2006 during Tm. The ratio or the percentage of the PRBs in DL subbands (e.g., DL subbands in SBFD symbols) used for a MIMO in cell 2006 may also be referred to as a DL subband PRB usage for MIMO, a DL subband total PRB usage for MIMO, or an SBFD DL subband PRB usage in percentage of the cell total PRB number.

In an example, the ratio of SBFD frequency resources used in cell 2006 may be a ratio of UL subband frequency resources used for a MIMO in cell 2006 to total frequency resources of cell 2006 during the time period (Tm). For example, the ratio of SBFD frequency resources used in cell 2006 may be the ratio of PRBs in UL subbands (e.g., UL subbands in SBFD symbols) used for a MIMO in cell 2006 to total PRBs of cell 2006 during the time Tm. In another example, the ratio of UL subband frequency resources used in cell 2006 may be a percentage of PRBs in UL subbands (e.g., UL subbands in SBFD symbols) used for a slice of cell 2006 from among total PRBs of cell 2006 during Tm. The ratio or the percentage of the PRBs in UL subbands (e.g., UL subbands in SBFD symbols) used for a MIMO in cell 2006 may also be referred to as an UL subband PRB usage for MIMO, an UL subband total PRB usage for MIMO, or an UL subband PRB usage for MIMO in percentage of the cell total PRB number.

In an example, the ratio of SBFD frequency resources used in cell 2006 may be a ratio of SBFD frequency resources used for a GBR for a MIMO in cell 2006 to total frequency resources of cell 2006 during the time period (Tm). For example, the ratio of SBFD frequency resources used in cell 2006 may be the ratio of PRBs in SBFD symbols (e.g., DL subbands and UL subbands) used for a GBR for a MIMO in cell 2006 to total PRBs of cell 2006 during the time Tm. In another example, the ratio of SBFD frequency resources used in cell 2006 may be a percentage of PRBs in SBFD symbols (e.g., DL subbands and UL subbands) used for a GBR for a MIMO in cell 2006 from among total PRBs of cell 2006 during Tm. The ratio or the percentage of the PRBs in SBFD symbols used for a GBR for a MIMO in cell 2006 may also be referred to as an SBFD GBR PRB usage for MIMO, an SBFD PRB usage for MIMO and for GBR, or an SBFD GBR PRB usage for MIMO in percentage of the cell total PRB number.

In an example, the ratio of SBFD frequency resources used in cell 2006 may be a ratio of SBFD frequency resources used for a non-GBR for a MIMO in cell 2006 to total frequency resources of cell 2006 during the time period (Tm). For example, the ratio of SBFD frequency resources used in cell 2006 may be the ratio of PRBs in SBFD symbols (e.g., DL subbands and UL subbands) used for a non-GBR for a MIMO in cell 2006 to total PRBs of cell 2006 during the time Tm. In another example, the ratio of SBFD frequency resources used in cell 2006 may be a percentage of PRBs in SBFD symbols (e.g., DL subbands and UL subbands) used for a non-GBR for a MIMO in cell 2006 from among total PRBs of cell 2006 during Tm. The ratio or the percentage of the PRBs in SBFD symbols used for a non-GBR for a MIMO in cell 2006 may also be referred to as an SBFD non-GBR PRB usage for MIMO, an SBFD PRB usage for MIMO and for non-GBR, or an SBFD non-GBR PRB usage for MIMO in percentage of the cell total PRB number.

In an example, the ratio of SBFD frequency resources used in cell 2006 may be a ratio of DL subband frequency resources used for a GBR for a MIMO in cell 2006 to total frequency resources of cell 2006 during the time period (Tm). For example, the ratio of SBFD frequency resources used in cell 2006 may be the ratio of PRBs in DL subbands (e.g., DL subbands in SBFD symbols) used for a GBR for a MIMO in cell 2006 to total PRBs of cell 2006 during the time Tm. In another example, the ratio of DL subband frequency resources used in cell 2006 may be a percentage of PRBs in DL subbands (e.g., DL subbands in SBFD symbols) used for a GBR for a MIMO in cell 2006 from among total PRBs of cell 2006 during Tm. The ratio or the percentage of the PRBs in DL subbands (e.g., DL subbands in SBFD symbols) used for a GBR for a MIMO in cell 2006 may also be referred to as a DL subband GBR PRB usage for MIMO, a DL subband PRB usage for MIMO and for GBR, or a DL subband GBR PRB usage for MIMO in percentage of the cell total PRB number.

In an example, the ratio of SBFD frequency resources used in cell 2006 may be a ratio of DL subband frequency resources used for a non-GBR for a MIMO in cell 2006 to total frequency resources of cell 2006 during the time period (Tm). For example, the ratio of SBFD frequency resources used in cell 2006 may be the ratio of PRBs in DL subbands (e.g., DL subbands in SBFD symbols) used for a non-GBR for a MIMO in cell 2006 to total PRBs of cell 2006 during the time Tm. In another example, the ratio of DL subband frequency resources used in cell 2006 may be a percentage of PRBs in DL subbands (e.g., DL subbands in SBFD symbols) used for a non-GBR for a MIMO in cell 2006 from among total PRBs of cell 2006 during Tm. The ratio or the percentage of the PRBs in DL subbands (e.g., DL subbands in SBFD symbols) used for a non-GBR for a MIMO in cell 2006 may also be referred to as a DL subband non-GBR PRB usage for MIMO, a DL subband PRB usage for MIMO and for non-GBR, or a DL subband non-GBR PRB usage for MIMO in percentage of the cell total PRB number.

In an example, the ratio of SBFD frequency resources used in cell 2006 may be a ratio of UL subband frequency resources used for a GBR for a MIMO in cell 2006 to total frequency resources of cell 2006 during the time period (Tm). For example, the ratio of SBFD frequency resources used in cell 2006 may be the ratio of PRBs in UL subbands (e.g., DL subbands in SBFD symbols) used for a GBR for a MIMO in cell 2006 to total PRBs of cell 2006 during the time Tm. In another example, the ratio of DL subband frequency resources used in cell 2006 may be a percentage of PRBs in UL subbands (e.g., UL subbands in SBFD symbols) used for a GBR for a MIMO in cell 2006 from among total PRBs of cell 2006 during Tm. The ratio or the percentage of the PRBs in UL subbands (e.g., UL subbands in SBFD symbols) used for a GBR for a MIMO in cell 2006 may also be referred to as an UL subband GBR PRB usage for MIMO, an UL subband PRB usage for MIMO and for GBR, or an UL subband GBR PRB usage for MIMO in percentage of the cell total PRB number.

In an example, the ratio of SBFD frequency resources used in cell 2006 may be a ratio of UL subband frequency resources used for a non-GBR for a MIMO in cell 2006 to total frequency resources of cell 2006 during the time period (Tm). For example, the ratio of SBFD frequency resources used in cell 2006 may be the ratio of PRBs in UL subbands (e.g., UL subbands in SBFD symbols) used for a non-GBR for a MIMO in cell 2006 to total PRBs of cell 2006 during the time Tm. In another example, the ratio of UL subband frequency resources used in cell 2006 may be a percentage of PRBs in DL subbands (e.g., UL subbands in SBFD symbols) used for a non-GBR for a MIMO in cell 2006 from among total PRBs of cell 2006 during Tm. The ratio or the percentage of the PRBs in UL subbands (e.g., UL subbands in SBFD symbols) used for a non-GBR for a MIMO in cell 2006 may also be referred to as a UL subband non-GBR PRB usage for MIMO, an UL subband PRB usage for MIMO and for non-GBR, or a UL subband non-GBR PRB usage for MIMO in percentage of the cell total PRB number.

In an example, the ratio of SBFD frequency resources used in cell 2006 may be a ratio of DL frequency resources used for a MIMO in cell 2006 to total frequency resources of cell 2006 during the time period (Tm). The DL frequency resources may comprise DL PRBs for MIMO in DL symbols. The DL frequency resources may not comprise DL PRBs in SBFD symbols. For example, the ratio of SBFD frequency resources used in cell 2006 may be the ratio of PRBs in DL symbols (e.g., DL PRBs in DL symbols) used for a MIMO in cell 2006 to total PRBs of cell 2006 during the time Tm. In another example, the ratio of DL frequency resources used in cell 2006 may be a percentage of PRBs in DL symbols (e.g., DL PRBs in DL symbols) used for a MIMO in cell 2006 from among total PRBs of cell 2006 during Tm. The ratio or the percentage of the PRBs in DL symbols (e.g., DL PRBs in DL symbols) used for a MIMO in cell 2006 may also be referred to as a DL PRB usage for MIMO, a DL total PRB usage for MIMO, a per cell DL PRB usage for MIMO, a per cell DL total PRB usage for MIMO, or a per cell DL PRB usage for MIMO in percentage of the cell total PRB number.

In an example, the ratio of SBFD frequency resources used in cell 2006 may be a ratio of DL frequency resources used for a GBR for a MIMO in cell 2006 to total frequency resources of cell 2006 during the time period (Tm). The DL frequency resources may comprise DL PRBs for GBR and for MIMO, in DL symbols. The DL frequency resources may not comprise DL PRBs in SBFD symbols. For example, the ratio of SBFD frequency resources used in cell 2006 may be the ratio of PRBs in DL symbols (e.g., DL PRBs in DL symbols) used for a GBR for a MIMO in cell 2006 to total PRBs of cell 2006 during the time Tm. In another example, the ratio of DL frequency resources used in cell 2006 may be a percentage of PRBs in DL symbols (e.g., DL PRBs in DL symbols) used for a GBR for a MIMO in cell 2006 from among total PRBs of cell 2006 during Tm. The ratio or the percentage of the PRBs in DL symbols (e.g., DL PRBs in DL symbols) used for a GBR for a MIMO in cell 2006 may also be referred to as a DL GBR PRB usage for MIMO, a DL GBR PRB usage for MIMO in percentage of the cell total PRB number, or a per cell DL GBR PRB usage for MIMO in percentage of the cell total PRB number.

In an example, the ratio of SBFD frequency resources used in cell 2006 may be a ratio of DL frequency resources used for a non-GBR for a MIMO in cell 2006 to total frequency resources of cell 2006 during the time period (Tm). The DL frequency resources may comprise DL PRBs for non-GBR and for MIMO, in DL symbols. The DL frequency resources may not comprise DL PRBs in SBFD symbols. For example, the ratio of SBFD frequency resources used in cell 2006 may be the ratio of PRBs in DL symbols (e.g., DL PRBs in DL symbols) used for a non-GBR for a MIMO in cell 2006 to total PRBs of cell 2006 during the time Tm. In another example, the ratio of DL frequency resources used in cell 2006 may be a percentage of PRBs in DL symbols (e.g., DL PRBs in DL symbols) used for a non-GBR for a MIMO in cell 2006 from among total PRBs of cell 2006 during Tm. The ratio or the percentage of the PRBs in DL symbols (e.g., DL PRBs in DL symbols) used for a non-GBR for a MIMO in cell 2006 may also be referred to as a DL non-GBR PRB usage for MIMO, a DL non-GBR PRB usage for MIMO in percentage of the cell total PRB number, or a per cell DL non-GBR PRB usage for MIMO in percentage of the cell total PRB number.

In an example, node 2020 may perform one or more operational tasks based on the ratio (or the percentage) of SBFD frequency resources used in the cell (as described below).

In an example, one of the one or more operational tasks may comprise an admission control of a wireless device. For example, node 2020 may admit a wireless device in a cell based on the ratio of SBFD frequency resources used in the cell being below a first admission threshold (A-TH1). In another example, node 2020 may not admit (or reject) a wireless device in a cell based on the ratio of SBFD frequency resources used in the cell being above a second admission threshold (A-TH2).

In another example, one of the one or more operational tasks may comprise transmitting the ratio of SBFD frequency resources used in the cell to another node. For example, node 2020 transmitting the ratio of SBFD frequency resources used in the cell to another base station, another gNB-CU, a self-organizing network node (SON) node, an operational and maintenance (ONM) node, or to a core network node (e.g., an AMF).

In yet another example, one of the one or more operational tasks may comprise a cell change of a wireless device. For example, node 2020 may change a serving cell of a wireless device with a cell based on the ratio of SBFD frequency resources used in the cell being below a first cell change threshold (CC-TH1). In another example, node 2020 may not change a serving cell of a wireless device with a cell based on the ratio of SBFD frequency resources used in the cell being above a second cell change threshold (CC-TH2).

In yet an example, one of the one or more operational tasks may comprise a configuration, a reconfiguration, or an update of one or more parameters of one or more cells. In an example, the one or more parameters of the one or more cells may comprise a transmission power, a number of transmit antennas, a number of received antennas, a number of transmit beams, a number of receive beams, a number of downlink subbands, a number of uplink subbands, a bandwidth of a cell, a bandwidth of a downlink subband, and/or a bandwidth of an uplink subband.

In an example, one of the one or more operational tasks may comprise an interference mitigation. For example, node 2020 may release one or more radio resources (e.g., PRBs, etc.) in a cell based on the ratio of SBFD frequency resources used in the cell being above a first interference threshold (IN-TH1). In another example, node 2020 may decrease a transmit power below a first power threshold (P-TH1) in a cell based on the ratio of SBFD frequency resources used in the cell being above a second interference threshold (IN-TH2).

In an example, one of the one or more operational tasks may comprise load balancing in one or more cells or load balancing across cells.

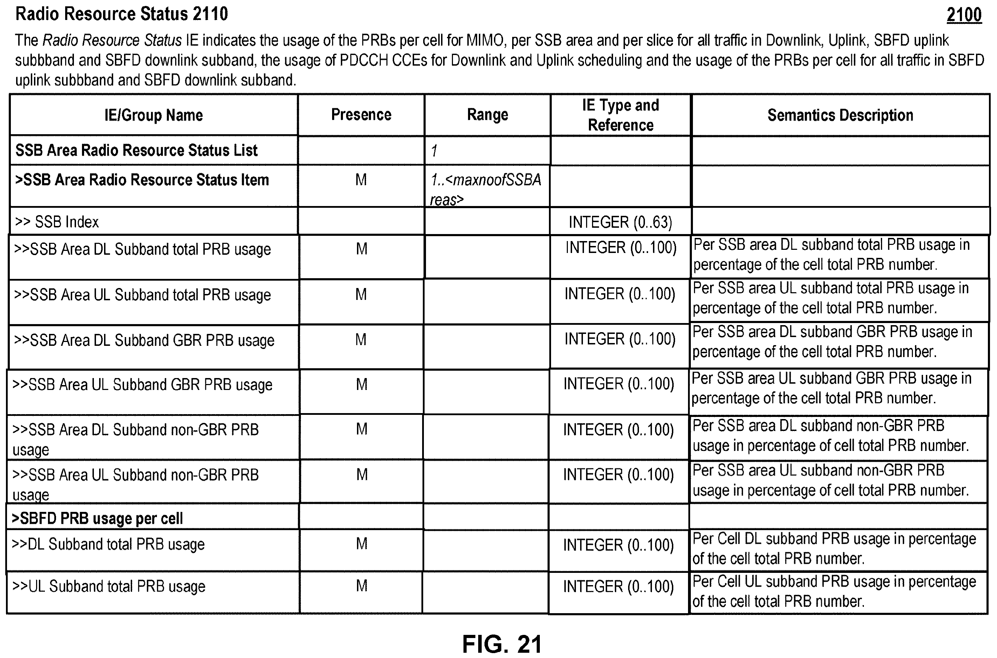

FIG. 21 illustrates an example of a radio resource status 2110 (e.g., *Radio Resource Status IE*) as per an aspect of an embodiment of the present disclosure. The features illustrated in FIG. 21 may be combined with the features previously discussed with reference to FIGs. 17, 18, 19, 20, and/or 21.

In the example of FIG. 21, a first node (e.g., a gNB-DU, a gNB, a base station) may transmit to a second node (e.g., a gNB-CU, a gNB, another base station), radio resource status 2110. Radio resource status 2110 may be a X1AP, an XnAP, or an NGAP message. Radio resource status 2110 may be transmitted during a resource status reporting procedure between the first node and the second node. Radio resource status 2110 may be transmitted in response to a resource status request message. The resource status request message may be transmitted by the second node to the first node.

Radio resource status 2110 may be comprised in (or part of or included in) a resource status update. The first node and the second node are according to the example embodiments in FIG. 19. (e.g., node 1940 and node 1920 respectively) and/or FIG. 20. (e.g., node 2040 and node 2020 respectively). The resource status reporting procedure is according to the example embodiments in FIG. 19. (e.g., resource status reporting procedure 1900) and/or FIG. 20. (e.g., resource status reporting procedure 2000). The resource status update is according to the example embodiments in FIG. 19. (e.g., resource status update 1906) and/or FIG. 20. (e.g., resource status update 2010). The resource status request message is according to the example embodiments in FIG. 19. (e.g., resource status request 1902) and/or FIG. 20. (e.g., request 2002).

As shown in FIG. 21, radio resource status 2110 may comprise an *SSB Area Radio Resource Status Item* and an *SBFD PRB usage per cell*. A radio resource status for an SSB area may comprise an SSB index (e.g., *SSB index*) of the SSB area. The SSB index (e.g., *SSB index*) may have a range (or a value) between 0 and 63 (e.g., up to 64 SSB indices corresponding to up to 64 SSB areas).

An SSB Area DL Subband total PRB usage (e.g., *SSB Area DL Subband total PRB usage*) may indicate a percentage of PRBs used in DL subbands in an SSB area of a cell from among total PRBs of the cell. The SSB Area DL Subband total PRB usage (e.g., *SSB Area DL Subband total PRB usage*) may have a range (or a value) between 0% and 100%.

An SSB Area UL Subband total PRB usage (e.g., *SSB Area UL Subband total PRB usage*) may indicate a percentage of PRBs used in UL subbands in an SSB area of a cell from among total PRBs of the cell. The SSB Area UL Subband total PRB usage (e.g., *SSB Area UL Subband total PRB usage*) may have a range (or a value) between 0% and 100%

An SSB Area DL Subband GBR PRB usage (e.g., *SSB Area DL Subband GBR PRB usage*) may indicate a percentage of PRBs used for a guaranteed bit rate (GBR) service in DL subbands in an SSB area of a cell from among total PRBs of the cell. The SSB Area DL Subband GBR PRB usage (e.g., *SSB Area DL Subband GBR PRB usage*) may have a range (or a value) between 0% and 100%.

An SSB Area UL Subband GBR PRB usage (e.g., *SSB Area UL Subband GBR PRB usage*) may indicate a percentage of PRBs used for a guaranteed bit rate (GBR) service in UL subbands in an SSB area of a cell from among total PRBs of the cell. The SSB Area UL Subband GBR PRB usage (e.g., *SSB Area UL Subband GBR PRB usage*) may have a range (or a value) between 0% and 100%.

An SSB Area DL Subband Non-GBR PRB usage (e.g., *SSB Area DL Subband Non-GBR PRB usage*) may indicate a percentage of PRBs used for a non-guaranteed bit rate (non-GBR) service in DL subbands in an SSB area of a cell from among total PRBs of the cell. The SSB Area DL Subband Non-GBR PRB usage (e.g., *SSB Area DL Subband Non-GBR PRB usage*) may have a range (or a value) between 0% and 100%.

An SSB Area UL Subband GBR PRB usage (e.g., *SSB Area UL Subband Non-GBR PRB usage*) may indicate a percentage of PRBs used for a guaranteed bit rate (GBR) service in UL subbands in an SSB area of a cell from among total PRBs of the cell. The SSB Area UL Subband Non-GBR PRB usage (e.g., *SSB Area UL Subband Non-GBR PRB usage*) may have a range (or a value) between 0% and 100%.

A DL Subband total PRB usage (e.g., *DL Subband total PRB usage*) may indicate a percentage of PRBs used in DL subbands in a cell from among total PRBs of the cell. The DL Subband total PRB usage (e.g., *DL Subband total PRB usage*) may have a range (or a value) between 0% and 100%.

An UL Subband total PRB usage (e.g., *UL Subband total PRB usage*) may indicate a percentage of PRBs used in UL subbands in a cell from among total PRBs of the cell. The UL Subband total PRB usage (e.g., *UL Subband total PRB usage*) may have a range (or a value) between 0% and 100%.

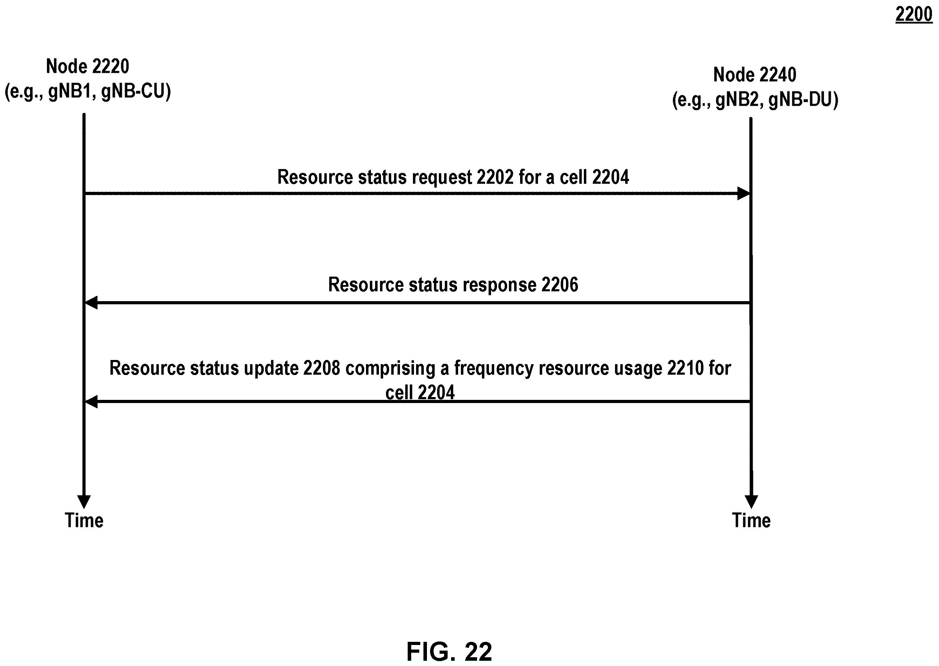

FIG. 22 illustrates an example of a resource status reporting procedure 2200 between a node 2220 and a node 2240 as per an aspect of an embodiment of the present disclosure. The features illustrated in FIG. 22 may be combined with the features previously discussed with reference to FIGs. 17, 18, 19, 20, and/or 21.

As shown in FIG. 22, node 2220 may transmit to node 2240, a resource status request 2202 for a cell 2204. Node 2220 may receive from node 2240, a resource status response 2206. Node 2220 may receive from node 2240, a resource status update 2208 comprising a frequency resource usage 2210 in cell 2204.

Resource status reporting procedure 2200 may be associated with a cell, e.g., cell 2204. A base station (e.g., a node 2240, a gNB-DU, gNB2, etc.) may serve, manage, or operate a plurality of cells. The base station (e.g., the node 2040, the gNB-DU, gNB2, etc.) may perform the resource status reporting procedure 2200 for each of the plurality of cells. Resource status reporting procedure 2200 is according to the example embodiments in FIG. 19 (e.g., resource status reporting procedure 1900) and/or in FIG. 20 (e.g., resource status reporting procedure 2000).

In the example of FIG. 22, resource status reporting procedure 2200 may be initiated by a node 2220 (e.g., gNB1, a gNB-CU). During resource status reporting procedure 2200, the node 2020 may communicate with the node 2240. The node 2220 is according to the example embodiments in FIG. 19 (e.g., node 1920) and/or in FIG. 20 (e.g., node 2020). The node 2240 is according to the example embodiments in FIG. 19 (e.g., node 1940) and/or in FIG. 20 (e.g., node 2040).

Request status request 2202 is according to the example embodiments in FIG. 19 (e.g., resource status request 1902) and/or in FIG. 20 (e.g., resource status request 2002). Request status request 2202 may comprise a request for a resource status of cell 2204. The resource status of cell 2204 is according to the example embodiments in FIG. 19 (e.g., the resource status, the measurement, the load, the radio resource usage, the resource block usage, etc.).

Request status response 2206 is according to the example embodiments in FIG. 19 (e.g., resource status response1904) and/or in FIG. 20 (e.g., response 2008).

Request status update 2208 is according to the example embodiments in FIG. 19 (e.g., resource status update 1906) and/or in FIG. 20 (e.g., resource status update 2010).

Cell 2204 may be associated with (or managed by or served by or controlled by) node 2240. Cell 2204 may operate in subband full duplex (SBFD). The SBFD may also be referred to as an SBFD operation, an SBFD mode, or an SBFD procedure (as described above). Cell 2204 is according to the example embodiments in FIG. 20 (e.g., cell 2006).

The SBFD may comprise at least one SBFD time resource during an SBFD time period. In a frequency domain, the SBFD time resource (e.g., an SBFD symbol) may include at least one DL subband and at least one UL subband. The SBFD is according to the example embodiments in FIG. 17 and/or in FIG. 18. The SBFD time resource, the SBFD time period, the at least one DL subband, and the at least one UL subband are according to the example embodiments in FIG. 17 (e.g., SBFD time resource 1720, SBFD time period 1740, DL subband 1722, and UL subband 1724). The SBFD time resource, the SBFD time period, the at least one DL subband, and the at least one UL subband are according to the example embodiments in FIG. 18 (e.g., SBFD time resource 1820, SBFD time period 1840, DL subband 1822, DL subband 1826, and UL subband 1824).

As shown in FIG. 22, Request status update 2208 may comprise a frequency resource usage 2210 for cell 2204. In an example, frequency resource usage 2210 may be a ratio of frequency resources used in cell 2204 to total frequency resources of cell 2204. In another example, frequency resource usage 2210 may be a percentage of the frequency resources used in cell 2204 to the total frequency resources of cell 2204. In another example, frequency resource usage 2210 may be the ratio or the percentage of the frequency resources used in cell 2204 to the total frequency resources of cell 2204 during a time period (Tp). The time period is according to the example embodiments in FIG. 20 (e.g., the time period (Tm)).

In an example, the frequency resources used in cell 2204 may not comprise subband full duplex (SBFD) frequency resources. In another example, the frequency resources used in cell 2204 may not indicate the SBFD frequency resources.

In an example, the total frequency resources used in cell 2204 may not comprise SBFD frequency resources used in cell 2204. In an example, the total frequency resources used in cell 2204 may not indicate SBFD frequency resources used in cell 2204.

In an example, the frequency resources may be referred to as physical resource blocks (PRBs). The physical resource blocks (PRBs) may also be referred to as resource blocks (RBs) or virtual resource blocks (VRBs).

In an example, frequency resource usage 2210 may be associated with (or depend on or related to) a synchronization signal/physical broadcast channel block (SSB) area in cell 2204, a slice in cell 2204, or a multiple input multiple output (MIMO) in cell 2204 (e.g., for an uplink (UL) MIMO in a cell and/or a downlink (DL) MIMO in a cell). The SSB area, the slice, a slice ID (e.g., S-NSSAI), and the MIMO, are according to the example embodiments in FIG. 19 (e.g., the SSB area, the slice (or the network slice), the S-NSSAI, and the MIMO).

In an example, frequency resource usage 2210 may be associated with (or depend on or related to) a service type or a quality of service, e.g., a guaranteed bit rate (GBR), a non-guaranteed bit rate (non-GBR), etc. The GBR and the non-GBR are according to the example embodiments in FIG. 19 (e.g., the GBR and the non-GBR) and/or in FIG. 20 (e.g., the GBR and the non-GBR).

In an example, frequency resource usage 2210 may be an SSB Area DL GBR PRB usage. The SSB Area DL GBR PRB usage may comprise a percentage of DL PRBs in DL symbols used for a GBR in an SSB area of cell 2204 from among total PRBs of cell 2204 excluding PRBs in SBFD symbols during a time period (Tp). For example, the total PRBs of cell 2204 excluding PRBs in SBFD symbols may comprise (or indicate) a sum of DL PRBs in DL symbols and UL PRBs in UL symbols, during Tp. For example, the total PRBs of cell 2204 may not include any PRB in the SBFD symbols during Tp.

In an example, frequency resource usage 2210 may be an SSB Area UL GBR PRB usage. The SSB Area UL GBR PRB usage may comprise a percentage of UL PRBs in UL symbols used for a GBR in an SSB area of cell 2204 from among total PRBs of cell 2204 excluding PRBs in SBFD symbols during Tp. The total PRBs of cell 2204 excluding PRBs in SBFD symbols are according to the examples as described above.

In an example, frequency resource usage 2210 may be an SSB Area DL non-GBR PRB usage. The SSB Area DL non-GBR PRB usage may comprise a percentage of DL PRBs in DL symbols used for a non-GBR in an SSB area of cell 2204 from among total PRBs of cell 2204 excluding PRBs in SBFD symbols during Tp. The total PRBs of cell 2204 excluding PRBs in SBFD symbols are according to the examples as described above.

In an example, frequency resource usage 2210 may be an SSB Area UL non-GBR PRB usage. The SSB Area UL non-GBR PRB usage may comprise a percentage of UL PRBs in UL symbols used for a non-GBR in an SSB area of cell 2204 from among total PRBs of cell 2204 excluding PRBs in SBFD symbols during Tp. The total PRBs of cell 2204 excluding PRBs in SBFD symbols are according to the examples as described above.

In an example, frequency resource usage 2210 may be an SSB Area DL total PRB usage. The SSB Area DL PRB usage may comprise a percentage of total DL PRBs (e.g., total DL PRBs for a GBR and a non-GBR) in DL symbols used in an SSB area of cell 2204 from among total PRBs of cell 2204 excluding PRBs in SBFD symbols during Tp. The total PRBs of cell 2204 excluding PRBs in SBFD symbols are according to the examples as described above.

In an example, frequency resource usage 2210 may be an SSB Area UL total PRB usage. The SSB Area UL PRB usage may comprise a percentage of total UL PRBs (e.g., total UL PRBs for a GBR and a non-GBR) in UL symbols used in an SSB area of cell 2204 from among total PRBs of cell 2204 excluding PRBs in SBFD symbols during Tp. The total PRBs of cell 2204 excluding PRBs in SBFD symbols are according to the examples as described above.

In an example, frequency resource usage 2210 may be an S-NSSAI DL GBR PRB usage. The S-NSSAI DL GBR PRB usage may comprise a percentage of DL PRBs in DL symbols used for a GBR in a slice of cell 2204 from among total PRBs of cell 2204 excluding PRBs in SBFD symbols during Tp. The total PRBs of cell 2204 excluding PRBs in SBFD symbols are according to the examples as described above.

In an example, frequency resource usage 2210 may be an S-NSSAI UL GBR PRB usage. The S-NSSAI UL GBR PRB usage may comprise a percentage of UL PRBs in UL symbols used for a GBR in a slice of cell 2204 from among total PRBs of cell 2204 excluding PRBs in SBFD symbols during Tp. The total PRBs of cell 2204 excluding PRBs in SBFD symbols are according to the examples as described above.

In an example, frequency resource usage 2210 may be an S-NSSAI DL non-GBR PRB usage. The S-NSSAI DL non-GBR PRB usage may comprise a percentage of DL PRBs in DL symbols used for a non-GBR in a slice of cell 2204 from among total PRBs of cell 2204 excluding PRBs in SBFD symbols during Tp. The total PRBs of cell 2204 excluding PRBs in SBFD symbols are according to the examples as described above.

In an example, frequency resource usage 2210 may be an S-NSSAI UL non-GBR PRB usage. The S-NSSAI UL non-GBR PRB usage may comprise a percentage of UL PRBs in UL symbols used for a non-GBR in a slice of cell 2204 from among total PRBs of cell 2204 excluding PRBs in SBFD symbols during Tp. The total PRBs of cell 2204 excluding PRBs in SBFD symbols are according to the examples as described above.

In an example, frequency resource usage 2210 may be an S-NSSAI DL Total PRB usage. The S-NSSAI DL Total PRB usage may comprise a percentage of total DL PRBs (e.g., total DL PRBs for a GBR and a non-GBR) in DL symbols used in a slice of cell 2204 from among total PRBs of cell 2204 excluding PRBs in SBFD symbols during Tp. The total PRBs of cell 2204 excluding PRBs in SBFD symbols are according to the examples as described above.

In an example, frequency resource usage 2210 may be an S-NSSAI UL Total PRB usage. The S-NSSAI UL Total PRB usage may comprise a percentage of total UL PRBs (e.g., total UL PRBs for a GBR and a non-GBR) in DL symbols used in a slice of cell 2204 from among total PRBs of cell 2204 excluding PRBs in SBFD symbols during Tp. The total PRBs of cell 2204 excluding PRBs in SBFD symbols are according to the examples as described above.

In an example, frequency resource usage 2210 may be a DL GBR PRB usage for MIMO. The DL GBR PRB usage for MIMO may comprise a percentage of DL PRBs in DL symbols used for a GBR and for a MIMO in cell 2204 from among total PRBs of cell 2204 excluding PRBs in SBFD symbols during Tp. The total PRBs of cell 2204 excluding PRBs in SBFD symbols are according to the examples as described above.

In an example, frequency resource usage 2210 may be an UL GBR PRB usage for MIMO. The UL GBR PRB usage for MIMO may comprise a percentage of UL PRBs in DL symbols used for a GBR and for a MIMO in cell 2204 from among total PRBs of cell 2204 excluding PRBs in SBFD symbols during Tp. The total PRBs of cell 2204 excluding PRBs in SBFD symbols are according to the examples as described above.

In an example, frequency resource usage 2210 may be a DL non-GBR PRB usage for MIMO. The DL non-GBR PRB usage for MIMO may comprise a percentage of DL PRBs in DL symbols used for a non-GBR and for a MIMO in cell 2204 from among total PRBs of cell 2204 excluding PRBs in SBFD symbols during Tp. The total PRBs of cell 2204 excluding PRBs in SBFD symbols are according to the examples as described above.

In an example, frequency resource usage 2210 may be an UL non-GBR PRB usage for MIMO. The UL non-GBR PRB usage for MIMO may comprise a percentage of UL PRBs in DL symbols used for a non-GBR and for a MIMO in cell 2204 from among total PRBs of cell 2204 excluding PRBs in SBFD symbols during Tp. The total PRBs of cell 2204 excluding PRBs in SBFD symbols are according to the examples as described above.

In an example, frequency resource usage 2210 may be a DL total PRB usage for MIMO. The DL total PRB usage for MIMO may comprise a percentage of DL PRBs (e.g., DL PRBs for a GBR and a non-GBR) in DL symbols used for a MIMO in cell 2204 from among total PRBs of cell 2204 excluding PRBs in SBFD symbols during Tp. The total PRBs of cell 2204 excluding PRBs in SBFD symbols are according to the examples as described above.

In an example, frequency resource usage 2210 may be an UL total PRB usage for MIMO. The UL total PRB usage for MIMO may comprise a percentage of UL PRBs (e.g., UL PRBs for a GBR and a non-GBR) in UL symbols used for a MIMO in cell 2204 from among total PRBs of cell 2204 excluding PRBs in SBFD symbols during Tp. The total PRBs of cell 2204 excluding PRBs in SBFD symbols are according to the examples as described above.

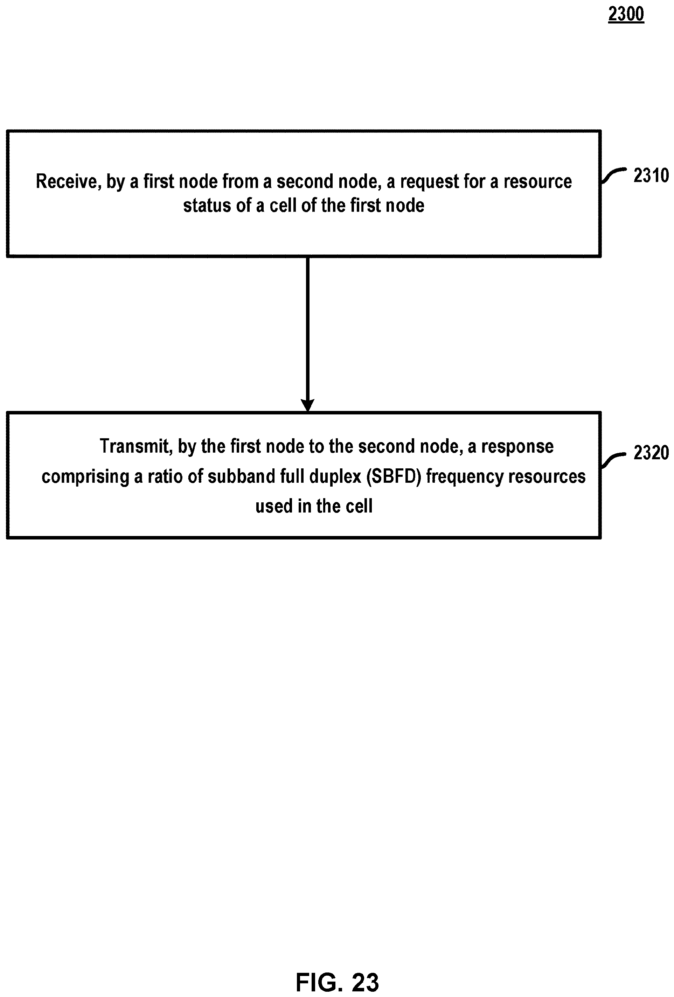

FIG. 23 illustrates an example as per an aspect of an embodiment of the present disclosure. The features illustrated in FIG. 23 may be combined with the features previously discussed with reference to FIGs. 17, 18, 19, 20, 21, and/or 22.

Referring to FIG. 23, process 2300 comprises a step 2310 of receiving, by a first node from a second node, a request for a resource status of a cell of the first node. Process 2300 further comprises a step 2320 of transmitting, by the first node to the second node, a response comprising a ratio of subband full duplex (SBFD) frequency resources used in the cell.

Additional aspects, with examples, of step 2310, step 2320, and process 2300 are discussed below. Each of the additional aspects, and examples, below may be considered an embodiment. Each aspect of the embodiments may be combined with, or substituted for, the aspects of the embodiment of process 2300 illustrated in FIG. 23, such as step 2310 and/or step 2320. Furthermore, each of the additional aspects and examples below may be combined with each other.

In an example, the ratio of SBFD frequency resources used in the cell is a percentage of SBFD frequency resources used in the cell.

In an example, the cell operates in subband full duplex (SBFD).

In an example, frequency resources comprise physical resource blocks, virtual resource blocks, control channel elements, resource elements, subcarriers, or tones.

In an example, the ratio of SBFD frequency resources used in the cell comprises at least one of: a ratio of SBFD frequency resources used in the cell to total frequency resources of the cell during a time period; a ratio of SBFD frequency resources used in the cell for a guaranteed bit rate (GBR) to total frequency resources of the cell during a time period; a ratio of SBFD frequency resources used in the cell for a non-guaranteed bit rate (non-GBR) to total frequency resources of the cell during a time period; a ratio of SBFD frequency resources used in a Synchronization/Physical Broadcast Channel (PBCH) block (SSB) area of the cell to total frequency resources of the cell during a time period; a ratio of SBFD frequency resources used for a GBR in an SSB area of the cell to total frequency resources of the cell during a time period; a ratio of SBFD frequency resources used for a non-GBR in an SSB area of the cell to total frequency resources of the cell during a time period; a ratio of SBFD frequency resources used for a slice of the cell to total frequency resources of the cell during a time period; a ratio of SBFD frequency resources used for a GBR in a slice of the cell to total frequency resources of the cell during a time period; a ratio of SBFD frequency resources used for a non-GBR in a slice of the cell to total frequency resources of the cell during a time period; a ratio of SBFD frequency resources used in the cell for a multiple input and multiple output (MIMO) to total frequency resources of the cell during a time period; a ratio of SBFD frequency resources used for a GBR for a MIMO in the cell to total frequency resources of the cell during a time period; or a ratio of SBFD frequency resources used for a non-GBR for a MIMO in the cell to total frequency resources of the cell during a time period.

Process 2300 further comprises a step of determining the ratio of SBFD frequency resources used in the cell from among total frequency resources of the cell during the time period.

In an example, the percentage of SBFD frequency resources used in the cell comprises at least one of: a percentage of SBFD frequency resources used in the cell from among total frequency resources of the cell during a time period; a percentage of SBFD frequency resources used for a guaranteed bit rate (GBR) in the cell from among total frequency resources of the cell during a time period; a percentage of SBFD frequency resources used for a non-guaranteed bit rate (non-GBR) in the cell from among total frequency resources of the cell during a time period; a percentage of SBFD frequency resources used in a Synchronization/Physical Broadcast Channel (PBCH) block (SSB) area of the cell from among total frequency resources of the cell during a time period; a percentage of SBFD frequency resources used for a GBR in an SSB area of the cell from among total frequency resources of the cell during a time period; a percentage of SBFD frequency resources used for a non-GBR in an SSB area of the cell from among total frequency resources of the cell during a time period; a percentage of SBFD frequency resources used in a slice of the cell from among total frequency resources of the cell during a time period; a percentage of SBFD frequency resources used in a slice for a GBR in the cell from among total frequency resources of the cell during a time period; a percentage of SBFD frequency resources used in a slice for a non-GBR in the cell from among total frequency resources of the cell during a time period; a percentage of SBFD frequency resources used for a multiple input and multiple output (MIMO) in the cell from among total frequency resources of the cell during a time period; a percentage of SBFD frequency resources used for a GBR for a MIMO in the cell and from among total frequency resources of the cell during a time period; or a percentage of SBFD frequency resources used for a non-GBR for a MIMO in the cell from among total frequency resources of the cell during a time period.

Process 2300 further comprises a step of determining the percentage of SBFD frequency resources used in the cell from among total frequency resources of the cell during the time period.

In an example, the time period is pre-determined.

In an example, the time period is received from the second node or a third node.

In an example, the time period is a periodicity of transmitting the response indicating the ratio of SBFD frequency resources used in the cell.

In an example, the time period is a periodicity of transmitting the response indicating the percentage of SBFD frequency resources used in the cell.

In an example, the ratio of SBFD frequency resources used in the cell are comprised in an uplink subband, a downlink subband, an uplink subband and a downlink subband, or an SBFD time resource.

In an example, the percentage of SBFD frequency resources used in the cell are comprised in an uplink subband, a downlink subband, an uplink subband and a downlink subband, or an SBFD time resource.

In an example, the SBFD time resource includes a downlink subband and an uplink subband in a frequency domain, and wherein the downlink subband and the uplink subband are comprised within a bandwidth of a carrier frequency.

In an example, in the SBFD time resource, the cell may simultaneously transmit a downlink signal in the downlink subband and receive an uplink signal in the uplink subband.

In an example, the SBFD comprises at least one uplink subband and at least one downlink subband in a SBFD time resource.

In an example, the total frequency resources are comprised in a downlink time resource, an uplink time resource, and/or an SBFD time resource.

In an example, the total frequency resources are comprised in a downlink time resource, an uplink time resource, a flexible time resource, and/or an SBFD time resource.

In an example, the uplink time resource is associated with a full duplex - frequency division duplexing (FD-FDD), a time division duplexing (TDD), or a half-duplex - frequency division duplexing (HD-FDD) operation.

In an example, the SBFD time resource comprises a SBFD symbol, a SBFD slot, a SBFD sub-slot, a SBFD mini-slot, a SBFD subframe, a SBFD half frame, or a SBFD frame.

In an example, the downlink time resource comprises a downlink symbol, a downlink slot, a downlink sub-slot, a downlink mini-slot, a downlink subframe, a downlink half frame, or a downlink frame.

In an example, the uplink time resource comprises an uplink symbol, an uplink slot, an uplink sub-slot, an uplink mini-slot, an uplink subframe, an uplink half frame, or an uplink frame.

Process 2300 further comprises a step of determining whether the cell supports SBFD. In response to determining that the cell supports SBFD, Process 2300 further comprises a step of transmitting the response comprising the ratio of SBFD frequency resources used in the cell.

Process 2300 further comprises a step of transmitting a message indicating an initiation of a measurement or a resource status.

In an example, the measurement or the resource status is the ratio of SBFD frequency resources used in the cell.

In an example, the first node is a base station, a gNB, a gNB distributed unit (gNB-DU).

In an example, the second node is a base station, a gNB, a gNB control unit (gNB-CU).

In an example, the request is an F1AP or an XnAP message.

In an example, the response is an F1AP or an XnAP message.

In an example, the third node is a base station, a gNB, a gNB control unit (gNB-CU), an operational and maintenance (ONM) node, or a core network node.

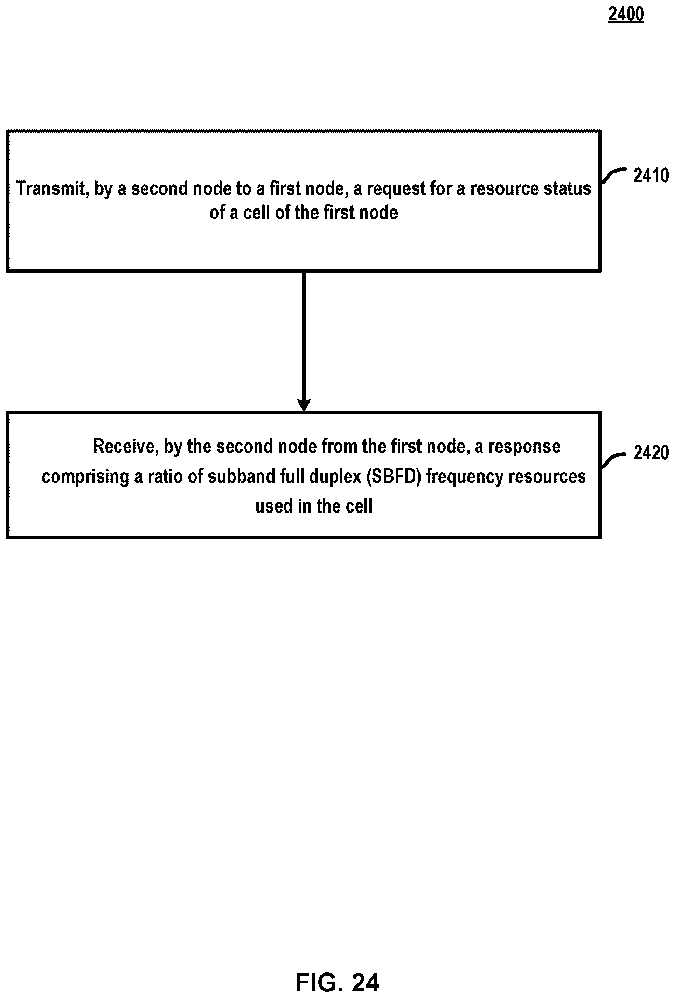

FIG. 24 illustrates an example as per an aspect of an embodiment of the present disclosure. The features illustrated in FIG. 24 may be combined with the features previously discussed with reference to FIG. 23.

Referring to FIG. 24, process 2400 comprises a step 2410 of transmitting, by a second node to a first node, a request for a resource status of a cell of the first node. Process 2400 further comprises a step 2420 of receiving, by the second node from the first node, a response comprising a ratio of subband full duplex (SBFD) frequency resources used in the cell.

Additional aspects, with examples, of step 2410, step 2420, and process 2400 are discussed below. Each of the additional aspects, and examples, below may be considered an embodiment. Each aspect of the embodiments may be combined with, or substituted for, the aspects of the embodiment of process 2400 illustrated in FIG. 24, such as step 2410 and/or step 2420. Furthermore, each of the additional aspects and examples below may be combined with each other.

In an example, the ratio of SBFD frequency resources used in the cell is a percentage of SBFD frequency resources used in the cell.

In an example, the cell operates in subband full duplex (SBFD).

In an example, frequency resources comprise physical resource blocks, virtual resource blocks, control channel elements, resource elements, subcarriers, or tones.

In an example, the ratio of SBFD frequency resources used in the cell comprises at least one of: a ratio of SBFD frequency resources used in the cell to total frequency resources of the cell during a time period; a ratio of SBFD frequency resources used in the cell for a guaranteed bit rate (GBR) to total frequency resources of the cell during a time period; a ratio of SBFD frequency resources used in the cell for a non-guaranteed bit rate (non-GBR) to total frequency resources of the cell during a time period; a ratio of SBFD frequency resources used in a Synchronization/Physical Broadcast Channel (PBCH) block (SSB) area of the cell to total frequency resources of the cell during a time period; a ratio of SBFD frequency resources used for a GBR in an SSB area of the cell to total frequency resources of the cell during a time period; a ratio of SBFD frequency resources used for a non-GBR in an SSB area of the cell to total frequency resources of the cell during a time period; a ratio of SBFD frequency resources used for a slice of the cell to total frequency resources of the cell during a time period; a ratio of SBFD frequency resources used for a GBR in a slice of the cell to total frequency resources of the cell during a time period; a ratio of SBFD frequency resources used for a non-GBR in a slice of the cell to total frequency resources of the cell during a time period; a ratio of SBFD frequency resources used in the cell for a multiple input and multiple output (MIMO) to total frequency resources of the cell during a time period; a ratio of SBFD frequency resources used for a GBR for a MIMO in the cell to total frequency resources of the cell during a time period; or a ratio of SBFD frequency resources used for a non-GBR for a MIMO in the cell to total frequency resources of the cell during a time period.

Process 2400 further comprises a step of determining the ratio of SBFD frequency resources used in the cell from among total frequency resources of the cell during the time period.

In an example, the percentage of SBFD frequency resources used in the cell comprises at least one of: a percentage of SBFD frequency resources used in the cell from among total frequency resources of the cell during a time period; a percentage of SBFD frequency resources used for a guaranteed bit rate (GBR) in the cell from among total frequency resources of the cell during a time period; a percentage of SBFD frequency resources used for a non-guaranteed bit rate (non-GBR) in the cell from among total frequency resources of the cell during a time period; a percentage of SBFD frequency resources used in a Synchronization/Physical Broadcast Channel (PBCH) block (SSB) area of the cell from among total frequency resources of the cell during a time period; a percentage of SBFD frequency resources used for a GBR in an SSB area of the cell from among total frequency resources of the cell during a time period; a percentage of SBFD frequency resources used for a non-GBR in an SSB area of the cell from among total frequency resources of the cell during a time period; a percentage of SBFD frequency resources used in a slice of the cell from among total frequency resources of the cell during a time period; a percentage of SBFD frequency resources used in a slice for a GBR in the cell from among total frequency resources of the cell during a time period; a percentage of SBFD frequency resources used in a slice for a non-GBR in the cell from among total frequency resources of the cell during a time period; a percentage of SBFD frequency resources used for a multiple input and multiple output (MIMO) in the cell from among total frequency resources of the cell during a time period; a percentage of SBFD frequency resources used for a GBR for a MIMO in the cell and from among total frequency resources of the cell during a time period; or a percentage of SBFD frequency resources used for a non-GBR for a MIMO in the cell from among total frequency resources of the cell during a time period.

In an example, the time period is pre-determined.

In an example, the time period is comprised in the request.

In an example, the time period is a periodicity of transmitting the response indicating the ratio of SBFD frequency resources used in the cell.

In an example, the time period is a periodicity of transmitting the response indicating the percentage of SBFD frequency resources used in the cell.

In an example, the ratio of SBFD frequency resources used in the cell are comprised in an uplink subband, a downlink subband, an uplink subband and a downlink subband, or an SBFD time resource.

In an example, the percentage of SBFD frequency resources used in the cell are comprised in an uplink subband, a downlink subband, an uplink subband and a downlink subband, or an SBFD time resource.

In an example, the SBFD time resource includes a downlink subband and an uplink subband in a frequency domain, and wherein the downlink subband and the uplink subband are comprised within a bandwidth of a carrier frequency.

In an example, in the SBFD time resource, the cell may simultaneously transmit a downlink signal in the downlink subband and receive an uplink signal in the uplink subband.

In an example, the SBFD comprises at least one uplink subband and at least one downlink subband in a SBFD time resource.

In an example, the total frequency resources are comprised in a downlink time resource, an uplink time resource, and/or an SBFD time resource.

In an example, the total frequency resources are comprised in a downlink time resource, an uplink time resource, a flexible time resource, and/or an SBFD time resource.

In an example, the uplink time resource is associated with a full duplex - frequency division duplexing (FD-FDD), a time division duplexing (TDD), or a half-duplex - frequency division duplexing (HD-FDD) operation.

In an example, the SBFD time resource comprises a SBFD symbol, a SBFD slot, a SBFD sub-slot, a SBFD mini-slot, a SBFD subframe, a SBFD half frame, or a SBFD frame.

In an example, the downlink time resource comprises a downlink symbol, a downlink slot, a downlink sub-slot, a downlink mini-slot, a downlink subframe, a downlink half frame, or a downlink frame.

In an example, the uplink time resource comprises an uplink symbol, an uplink slot, an uplink sub-slot, an uplink mini-slot, an uplink subframe, an uplink half frame, or an uplink frame.

Process 2400 further comprises a step of receiving a message indicating an initiation of a measurement or a resource status.

In an example, the measurement or the resource status is the ratio of SBFD frequency resources used in the cell.

In an example, the first node is a base station, a gNB, a gNB distributed unit (gNB-DU).

In an example, the second node is a base station, a gNB, a gNB control unit (gNB-CU).

In an example, the request is an F1AP or an XnAP message.

In an example, the response is an F1AP or an XnAP message.

Process 2400 further comprises a step of transmitting a message comprising the ratio of SBFD frequency resources used in the cell to a third node.

In an example, the third node is a base station, a gNB, a gNB control unit (gNB-CU), an operational and maintenance (ONM) node, or a core network node.

Process 2400 further comprises a step of performing based on the ratio of SBFD frequency resources used in the cell at least one of: an admission control of a wireless device;
a cell change of a wireless device; a load balancing in one or more cells; a configuration, a reconfiguration, or an update of one or more parameters of one or more cells; or an interference mitigation.

In an example, the one or more parameters of the one or more cells comprises at least one of: a transmission power; a number of transmit antennas; a number of received antennas; a number of transmit beams; a number of receive beams; a number of downlink subbands; a number of uplink subbands; a bandwidth of a cell; a bandwidth of a downlink subband; or a bandwidth of an uplink subband.

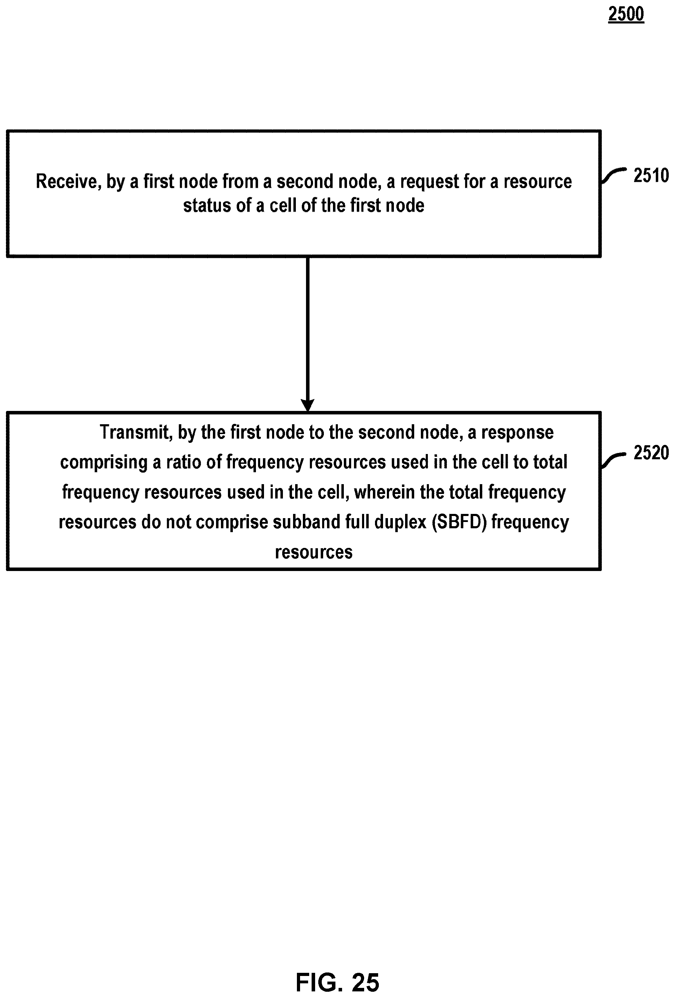

FIG. 25 illustrates an example as per an aspect of an embodiment of the present disclosure. The features illustrated in FIG. 25 may be combined with the features previously discussed with reference to FIG. 24.

Referring to FIG. 25, process 2500 comprises a step 2510 of receiving, by a first node from a second node, a request for a resource status of a cell of the first node. Process 2500 further comprises a step 2520 of transmitting, by the first node to the second node, a response comprising a ratio of frequency resources used in the cell to total frequency resources used in the cell, wherein the total frequency resources do not comprise subband full duplex (SBFD) frequency resources.

Additional aspects, with examples, of step 2510, step 2520, and process 2500 are discussed below. Each of the additional aspects, and examples, below may be considered an embodiment. Each aspect of the embodiments may be combined with, or substituted for, the aspects of the embodiment of process 2500 illustrated in FIG. 25, such as step 2510 and/or step 2520. Furthermore, each of the additional aspects and examples below may be combined with each other.

In an example, the ratio of frequency resources used in the cell is a percentage of frequency resources used in the cell from among total frequency resources used in the cell, wherein the total frequency resources do not comprise SBFD frequency resources.

In an example, the cell operates in subband full duplex (SBFD).

In an example, frequency resources comprise physical resource blocks, virtual resource blocks, control channel elements, resource elements, subcarriers, or tones.

In an example, the ratio of frequency resources used in the cell comprises at least one of: a ratio of frequency resources used in the cell to total frequency resources of the cell during a time period; a ratio of frequency resources used in the cell for a guaranteed bit rate (GBR) to total frequency resources of the cell during a time period; a ratio of frequency resources used in the cell for a non-guaranteed bit rate (non-GBR) to total frequency resources of the cell during a time period; a ratio of frequency resources used in a Synchronization/Physical Broadcast Channel (PBCH) block (SSB) area of the cell to total frequency resources of the cell during a time period; a ratio of frequency resources used for a GBR in an SSB area of the cell to total frequency resources of the cell during a time period; a ratio of frequency resources used for a non-GBR in an SSB area of the cell to total frequency resources of the cell during a time period; a ratio of frequency resources used for a slice of the cell to total frequency resources of the cell during a time period; a ratio of frequency resources used for a GBR in a slice of the cell to total frequency resources of the cell during a time period; a ratio of frequency resources used for a non-GBR in a slice of the cell to total frequency resources of the cell during a time period; a ratio of frequency resources used in the cell for a multiple input and multiple output (MIMO) to total frequency resources of the cell during a time period; a ratio of frequency resources used for a GBR for a MIMO in the cell to total frequency resources of the cell during a time period; or a ratio of frequency resources used for a non-GBR for a MIMO in the cell to total frequency resources of the cell during a time period.

Process 2500 further comprises a step of determining the ratio of frequency resources used in the cell from among total frequency resources of the cell during the time period.

In an example, the percentage of frequency resources used in the cell comprises at least one of: a percentage of frequency resources used in the cell from among total frequency resources of the cell during a time period; a percentage of frequency resources used for a guaranteed bit rate (GBR) in the cell from among total frequency resources of the cell during a time period; a percentage of frequency resources used for a non-guaranteed bit rate (non-GBR) in the cell from among total frequency resources of the cell during a time period; a percentage of frequency resources used in a Synchronization/Physical Broadcast Channel (PBCH) block (SSB) area of the cell from among total frequency resources of the cell during a time period; a percentage of frequency resources used for a GBR in an SSB area of the cell from among total frequency resources of the cell during a time period; a percentage of frequency resources used for a non-GBR in an SSB area of the cell from among total frequency resources of the cell during a time period; a percentage of frequency resources used in a slice of the cell from among total frequency resources of the cell during a time period; a percentage of frequency resources used in a slice for a GBR in the cell from among total frequency resources of the cell during a time period; a percentage of frequency resources used in a slice for a non-GBR in the cell from among total frequency resources of the cell during a time period; a percentage of frequency resources used for a multiple input and multiple output (MIMO) in the cell from among total frequency resources of the cell during a time period; a percentage of frequency resources used for a GBR for a MIMO in the cell and from among total frequency resources of the cell during a time period; or a percentage of frequency resources used for a non-GBR for a MIMO in the cell from among total frequency resources of the cell during a time period.

Process 2500 further comprises a step of determining the percentage of frequency resources used in the cell from among total frequency resources of the cell during the time period.

In an example, the time period is pre-determined.

In an example, the time period is received from the second node or a third node.

In an example, the time period is a periodicity of transmitting the response indicating the ratio of frequency resources used in the cell.

In an example, the time period is a periodicity of transmitting the response indicating the percentage of frequency resources used in the cell.

In an example, the ratio of frequency resources used in the cell are comprised in an uplink symbol and/or a downlink symbol.

In an example, the percentage of frequency resources used in the cell are comprised in an uplink symbol and/or a downlink symbol.

In an example, the SBFD frequency resources are comprised in an SBFD time resource.

In an example, the SBFD time resource includes a downlink subband and an uplink subband in a frequency domain, and wherein the downlink subband and the uplink subband are comprised within a bandwidth of a carrier frequency.

In an example, in the SBFD time resource, the cell may simultaneously transmit a downlink signal in the downlink subband and receive an uplink signal in the uplink subband.

In an example, the SBFD comprises at least one uplink subband and at least one downlink subband in a SBFD time resource.

In an example, the total frequency resources are comprised in a downlink time resource and/or in an uplink time resource.

In an example, the total frequency resources are comprised in a downlink time resource, an uplink time resource, and/or a flexible time resource.

In an example, the uplink time resource is associated with a full duplex - frequency division duplexing (FD-FDD), a time division duplexing (TDD), or a half-duplex - frequency division duplexing (HD-FDD) operation.

In an example, the SBFD time resource comprises a SBFD symbol, a SBFD slot, a SBFD sub-slot, a SBFD mini-slot, a SBFD subframe, a SBFD half frame, or a SBFD frame.

In an example, the downlink time resource comprises a downlink symbol, a downlink slot, a downlink sub-slot, a downlink mini-slot, a downlink subframe, a downlink half frame, or a downlink frame.

In an example, the uplink time resource comprises an uplink symbol, an uplink slot, an uplink sub-slot, an uplink mini-slot, an uplink subframe, an uplink half frame, or an uplink frame.

Process 2500 further comprises a step of determining whether the cell supports SBFD. In response to determining that the cell supports SBFD, Process 2500 further comprises a step of transmitting the response comprising the ratio of frequency resources used in the cell.

Process 2500 further comprises a step of transmitting a message indicating an initiation of a measurement or a resource status.

In an example, the measurement or the resource status is the ratio of frequency resources used in the cell.

In an example, the first node is a base station, a gNB, a gNB distributed unit (gNB-DU).

In an example, the second node is a base station, a gNB, a gNB control unit (gNB-CU).

In an example, the request is an F1AP or an XnAP message.

In an example, the response is an F1AP or an XnAP message.

In an example, the third node is a base station, a gNB, a gNB control unit (gNB-CU), an operational and maintenance (ONM) node, or a core network node.

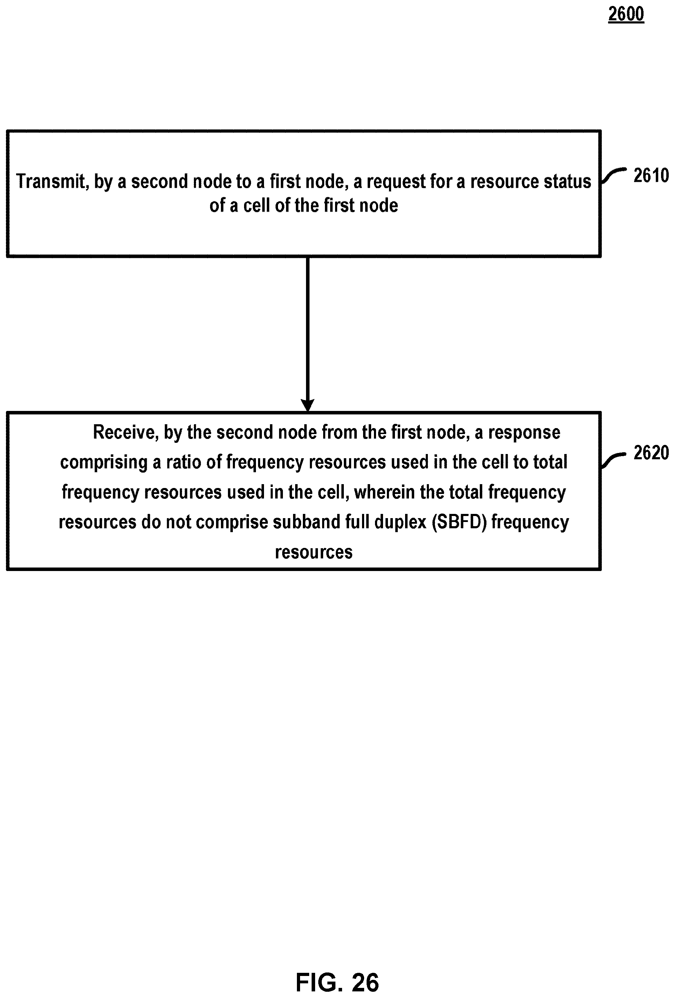

FIG. 26 illustrates an example as per an aspect of an embodiment of the present disclosure. The features illustrated in FIG. 26 may be combined with the features previously discussed with reference to FIG. 25.

Referring to FIG. 26, process 2600 comprises a step 2610 of transmitting, by a second node to a first node, a request for a resource status of a cell of the first node. Process 2600 further comprises a step 2620 of receiving, by the second node from the first node, a response comprising a ratio of frequency resources used in the cell to total frequency resources used in the cell, wherein the total frequency resources do not comprise subband full duplex (SBFD) frequency resources.

Additional aspects, with examples, of step 2610, step 2620, and process 2600 are discussed below. Each of the additional aspects, and examples, below may be considered an embodiment. Each aspect of the embodiments may be combined with, or substituted for, the aspects of the embodiment of process 2600 illustrated in FIG. 26, such as step 2610 and/or step 2620. Furthermore, each of the additional aspects and examples below may be combined with each other.

In an example, the ratio of frequency resources used in the cell is a percentage of frequency resources used in the cell from among total frequency resources used in the cell, wherein the total frequency resources do not comprise SBFD frequency resources.

In an example, the cell operates in subband full duplex (SBFD).

In an example, frequency resources comprise physical resource blocks, virtual resource blocks, control channel elements, resource elements, subcarriers, or tones.

In an example, the ratio of frequency resources used in the cell comprises at least one of: a ratio of frequency resources used in the cell to total frequency resources of the cell during a time period; a ratio of frequency resources used in the cell for a guaranteed bit rate (GBR) to total frequency resources of the cell during a time period; a ratio of frequency resources used in the cell for a non-guaranteed bit rate (non-GBR) to total frequency resources of the cell during a time period; a ratio of frequency resources used in a Synchronization/Physical Broadcast Channel (PBCH) block (SSB) area of the cell to total frequency resources of the cell during a time period; a ratio of frequency resources used for a GBR in an SSB area of the cell to total frequency resources of the cell during a time period; a ratio of frequency resources used for a non-GBR in an SSB area of the cell to total frequency resources of the cell during a time period; a ratio of frequency resources used for a slice of the cell to total frequency resources of the cell during a time period; a ratio of frequency resources used for a GBR in a slice of the cell to total frequency resources of the cell during a time period; a ratio of frequency resources used for a non-GBR in a slice of the cell to total frequency resources of the cell during a time period; a ratio of frequency resources used in the cell for a multiple input and multiple output (MIMO) to total frequency resources of the cell during a time period; a ratio of frequency resources used for a GBR for a MIMO in the cell to total frequency resources of the cell during a time period; or a ratio of frequency resources used for a non-GBR for a MIMO in the cell to total frequency resources of the cell during a time period.

In an example, the percentage of frequency resources used in the cell comprises at least one of: a percentage of frequency resources used in the cell from among total frequency resources of the cell during a time period; a percentage of frequency resources used for a guaranteed bit rate (GBR) in the cell from among total frequency resources of the cell during a time period; a percentage of frequency resources used for a non-guaranteed bit rate (non-GBR) in the cell from among total frequency resources of the cell during a time period; a percentage of frequency resources used in a Synchronization/Physical Broadcast Channel (PBCH) block (SSB) area of the cell from among total frequency resources of the cell during a time period; a percentage of frequency resources used for a GBR in an SSB area of the cell from among total frequency resources of the cell during a time period; a percentage of frequency resources used for a non-GBR in an SSB area of the cell from among total frequency resources of the cell during a time period; a percentage of frequency resources used in a slice of the cell from among total frequency resources of the cell during a time period; a percentage of frequency resources used in a slice for a GBR in the cell from among total frequency resources of the cell during a time period; a percentage of frequency resources used in a slice for a non-GBR in the cell from among total frequency resources of the cell during a time period; a percentage of frequency resources used for a multiple input and multiple output (MIMO) in the cell from among total frequency resources of the cell during a time period; a percentage of frequency resources used for a GBR for a MIMO in the cell and from among total frequency resources of the cell during a time period; or a percentage of frequency resources used for a non-GBR for a MIMO in the cell from among total frequency resources of the cell during a time period.

Process 2600 further comprises a step of transmitting an indication indicating the time period.

In an example, the time period is pre-determined.

In an example, the time period is a periodicity of transmitting the response indicating the ratio of frequency resources used in the cell.

In an example, the time period is a periodicity of transmitting the response indicating the percentage of frequency resources used in the cell.

In an example, the ratio of frequency resources used in the cell are comprised in an uplink symbol and/or a downlink symbol.

In an example, the percentage of frequency resources used in the cell are comprised in an uplink symbol and/or a downlink symbol.

In an example, the SBFD frequency resources are comprised in an SBFD time resource.

In an example, the SBFD time resource includes a downlink subband and an uplink subband in a frequency domain, and wherein the downlink subband and the uplink subband are comprised within a bandwidth of a carrier frequency.

In an example, in the SBFD time resource, the cell may simultaneously transmit a downlink signal in the downlink subband and receive an uplink signal in the uplink subband.

In an example, the SBFD comprises at least one uplink subband and at least one downlink subband in a SBFD time resource.

In an example, the total frequency resources are comprised in a downlink time resource and/or in an uplink time resource.

In an example, the total frequency resources are comprised in a downlink time resource, an uplink time resource, and/or a flexible time resource.

In an example, the uplink time resource is associated with a full duplex - frequency division duplexing (FD-FDD), a time division duplexing (TDD), or a half-duplex - frequency division duplexing (HD-FDD) operation.

In an example, the SBFD time resource comprises a SBFD symbol, a SBFD slot, a SBFD sub-slot, a SBFD mini-slot, a SBFD subframe, a SBFD half frame, or a SBFD frame.

In an example, the downlink time resource comprises a downlink symbol, a downlink slot, a downlink sub-slot, a downlink mini-slot, a downlink subframe, a downlink half frame, or a downlink frame.

In an example, the uplink time resource comprises an uplink symbol, an uplink slot, an uplink sub-slot, an uplink mini-slot, an uplink subframe, an uplink half frame, or an uplink frame.

Process 2600 further comprises a step of determining whether the cell supports SBFD. In response to determining that the cell supports SBFD, Process 2600 further comprises a step of transmitting the response comprising the ratio of frequency resources used in the cell.

Process 2600 further comprises a step of receiving a message indicating an initiation of a measurement or a resource status.

In an example, the measurement or the resource status is the ratio of frequency resources used in the cell.

In an example, the first node is a base station, a gNB, a gNB distributed unit (gNB-DU).

In an example, the second node is a base station, a gNB, a gNB control unit (gNB-CU).

In an example, the request is an F1AP or an XnAP message.

In an example, the response is an F1AP or an XnAP message.

Process 2600 further comprises a step of transmitting a message comprising the ratio of frequency resources used in the cell to a third node.

In an example, the third node is a base station, a gNB, a gNB control unit (gNB-CU), an operational and maintenance (ONM) node, or a core network node.

Process 2400 further comprises a step of performing based on the ratio of frequency resources used in the cell at least one of: an admission control of a wireless device;
a cell change of a wireless device; a load balancing in one or more cells; a configuration, a reconfiguration, or an update of one or more parameters of one or more cells; or an interference mitigation.

In an example, the one or more parameters of the one or more cells comprises at least one of: a transmission power; a number of transmit antennas; a number of received antennas; a number of transmit beams; a number of receive beams; a number of downlink subbands; a number of uplink subbands; a bandwidth of a cell; a bandwidth of a downlink subband; or a bandwidth of an uplink subband.

## Claims

1. A method comprising:
receiving, by a first node from a second node, a request for a resource status of a cell of the first node, wherein the cell operates in subband full duplex (SBFD);
determining a ratio or percentage of SBFD frequency resources used in the cell with respect to total frequency resources of the cell; and
transmitting, by the first node to the second node, a response comprising the ratio or percentage of the SBFD frequency resources used in the cell.

2. The method of claim 1, wherein the ratio or percentage of the SBFD frequency resources used in the cell comprises at least one of:
a ratio or percentage of SBFD frequency resources used in the cell to total frequency resources of the cell during a time period;
a ratio or percentage of SBFD frequency resources used in the cell for a guaranteed bit rate (GBR) to total frequency resources of the cell during a time period;
a ratio or percentage of SBFD frequency resources used in the cell for a non-guaranteed bit rate (non-GBR) to total frequency resources of the cell during a time period;
a ratio or percentage of SBFD frequency resources used in a Synchronization/Physical Broadcast Channel (PBCH) block (SSB) area of the cell to total frequency resources of the cell during a time period;
a ratio or percentage of SBFD frequency resources used for a GBR in an SSB area of the cell to total frequency resources of the cell during a time period;
a ratio or percentage of SBFD frequency resources used for a non-GBR in an SSB area of the cell to total frequency resources of the cell during a time period;
a ratio or percentage of SBFD frequency resources used for a slice of the cell to total frequency resources of the cell during a time period;
a ratio or percentage of SBFD frequency resources used for a GBR in a slice of the cell to total frequency resources of the cell during a time period;
a ratio or percentage of SBFD frequency resources used for a non-GBR in a slice of the cell to total frequency resources of the cell during a time period;
a ratio or percentage of SBFD frequency resources used in the cell for a multiple input and multiple output (MIMO) to total frequency resources of the cell during a time period;
a ratio or percentage of SBFD frequency resources used for a GBR for a MIMO in the cell to total frequency resources of the cell during a time period; or
a ratio or percentage of SBFD frequency resources used for a non-GBR for a MIMO in the cell to total frequency resources of the cell during a time period.

3. The method of any of claims 1-2, wherein:
the ratio or percentage of the SBFD frequency resources used in the cell is a ratio or percentage of SBFD frequency resources used in the cell to total frequency resources of the cell during a time period; and
the time period is a periodicity of transmitting the response indicating the ratio or percentage of the SBFD frequency resources used in the cell.

4. The method of claim 3, wherein the SBFD frequency resources used in the cell during the time period are comprised in:
an uplink subband;
a downlink subband;
an uplink subband and a downlink subband; or
an SBFD time resource

5. The method of claim 4, wherein:
the SBFD frequency resources used in the cell during the time period are comprised in the SBFD time resource; and
in the SBFD time resource:
a downlink signal is configured to be transmitted in a downlink subband;
an uplink signal is configured to be received in an uplink subband; and
the downlink subband and the uplink subband are comprised within a bandwidth of a carrier frequency of the cell.

6. The method of any of claims 1-5, wherein the total frequency resources are comprised in a downlink time resource, an uplink time resource, and/or an SBFD time resource.

7. The method of any one of claims 1-6, wherein:
the first node is a base station, a gNB, or a gNB distributed unit (gNB-DU);
the second node is a base station, a gNB, or a gNB control unit (gNB-CU);
the request is an F1AP or an XnAP message; and
the response is an F1AP or an XnAP message.

8. A method comprising:
transmitting, by a second node to the first node, a request for a resource status of a cell of the first node, wherein the cell operates in subband full duplex (SBFD); and
receiving, by the second node from the first node, a response comprising a ratio or percentage of the SBFD frequency resources used in the cell with respect to total frequency resources of the cell.

9. The method of claim 8, wherein the ratio or percentage of the SBFD frequency resources used in the cell comprises at least one of:
a ratio or percentage of SBFD frequency resources used in the cell to total frequency resources of the cell during a time period;
a ratio or percentage of SBFD frequency resources used in the cell for a guaranteed bit rate (GBR) to total frequency resources of the cell during a time period;
a ratio or percentage of SBFD frequency resources used in the cell for a non-guaranteed bit rate (non-GBR) to total frequency resources of the cell during a time period;
a ratio or percentage of SBFD frequency resources used in a Synchronization/Physical Broadcast Channel (PBCH) block (SSB) area of the cell to total frequency resources of the cell during a time period;
a ratio or percentage of SBFD frequency resources used for a GBR in an SSB area of the cell to total frequency resources of the cell during a time period;
a ratio or percentage of SBFD frequency resources used for a non-GBR in an SSB area of the cell to total frequency resources of the cell during a time period;
a ratio or percentage of SBFD frequency resources used for a slice of the cell to total frequency resources of the cell during a time period;
a ratio or percentage of SBFD frequency resources used for a GBR in a slice of the cell to total frequency resources of the cell during a time period;
a ratio or percentage of SBFD frequency resources used for a non-GBR in a slice of the cell to total frequency resources of the cell during a time period;
a ratio or percentage of SBFD frequency resources used in the cell for a multiple input and multiple output (MIMO) to total frequency resources of the cell during a time period;
a ratio or percentage of SBFD frequency resources used for a GBR for a MIMO in the cell to total frequency resources of the cell during a time period; or
a ratio or percentage of SBFD frequency resources used for a non-GBR for a MIMO in the cell to total frequency resources of the cell during a time period.

10. The method of any of claims 8-9, wherein:
the ratio or percentage of the SBFD frequency resources used in the cell is a ratio or percentage of SBFD frequency resources used in the cell to total frequency resources of the cell during a time period; and
the time period is a periodicity of transmitting the response indicating the ratio or percentage of the SBFD frequency resources used in the cell.

11. The method of claim 10, wherein the SBFD frequency resources used in the cell during the time period are comprised in:
an uplink subband;
a downlink subband;
an uplink subband and a downlink subband; or
an SBFD time resource

12. The method of claim 11, wherein:
the SBFD frequency resources used in the cell during the time period are comprised in the SBFD time resource; and
in the SBFD time resource:
a downlink signal is configured to be transmitted in a downlink subband;
an uplink signal is configured to be received in an uplink subband; and
the downlink subband and the uplink subband are comprised within a bandwidth of a carrier frequency of the cell.

13. The method of any one of claims 8-13, wherein:
the first node is a base station, a gNB, or a gNB distributed unit (gNB-DU);
the second node is a base station, a gNB, or a gNB control unit (gNB-CU);
the request is an F1AP or an XnAP message; and
the response is an F1AP or an XnAP message.

14. An apparatus comprising:
one or more processors; and
memory storing instructions that, when executed by the one or more processors, cause the apparatus to perform the method of any one of claims 1-13.

15. A non-transitory computer-readable medium comprising instructions that, when executed by one or more processors of an apparatus, cause the apparatus to perform the method of any one of claims 1-13.
